# EUROPEAN PATENT APPLICATION

(11) **EP 4 236 016 A1**
(43) Date of publication of application: **30.08.2023**
(21) Application number: 23158582.9
(22) Date of filing: 24.02.2023
(51) Int. Cl.: H02J 7/00

(54) **ELECTRIC POWER SUPPLY DEVICE AND RELATED CONTROL METHOD**

(30) Priority: 25.02.2022 IT 202200003656
(71) Applicant: Stiga S.p.A. in breve anche St. S.p.A., 31033 Castelfranco Veneto (TV) (IT)
(72) Inventor: BONOLLO, Federico, 36042 Breganze (VI) (IT); TOLOTTO, Daniele, 31040 Chiarano (TV) (IT); MARTONE, Dario, 35138 Padova (PD) (IT); VILLANOVA, Marco, 31020 Sernaglia della Battaglia (TV) (IT)
(74) Representative: PGA S.p.A.

(57) **Abstract**

The present invention relates to a device (500) for powering and/or storing energy, configured to be transportable and to electrically power at least one power user (101, 102). The device (500) comprises a casing (501) configured to contain a plurality of batteries (B1 - B4) in at least one predefined position, a charging arrangement intended to allow a charging of the plurality of batteries (B1- B4), and a control unit (10) configured to control the charging of the plurality of batteries (B1 - B4) and to control the supply of electrical energy to the power user (101, 102). The present invention further relates to a method for controlling the power supply of at least one power user. The method comprises a step of supplying at least one power user (101, 102) by means of a device (500) provided with a plurality of batteries (B1 - B4) installed in a modular manner, a step of controlling the delivery of electrical energy from the device (500), in particular from the plurality of batteries (B1 - B4), to the power user (101, 102) and a step of controlling the charging of the plurality of batteries (B1 - B4).

## Description

### Technical field

The present disclosure relates to the field of electronics, and in particular relates to a power supply device.

The present disclosure in detail relates to a control method of the power supply of at least one power user.

### Background art

Attempts have been made over the years to supply certain tools or vehicles for various applications with batteries, in particular for agriculture or gardening. In addition, large tools, or even small vehicles (especially lawnmowers) for agricultural or gardening applications with electrical power supply have recently become widespread. In the early days, the poor of effectiveness of such tools or vehicles was observed, mainly due to the reduced charging capacity possessed by the batteries of the past. In fact, before the advent of batteries with Ni-Mh or Lithium technology, lead-acid or zinc-carbon batteries were used, whose efficiency was poor and/or whose size was very large in relation to capacity.

Consequently, such tools or vehicles often discharged early, and a large amount of batteries had to be replaced. However, in the past years, the batteries were often not rechargeable or easily and quickly lost the ability to be recharged to the original (or nominal) charge value. Therefore, with the passage of time, the overall efficiency given by the use of batteries degraded little by little until reaching a level where the use of such tools or vehicles became almost inconvenient with respect to the use of alternatives to endothermic engines or manual operation. In fact, the life of the batteries and their charging capacity were both too limited for battery power to be a practical alternative to powering accessories requiring significant power with endothermic motors.

The diffusion of power tools and/or batteries has taken place on products destined for the so-called consumer segment of the market and in the so-called "prosumer" and professional segment. Such tools or vehicles require significant electrical power for their operation or charging. The Applicant has observed that often the manufacturers which produce tools and/or small vehicles with electrical power supply, in particular but not limitedly for gardening or agriculture, have different types of tools and vehicles in their catalogue, and for the same type, they have different versions of the same tool in their catalogue characterized by increasing powers and/or sizes.

The batteries are often not directly produced by the manufacturers which produce tools or vehicles for gardening or agriculture; in fact, such batteries are typically purchased from third parties.

These same manufacturers have several accessories in the catalogue with mains power supply, provided with the classic power cord that must be connected to a wall socket or a mobile socket to allow the accessory to be powered.

The use of different batteries for different applications is in principle inconvenient. Although it is unthinkable, especially where the manufacturer has tools and/or vehicles for gardening or agriculture in its catalogue characterized by significantly different powers, to have a single type of battery, in principle it would be preferably for the manufacturer to have a number of different batteries kept as small as possible, and to have the possibility to adapt the number of batteries to be used in accordance with the specific type or version of tool.

The batteries are recharged with chargers which are often dedicated to a certain type of application. The chargers work by supplying a certain direct current, which is a function of the type and/or the capacity (Ah) of the battery to be charged. Although very powerful chargers, in terms of the current which can be supplied, can be able to charge even small capacity batteries, it is true that high capacity batteries can not be recharged by low power chargers. In principle, and in accordance with what happens occurs for batteries, it would be preferable for the manufacturer to have the least number of different types of chargers.

Since various accessories or tools, electric or rechargeable, are often outside the convenient range of a power outlet necessary to power them or to charge the batteries thereof, there is a need to have a transportable source of energy.

What are called "power bank" devices are known, which are small batteries intended to charge small tools, typically through DC and low-voltage ports.

Motor generators are known, which have the drawback of the emission of exhaust gases during their operation. Motor generators cannot be used indoors, unless adequate ventilation or exhaust of the gases generated in use is provided. Furthermore, motor generators are noisy, and this places a limit on their use in quiet environments or during public holidays or at night.

The need encountered by the Applicant is to have a power supply device for power tools of significant power, which can provide the latter with sufficient electrical power and solve the drawbacks of the aforementioned devices.

### Objects

An object of the present disclosure is to describe a power supply device and a corresponding method which allows to power electric tools and/or electric vehicles, or electric charging, in a convenient and safe manner.

In particular, it is an object of the present disclosure to describe a power supply device and a corresponding method which allow to optimize the charging and discharging process of batteries present on board the power supply device itself.

In particular, it is an object of the present disclosure to describe a power supply device and a corresponding method which allow a rapid replacement of the batteries contained therein, so that it is possible to extend the duration of the power supply provided and/or so that it is possible to provide a rapid replacement of the batteries in the event of failure.

It is further an object of the present disclosure to describe a power supply device and a corresponding method which allow to reduce, as far as possible, the number of different types of batteries which must be produced in order to be able to supply power to a given variety of tools and/or vehicles, in particular - but not limitedly - for gardening or agriculture.

It is further an object of the present disclosure to describe a power supply device and a corresponding method which allow to reduce, as far as possible, the number of different types of chargers to be produced for a certain variety of tools and/or vehicles, in particular for gardening or agriculture.

It is further an object of the present disclosure to describe a power supply device and a corresponding power supply method such that, in use, no exhaust gas is produced and/or no substantial noise is produced.

It is further an object of the present disclosure to describe a power supply device and a corresponding method which allow a safe activation of at least one power output on which a considerable amount of electrical power is provided.

It is further an object of the present invention to describe a power supply device and a corresponding method which allow to keep the power needed for charging the batteries limited, and which allow to reduce, as far as possible, the electronic intelligence needed on a battery charger.

It is further an object of the present invention to describe a power supply device and a corresponding method which allow, with respect to the solutions known in the state of the art, advantages in terms of useful life of the batteries.

It is further an object of the present disclosure to describe a power supply device and a corresponding method which allow an increase in the thermal efficiency of the electrical power supply by means of the batteries, limiting the possible energy dissipations.

It is further an object of the present disclosure to describe a power supply device and a corresponding method which allow the implementation of diagnostic functions about the state of the batteries, it being possible to execute a continuous monitoring of voltage and current during the charging and discharging steps.

It is further an object of the present disclosure to describe a power supply device and a corresponding method which allow some batteries to be used not only within the power supply device, and therefore for the indirect power supply of one or more devices, but also for the direct power supply of a battery-powered device, reaching a high operational flexibility.

These and other objects will be described in more detail with reference to the device and to the method in the following summary.

### Summary

The salient features of the present disclosure are described herein in some aspects. Such aspects can be combined with each other, with portions of the detailed description and/or with one or more of the claims.

According to the present disclosure, a device (500) is disclosed for powering and/or storing energy, said device (500) being configured to be transportable and to electrically power at least one power user (101, 102), said device (500) comprising:
- a casing (501) configured to contain a plurality of batteries (B1 - B4) in at least one predefined position,
- a charging arrangement intended to allow a charging of said plurality of batteries (B1 - B4), said charging arrangement comprising in particular at least one charging socket (502) configured to be connected to a power supply mains or comprising in particular at least one energy generator,
- a control unit (10) configured to control the charging of said plurality of batteries (B1 - B4) and specifically to control the power supply of electrical energy to said at least one power user (101, 102).

According to a further non-limiting aspect, the device (500) further comprises a plurality of batteries (B1 - B4), said batteries (B1 - B4) being installed in a modular manner in said device (500) or being arranged to be installed in a modular manner in said device (500), said batteries (B1 - B4) being configured to be extracted from said device (500) and being further configured to be connected to said at least one power user (101, 102), so as to electrically power said at least one power user (101, 102).

According to a further non-limiting aspect, the control unit (10) comprises a charging operating configuration and/or a power supply operating configuration, in which, in said charging operating configuration, said control unit (10):
- selects a first part (B1) of said plurality of batteries (B1-B4),
- causes a selective charging, by a power supply (30) of said first part (B1) of said plurality of batteries (B1-B4),
- selects a further part (B2, B3, B4) of said plurality of batteries (B1-B4) and
- causes a selective charging, by a power supply (30) of said further part (B2, B3, B4) of said plurality of batteries (B1-B4).
in which, in said power supply operating configuration, the control unit (10) causes a power supply of the at least one power user (101, 102), determining, in use, a transfer of electrical energy to said at least one power user (101, 102) simultaneously occurring from said first part (B1) of said plurality of batteries (B1-B4) and from said further part (B2, B3, B4) of said plurality of batteries (B1-B4).

According to a further non-limiting aspect, the control unit (10) causes a power supply of the at least one power user (101, 102), determining, in use, a transfer of electrical energy to said at least one power user (101, 102) simultaneously occurring from each battery of said plurality of batteries (B1-B4).

According to a further non-limiting aspect, the device (500) comprises at least one power output (503), operatively connected, in use, to the plurality of batteries (B1-B4) through said control unit (10), in which the control unit (10) is configured to control the supply of electrical energy to said at least one power user (101, 102) through said power output (503).

According to a further non-limiting aspect, the device (500) comprises at least one service power user (510), substantially housed in said casing (501) or integrated or connected to said casing (501), in which the control unit (10) is configured to control the supply of electrical energy to said at least one service power user (510).

According to a further non-limiting aspect, the device (500) comprises an inverter, operatively connected to said plurality of batteries (B1 - B4), optionally by means of said control unit (10), and connected with said at least one power output (503), said inverter being configured to generate, in use, on said at least one power output (503) an alternating electrical voltage starting from the direct electrical voltage generated by the plurality of batteries (B1-B4).

According to a further non-limiting aspect, the control unit (10) is configured and specifically intended to cause a selection and/or a limitation, in particular an electronic selection and/or limitation, of a maximum electrical power deliverable by each battery of the plurality of batteries (B1-B4).

According to a further non-limiting aspect, the plurality of batteries (B1 - B4) is removable and/or insertable from said casing (501), optionally the plurality of batteries (B1-B4) being configured to be extracted and/or inserted "hot", and/or in which the control unit (10) is configured and specifically intended to allow the extraction and/or insertion of at least one battery of said plurality of batteries (B1-B4) "hot" and/or during at least the power supply and/or a charging, without causing a power interruption of said at least one power user (101, 102) and/or without causing an interruption of a charging of the remaining batteries of the plurality of batteries (B1-B4).

According to a further non-limiting aspect, the at least one power user (101, 102) comprises a primary power user (101) and a secondary power user (102) and/or in which the service power user (510) identifies a primary power user and a secondary power user and in which the control unit (10) is configured for:
- executing an electronic control of at least one value among an electrical power, charge, voltage or current, made available by at least one battery of said plurality of batteries (B1 - B4) and/or an electronic control of a number n of batteries (B1 - B4) installed on said device (500),
- electronically enabling, and optionally automatically, in accordance with said at least one value among an electrical power, charge, voltage or current and/or in accordance with said number n of batteries (B1 - B4):
- the electrical power supply of only the primary power user (102); or
- the electrical power supply of the primary power user (102) and the secondary power user (101).

According to a further non-limiting aspect, the device (500) comprises a wireless interface module (521), preferably a radio module, configured to operatively interface with a remote electronic device and to receive and/or transmit, respectively from and/or to said remote electronic device, diagnostic and/or statistical and/or usage and/or control and/or alarm data associated with the operation of the device (500), in particular of the control unit (10), and/or of one or more of the batteries of the plurality of batteries (B1 - B4).

According to a further non-limiting aspect, said wireless interface module (521) is configured to receive and/or transmit said data in selective mode, respectively to and from a selected number of remote electronic devices and/or to one or more predefined remote electronic devices.

According to a further non-limiting aspect, the device (500) comprises at least one environmental sensor among a temperature sensor, a humidity sensor, a solar light or radiation sensor, a barometric pressure sensor, a rain sensor, said at least one environmental sensor being configured and specifically intended to allow one or more environmental parameters to be detected near said device (500).

According to a further non-limiting aspect, said at least one environmental sensor is operatively connected with the wireless interface module (521), the use and/or control and/or alarm data comprising:
- temperature and/or humidity and/or brightness and/or barometric pressure data obtained from said at least one environmental sensor and/or
- at least one datum of power, energy, residual charge, voltage, current absorbed by one or more of the batteries of the plurality of batteries (B1 - B4) in said charging operating configuration or in said power supply operating configuration of said device (500) and/or
- at least one datum of power, energy, residual charge, voltage, current absorbed by one or more of the power users (101, 102) in said charging operating configuration or in said power supply operating configuration of said device (500) and/or
- at least one temperature datum of one or more of the batteries of the plurality of batteries (B1 - B4) and/or
- at least one exclusion datum and/or datum related to the lack of one or more of the batteries of the plurality of batteries (B1 - B4).

According to a further non-limiting aspect, at least one battery of said plurality of batteries (B1 - B4) comprises at least one supply switch (44), preferably of solid-state type, optionally in which each battery of the plurality of batteries (B1 - B4) comprises a respective supply switch (44), preferably of solid-state type, and a control input (15) operatively connected to said supply switch (44) and externally connected to a control line (14) of the control unit (10), said supply switch (44) comprising an open configuration in which it prevents the charging of one or more cells (43) of the respective battery and a closed configuration in which it enables the charging of one or more cells (43) of the respective battery.

According to a further non-limiting aspect, each battery of said plurality of batteries (B1-B4) comprises a containment casing adapted to be transported and/or stored and/or handled by a user, at least one cell (43) positioned within said containment casing, the supply switch (44) being positioned within said containment casing, in which each battery of said plurality of batteries (B1-B4) comprises a connector, accessible at an exposed portion of said containment casing and configured to be removably connected with a counter-connector arranged within the casing (501) of the device (500).

According to a further non-limiting aspect, the device (500) is configured to, simultaneously, charge a first battery (B1) or a first group of said plurality of batteries (B1 - B4) and power said at least one power user (101, 102) by means of a second battery (B2) or by means of a second group of said plurality of batteries (B1 - B4), said first battery (B1) being in particular distinct from said second battery, said first group of said plurality of batteries (B1 - B4) being distinct from said second group of said plurality of batteries (B1 - B4), in which the charging of said first battery (B1) or said first group of said plurality of batteries (B1 - B4) is actuated by means of a power supply (30) installed within said casing (501).

According to a further non-limiting aspect, said power supply (30) is configured to receive, in use, electrical power supply from an electrical energy distribution network.

According to a further non-limiting aspect, said device (500) further comprises at least one energy generator, said energy generator comprising in particular at least one photovoltaic cell panel (520), and said power supply (30) is configured to receive in use electrical power from said energy generator, in particular from said photovoltaic cell panel (520).

In accordance with the present disclosure, a control method of the power supply of at least one power user is disclosed, the method comprising:
- a step of supplying at least one power user (101, 102) with a device (500) for supplying and/or storing energy, preferably a device (500) according to one or more of the preceding claims, provided with a plurality of batteries (B1 - B4) modularly installed in said device and configured to be operatively transported,
- a step of controlling the supply of electrical energy from said device (500), in particular from said plurality of batteries (B1 - B4), to said at least one power user (101, 102), said control step occurring by means of a control unit (10) of the device (500) and
- a control step of the charging of the plurality of batteries (B1 - B4) by means of said control unit (10).

According to a further non-limiting aspect, said method comprises:
- a selection step, a first part (B1) of said plurality of batteries (B1-B4) being selected in said selection step;
- a charging step, said first part (B1) of said plurality of batteries (B1-B4) being selectively charged in said charging step;
- at least one further selection step, a further part (B2, B3, B4) of said plurality of batteries (B1-B4) being selected in said further selection step;
- at least one further charging step, said further part (B2, B3, B4) of said plurality of batteries (B1-B4) being selectively charged in said further charging.

According to a further non-limiting aspect, in the power supply step, said at least one power user (101, 102) is powered by a transfer of electrical energy to said at least one power user (101, 102) simultaneously occurring from said first part (B1) of said plurality of batteries (B1-B4) and from said further part (B2, B3, B4) of said plurality of batteries (B1-B4).

According to a further non-limiting aspect, the step of controlling the electrical energy supplied to said at least one power user (101, 102) by means of the control unit (10) of said device (500) occurs by controlling the electrical energy supply delivered by said device (500) on at least one of its power outputs (503).

According to a further non-limiting aspect, said method comprises a step of controlling the electrical energy supplied to at least one service power user (510) of said device (500) by means of the control unit (10).

According to a further non-limiting aspect, said method comprises activating an inverter of said device (500) and operatively connected to said plurality of batteries (B1 - B4), optionally by means of said control unit (10) and connected to said at least one power output (503); activating said inverter determining, in use, a generation of an alternating electric voltage starting from the direct electric voltage generated by the plurality of batteries (B1 - B4).

According to a further non-limiting aspect, said method comprises a step of selecting and/or limiting a maximum electrical power deliverable by each battery of the plurality of batteries (B1-B4), said selecting and/or limiting being an electronic selection and/or limitation, respectively.

According to a further non-limiting aspect, the plurality of batteries (B1-B4) is configured to be removed or inserted "hot".

According to a further non-limiting aspect, the method comprises enabling a removal or insertion of at least one battery of said plurality of batteries (B1-B4) "hot" and/or during at least the supply and/or charging, without causing a power supply interruption of said at least one power user (101, 102) and/or without causing a charging interruption of the remaining batteries of the plurality of batteries (B1-B4).

According to a further non-limiting aspect, the at least one power user (101, 102) comprises a primary power user (101) and a secondary power user (102), and/or in which the service power user (510) identifies a primary power user or a secondary power user, and in which the method comprises a step of enabling a power supply of the at least one primary power user (102), or an actuation of the primary power user (102) and the secondary power user (101), in which:
- in the enabling step, an electronic control of at least one value among an electrical power, charge, voltage or current made available by the at least one battery connected to said power supply circuit is executed and/or an electronic control of a number n of batteries (B1-B4) installed on board said device (500) is executed and,
- in accordance with said at least one value among an electrical power, charge, voltage or current and/or in accordance with said number n of batteries (B1-B4), is electronically enabled, and optionally automatically:
- the electrical power supply, by means of said power supply circuit, of only the primary power user (102) or
- the electrical power supply, by means of said power supply circuit, of the primary power user (102) and the secondary power user (101).

According to the present disclosure, a device (500) is disclosed for powering and/or storing energy, said device (500) being configured to be transportable and to electrically power at least one power user (101, 102), said device (500) comprising:
- a casing (501) configured to contain at least one battery (B1), preferably a plurality of batteries (B1 - B4), in at least one predefined position at at least one compartment (509),
- a charging arrangement intended to allow a charging of said at least one battery (B1), preferably of said plurality of batteries (B1 - B4), said charging arrangement comprising in particular at least one charging socket (502) configured to be connected to a power supply mains or comprising in particular at least one energy generator,
- a service power user (510), configured to be powered by said at least one battery (B1), preferably by at least part of the plurality of batteries (B1-B4), and further configured to provide at least a driving force and/or an electrical energy to at least one accessory (512, 513, 514) removably connectable to said device (500) in particular at said casing (501), said service power user (510) comprising in particular an electric machine, preferably an electric motor,
- a connector, arranged substantially at said service power user (510), configured to retain at least part of said at least one accessory (512, 513, 514), and to release said at least one accessory (512, 513, 514) under user control.

According to a further non-limiting aspect, the device (500) further comprises at least one battery (B1), preferably a plurality of batteries (B1 - B4), said at least one battery (B1) being configured to be extracted from said device (500) and being further configured to be connected to said at least one power user (101, 102), so as to electrically power said at least one power user (101, 102).

According to a further non-limiting aspect, the device (500) further comprises a control unit (10) configured to control the charging of said at least one battery (B1), preferably of said plurality of batteries (B1 - B4), and to control the supply of electrical energy to said at least one power user (101, 102), optionally in which, concurrently with the installation of a plurality of batteries (B1 - B4) in said device (500), said control unit (10) is configured to pilot a sequential charging of said batteries (B1 - B4) and a parallel discharging of said batteries (B1 - B4).

According to a further non-limiting aspect, the service power user (510) comprises a shaft (511) positioned substantially at the connector of said device (500), said shaft (511) being operatively accessible from said at least one accessory (512, 513, 514) and configured to couple with a respective counter-shaft positioned at a connector of said at least one accessory (512, 513, 514), and in which the connector of said device (500) is configured to retain said at least one accessory (512, 513, 514) in a predefined, in particular fixed, position with respect to said casing (501), said electric machine, optionally said electric motor, operating with a direct current provided by said at least one battery (B1), preferably by at least one battery of the plurality of batteries (B1-B4).

According to a further non-limiting aspect, the connector of said device (500) comprises an end profile and is configured to maintain said shaft (511) within said end profile, optionally in a recessed position, and/or in which the connector of said device (500) is configured to retain at least part of said at least one accessory (512, 513, 514) by means of a snap and/or screw and/or bayonet and/or translational, preferably linear, type connection.

According to a further non-limiting aspect, the device (500) comprises at least one handle (506) for the transport or lifting of the device (500), said at least one handle (506) being arranged substantially at said casing (501) or being operatively connected to said casing (501), optionally said handle (506) being slidably or rotatably engaged to said casing (506).

According to a further non-limiting aspect, the device (500) is configured as a trolley or suitcase and comprises towing and/or dragging means and movement and/or sliding means.

According to a further non-limiting aspect, said towing and/or dragging means comprise at least one handle, in particular of the telescopic and/or extensible type.

According to a further non-limiting aspect, said movement and/or sliding means comprise a plurality of rollers and/or wheels and/or balls, namely two to four wheels and/or rollers and/or balls.

According to a further non-limiting aspect, said movement and/or sliding means are applied to a portion of said casing (501) opposite the portion of said casing to which said towing and/or dragging means are applied.

According to a further non-limiting aspect, the casing (501) comprises at least one door (508) configured to allow access to a predefined portion inside the casing (501) itself, said door (508) being configured to allow access to said at least one compartment (509) housing, in use, said at least one battery and preferably said plurality of batteries (B1-B4), said door (508) being movable between an open configuration in which it allows access to said predefined internal portion of the casing (501), preferably to said at least one compartment (509) housing, in use, said at least one battery, and a closed configuration in which it prevents access to said predefined internal portion of the casing (501), said closed configuration of the door (508) determining an insulation of said internal portion of the casing (501), preferably said insulation of at least one compartment (509) housing, in use, said at least one battery, at least from sprays of water and/or dust.

According to a further non-limiting aspect, said door (508) is made of plastic material, preferably by injection moulding or co-moulding.

According to a further non-limiting aspect, said door (508) is at least partially transparent.

According to a further non-limiting aspect, said door (508) comprises a hinging side at which there is a hinge for hinging the door (508) on said casing (501), said hinge identifying a hinging axis, said door (508) being movable between said open configuration and said closed configuration by rotation around said hinging axis, or is configured to allow a translation, optionally a linear translation, between said open configuration and said closed configuration, at least one guide engaging on said casing (501) to determine said translation.

According to a further non-limiting aspect, said at least one compartment (509) is configured to allow an introduction or an operative extraction of said at least one battery (B1) by means of a preferably substantially linear translation, said at least one compartment (509) comprising at least one guide configured to guide the translation of said at least one battery (B1), said at least one compartment (509) comprising a power supply connector, configured to couple with at least one pair of terminals present on said at least one battery (B1) and configured to provide, in use, electrical energy to said at least one service power user (510).

According to a further non-limiting aspect, the device (500) comprises at least one power output (503), operatively connected with said at least one battery (B1), preferably with said plurality of batteries (B1-B4), said power output (503) being configured to provide, in use, an electrical energy to at least one power user (101, 102) removably connectable to the at least one power output (503) thereof, said at least one power output (503) being arranged at an accessible portion of said casing (501).

According to a further non-limiting aspect, the device (500) comprises a wireless interface module (521), preferably a radio module, configured to operatively interface with a remote electronic device and to receive and/or transmit, respectively from and/or to said remote electronic device, usage and/or control and/or alarm data associated with the operation of the device (500) and/or of the at least one battery (B1), preferably of one or more of the batteries of the plurality of batteries (B1 - B4).

According to a further non-limiting aspect, said wireless interface module (521) is configured to receive and/or transmit said data in selective mode, respectively from and/or to a selected number of remote electronic devices and/or to one or more predefined remote electronic devices; said device (500) being specifically configured to receive, by means of said wireless interface module (521), a command to activate and/or deactivate electrical energy supply to said service power user (510).

According to a further non-limiting aspect, the device (500) comprises a charging module, in particular for tools for agriculture or gardening which are self-propelled and/or have at least partially automated control, and/or for electronic devices such as for example smartphones or tablets, said charging module being optionally of wireless type, said charging module being operatively connected to said at least one battery (B1), preferably connected to said plurality of batteries (B1-B4); said charging module being configured to receive, in use, electrical energy from said at least one battery (B1), preferably from said plurality of batteries (B1-B4) and being configured to transfer said electrical energy to a tool or to an electronic device, when in contact with at least one terminal present on said charging module for tools and/or when said tool or said electronic device is located near said charging module.

According to a further non-limiting aspect, the device (500) comprises at least one parallel power input, configured to allow, in use, a modular operating connection of said device (500) with at least one further device for powering and/or storing energy and/or configured to power said service power user (510) and/or said at least one power user (101, 102) with electrical energy from said at least one battery (B1), preferably from said plurality of batteries (B1-B4), and, simultaneously, with electrical energy from at least one battery of said further device (500).

According to a further non-limiting aspect, the device (500) comprises at least one electrochemical device capable of directly converting chemical energy into electrical energy, for example a fuel cell, and/or comprising at least one photovoltaic cell panel (520), said electrochemical device and/or said photovoltaic cell panel (520) being configured to provide electrical energy intended for at least the partial charging of the at least one battery (B1), preferably intended for at least the partial charging of the plurality of batteries (B1-B4), and/or intended for powering the service power user (510) and/or the at least one power output (503),

According to a further non-limiting aspect, said photovoltaic cell panel (520) is arranged substantially at said casing (501) and/or is movably, optionally removably, connectable to said casing (501).

According to a further non-limiting aspect, the device (500) comprises an identification module, configured to receive data of at least one feature of said accessory (512, 513, 514), said identification module being positioned substantially at said service power user (510), said identification module being configured to transmit at least part of said data of said at least one feature of said accessory (512, 513, 514) to a control unit (10) of said device (500), said control unit (10) being configured to electronically detect any malfunctions of said accessory (512, 513, 514) by electronically comparing, optionally substantially in real time, current and/or electrical voltage absorption data from said at least one service power user (510), with said data of at least one feature of said accessory (512, 513, 514).

A kit is also disclosed in accordance with the present disclosure, comprising:
- a device (500) in accordance with one or more of the preceding aspects,
- an accessory (512, 513, 514) configured to be removably coupled to the service power user (510) of said device (500) and configured to receive driving force from said electric machine.

According to a further non-limiting aspect, said accessory (512, 513, 514) comprises a casing and a connector adapted to be removably coupled to the connector of said device (500), said accessory comprising a counter-shaft configured to be, in use, placed in rotation by the shaft (511) of the service power user (510) when the connector of the accessory (512, 513, 514) is connected on said connector of said device (500).

According to a further non-limiting aspect, said accessory (512, 513, 514) comprises at least one of a fan (512), an aspirator (513), a vacuum cleaner (514), a refrigerating machine, a heating device, an actuator configured to drill and/or cut and/or sand and/or bend, and/or lift, and/or to generate electric current, and/or to compress a fluid, a scintillator.

In accordance with the present disclosure, a power supply device (500) is disclosed, configured to be transportable and to electrically power at least one power user (101, 102), comprising:
- a casing (501) configured to contain a plurality of batteries (B1 - B4) in at least one predefined position,
- a plurality of batteries (B1 - B4), modularly installed on the power supply device (500) and configured to be operatively transported, in use intended to supply an electrical power to said one or more power users (101, 102),
- at least one charging socket (502), intended to allow a charging of said plurality of batteries (B1 - B4),
- a control unit (10) connected to said plurality of batteries (B1 - B4) and configured to control the charging of the plurality of batteries (B1 - B4) and to control the supply of electrical energy to said at least one power user (101, 102).

According to a further non-limiting aspect, the control unit (10) comprises:
- a charging operating configuration, wherein said control unit (10):
   - selects a first part (B1) of said plurality of batteries (B1-B4),
   - causes a selective charging, by a power supply (30) of said first part (B1) of said plurality of batteries (B1-B4),
   - selects a further part (B2, B3, B4) of said plurality of batteries (B1-B4) and
   - causes a selective charging, by a power supply (30) of said further part (B2, B3, B4) of said plurality of batteries (B1-B4);
- a power supply operating configuration, in which the control unit (10) causes a power supply of the at least one power user (101, 102), determining, in use, a transfer of electrical energy to said at least one power user (101, 102) simultaneously occurring from said first part (B1) of said plurality of batteries (B1-B4) and from said further part (B2, B3, B4) of said plurality of batteries (B1-B4),
optionally wherein the control unit (10) causes a power supply of the at least one power user (101, 102), determining, in use, a transfer of electrical energy to said at least one power user (101, 102) simultaneously occurring from each battery of said plurality of batteries (B1-B4).

According to a further non-limiting aspect, the power supply device (500) comprises at least one power output (503), operatively connected, in use, to the plurality of batteries (B1-B4) through said control unit (10), in which the control unit (10) is configured to control the supply of electrical energy to said at least one power user (101, 102) through said power output (503),
and/or comprises at least one service power user (510), substantially integrated or connected to said casing (501), and in which the control unit (10) is configured to control the supply of electrical energy to said at least one service power user (510).

According to a further non-limiting aspect, the power supply device (500) comprises a first power output (503), operatively connected, in use, to the plurality of batteries (B1-B4) through said control unit (10), and a second power output (503), operatively connected, in use, to the plurality of batteries (B1-B4) through said control unit (10), and in which the control unit (10) is configured to control the electrical energy supply to said at least one power user (101, 102) through said first power output (503) and/or to said second power output (503).

According to a further non-limiting aspect, the first power output (503) and the second power output (503) are selectively and/or independently activatable, preferably by means of a control imposed by said control unit (10).

According to a further non-limiting aspect, the power supply device (500) comprises an inverter, operatively connected to said plurality of batteries (B1 - B4), optionally by means of said control unit (10), and connected with said at least one power output (503), said inverter being configured to generate, in use, on said at least one power output (503) an alternating electrical voltage starting from the direct electrical voltage generated by the plurality of batteries (B1-B4).

According to a further non-limiting aspect, said alternating electrical voltage is a substantially sinusoidal voltage, intended to allow the power supply of traditional tools powered with domestic mains voltage.

According to a further non-limiting aspect, the control unit (10) is configured and specifically intended to cause a selection and/or a limitation, in particular an electronic selection and/or limitation, of a maximum electrical power deliverable by each battery of the plurality of batteries (B1-B4).

According to a further non-limiting aspect, the plurality of batteries (B1 - B4) is removable from said casing (501), and optionally the plurality of batteries (B1-B4) is configured to be removed or inserted "hot", and/or the control unit (10) is configured and specifically intended to allow the removal or introduction of at least one battery of said plurality of batteries (B1-B4) "hot" and/or during at least the power supply and/or charging, without causing a power interruption of said at least one power user (101, 102) and/or without causing a power interruption of a charging of the remaining batteries of the plurality of batteries (B1-B4). According to a further non-limiting aspect, the at least one power user (101, 102) comprises a priority power user (101) and a secondary power user (102) and/or in which the service power user (510) identifies is a priority power user or a secondary power user.

According to a further non-limiting aspect, in which the control unit (10) is configured for:
- executing an electronic control of at least one value among an electrical power, charge, voltage or current, made available by at least one battery of said plurality of batteries (B1 - B4) and/or an electronic control of a number n of batteries (B1 - B4) installed on said device (500),
- electronically enabling, and optionally automatically, in accordance with said at least one value among an electrical power, charge, voltage or current and/or in accordance with said number n of batteries (B1 - B4):
   - the electrical power supply of only the priority power user (102); or
   - the electrical power supply of the priority power user (102) and the secondary power user (101).

According to a further non-limiting aspect, the power supply device comprises a wireless interface module (521), preferably a radio module, configured to operatively interface with a remote electronic device and to receive and/or transmit, respectively from and/or to said remote electronic device, usage and/or control and/or alarm data associated with the operation of the power supply device (500), the control unit (10) and/or one or more of the batteries of the plurality of batteries (B1 - B4) and/or of the at least one battery (B1).

According to a further non-limiting aspect, the wireless interface module (521) is configured to receive and/or transmit said data in selective mode, respectively to and from a selected number of remote electronic devices and/or to one or more predefined remote electronic devices.

According to a further non-limiting aspect, the power supply device (500) comprises at least one of the environmental sensors of the following list: a temperature sensor, a humidity sensor, a solar light or radiation sensor, a barometric pressure sensor; said at least one environmental sensor being configured and specifically intended to allow one or more environmental parameters to be detected near the power supply device (500).

According to a further non-limiting aspect, said at least one environmental sensor is operatively connected with the wireless interface module (521); the usage and/or control and/or alarm data comprising temperature and/or humidity and/or brightness and/or barometric pressure data obtained from one or more of the environmental sensors and/or comprising at least one datum among power, energy, residual charge, voltage, current absorbed by one or more of the batteries of the plurality of batteries (B1 - B4), the charging or power supply operating configuration of one or more of the power users (101, 102), temperature of one or more of the batteries of the plurality of batteries (B1 - B4), exclusion and/or lack of one or more of the batteries of the plurality of batteries (B1 - B4).

According to a further non-limiting aspect, said power supply device (500) comprises said plurality of batteries (B1 - B4).

According to a further non-limiting aspect, at least one battery of said plurality of batteries (B1 - B4), optionally each battery of the plurality of batteries (B1 - B4), comprises at least one supply switch (44), preferably of solid-state type, and a control input (15) operatively connected to said supply switch (44) and externally connected to a control line (14) of the control unit (10).

According to a further non-limiting aspect, said supply switch (44) comprises an open configuration in which it prevents the charging of one or more cells (43) of the respective battery and a closed configuration in which it enables the charging of one or more cells (43) of the respective battery.

According to a further non-limiting aspect, the batteries of the plurality of batteries (B1-B4) each comprise a casing adapted to be transported and/or stored and/or handled by a user.

According to a further non-limiting aspect, the batteries of the plurality of batteries (B1-B4) each comprise at least one cell (43) positioned inside said casing.

According to a further non-limiting aspect, the supply switch (44) is positioned inside said casing.

According to a further non-limiting aspect, each battery of the plurality of batteries (B1-B4) comprises a connector, accessible at an end portion of said casing and configured to be removably connected with a counter-connector arranged inside the casing (501) of the power supply device (500).

In accordance with the present disclosure, a control method of the power supply of at least one power user is further disclosed by means of a power supply device (500), the method comprising:
- a power supply step of at least one power user (101, 102) by means of a power supply device (500), preferably a power supply device (500) according to one or more of the aspects described herein, provided with a plurality of batteries (B1 - B4) modularly installed on the power supply device (500) and configured to be operatively transported,
- a control step of the electrical energy supplied to said at least one power user (101, 102) by means of a control unit (10) of the power supply device (500);
- a control step of the charging of the plurality of batteries (B1 - B4) by means of said control unit (10).

According to a further non-limiting aspect, the method comprises:
- a selection step, a first part (B1) of said plurality of batteries (B1-B4) being selected in said selection step;
- a charging step, said first part (B1) of said plurality of batteries (B1-B4) being selectively charged in said charging step;
- at least one further selection step, a further part (B2, B3, B4) of said plurality of batteries (B1-B4) being selected in said further selection step;
- at least one further charging step, said further part (B2, B3, B4) of said plurality of batteries (B1-B4) being selectively charged in said further charging.

According to a further non-limiting aspect, in the power supply step, said at least one power user (101, 102) is powered by a transfer of electrical energy to said at least one power user (101, 102) simultaneously occurring from said first part (B1) of said plurality of batteries (B1-B4) and from said further part (B2, B3, B4) of said plurality of batteries (B1-B4).

According to a further non-limiting aspect, the step of controlling the electrical energy supplied to said at least one power user (101, 102) by means of the control unit (10) of the power supply device (500) occurs by controlling the electrical energy supply delivered by said power supply device (500) on at least one of its power outputs (503).

According to a further non-limiting aspect, said method comprises a step of controlling the electrical energy supplied to at least one service power user (510) of said power supply device (500) by means of the control unit (10).

According to a further non-limiting aspect, the method comprises activating an inverter of said power supply device (500) and operatively connected to said plurality of batteries (B1 - B4), optionally by means of said control unit (10) and connected to said at least one power output (503); activating said inverter determining, in use, a generation of an alternating electric voltage starting from the direct electric voltage generated by the plurality of batteries (B1 - B4).

According to a further non-limiting aspect, the method comprises a step of selecting and/or limiting a maximum electrical power deliverable by each battery of the plurality of batteries (B1-B4), said selecting and/or limiting being an electronic selection and/or limitation, respectively.

According to a further non-limiting aspect, the plurality of batteries (B1-B4) is configured to be removed or inserted "hot," and/or the method comprises enabling a removal or insertion of at least one battery of said plurality of batteries (B1-B4) "hot" and/or during at least the supply and/or charging, without causing a power supply interruption of said at least one power user (101, 102) and/or without causing a charging interruption of the remaining batteries of the plurality of batteries (B1-B4).

According to a further non-limiting aspect, the at least one power user (101, 102) comprises a priority power user (101) and a secondary power user (102) and/or in which the service power user (510) identifies a priority power user or a secondary power user.

According to a further non-limiting aspect, the method comprises a step of enabling a power supply of the at least one priority power user (102), or an actuation of the priority power user (102) and the secondary power user (101), in which
- in the enabling step, an electronic control of at least one value among an electrical power, charge, voltage or current made available by the at least one battery connected to said power supply circuit is executed and/or an electronic control of a number n of batteries (B1-B4) installed on board the power supply device (500) is executed and,
- in accordance with said at least one value among an electrical power, charge, voltage or current and/or in accordance with said number n of batteries (B1-B4), is electronically enabled, and optionally automatically:
   - the electrical power supply, by means of said power supply circuit, of only the priority power user (102); or
   - the electrical power supply, by means of said power supply circuit, of the priority power user (102) and the secondary power user (101).

In accordance with the present disclosure, a power supply device (500) is further disclosed, configured to be transportable and to electrically power at least one power user (101, 102), comprising:
- a casing (501) configured to contain at least one battery (B1), preferably a plurality of batteries (B1 - B4), in at least one predefined position at at least one compartment (509),
- at least one battery (B1) configured to be operatively transported, and preferably a plurality of batteries (B1 - B4), configured to be operatively transported,
- at least one charging socket (502), intended to allow a charging of said plurality of batteries (B1 - B4),
- a service power user (510), configured to be powered by said at least one battery and preferably by at least part of the plurality of batteries (B1-B4), comprising an electric machine, in particular an electric motor, and configured to provide at least one driving force and/or an electrical energy to at least one accessory (512, 513, 514) removably connectable to said power supply device (500) at said casing (501),
- a connector, arranged substantially at said service power user (510), configured to retain at least part of said at least one accessory (512, 513, 514), and to release said at least one accessory (512, 513, 514) under user control.

According to a further non-limiting aspect, said driving force is a mechanical force.

According to a further non-limiting aspect, said at least one accessory (512, 513, 514) is a passive accessory and/or an accessory lacking electrical power components and/or intended for the main application of the accessory itself.

According to a further non-limiting aspect, the service power user (510) is configured to supply electrical energy to said at least one accessory (512, 513, 514).

According to a further non-limiting aspect, the service power user (510) is configured to supply electrical energy to said accessory as an alternative to said driving force)

According to a further non-limiting aspect, the power supply device (500) comprises a control unit (10) connected to said plurality of batteries (B1 - B4) and configured to control the charging of the plurality of batteries (B1 - B4) and to control the supply of electrical energy to said at least one power user (101, 102) and/or to said at least one service power user (510).

According to the present disclosure, a power supply method of an accessory (512, 513, 514) is further disclosed, configured to receive at least a driving force and/or an electrical energy from an electric machine, comprising:
- an electrical power supply step of a service power user (510) of a power supply device (500), preferably according to one or more of the preceding claims, the service power user (510) comprising an electric machine, in particular an electric motor, the power supply phase step aimed at providing at least a driving force and/or an electrical energy to at least one accessory (512, 513, 514) removably connectable to said power supply device (500), the power supply step comprising a connection of said service power user (510) to at least one battery (B1), preferably to a plurality of batteries (B1-B4) contained in a casing (501) of the power supply device (500),
- a removable connection step of said accessory (512, 513, 514) to said service power user (510), the removable connection of said accessory (512, 513, 514) being obtained on a connector of the power supply device (500) arranged substantially at said service power user (510),
- a step of providing said driving force and/or said electrical energy to said accessory (512, 513, 514), in which the step of transmitting said driving force to said accessory (512, 513, 514) comprises transmitting electrical energy from said at least one battery (B1), and preferably from at least one battery of the plurality of batteries (B1-B4), to said electric machine.

According to a further non-limiting aspect, the method comprises:
- a step of controlling the electrical energy supplied to said at least one power user (101, 102) and/or to said at least one service power user (510) by means of a control unit (10) of the power supply device (500);
- a control step of the charging of the plurality of batteries (B1 - B4) by means of said control unit (10).

According to a further non-limiting aspect, the step of providing said driving force determines a rotation of a shaft (511) of the service power user (510), the shaft (511) being positioned substantially at the connector of the power supply device (500), and being operatively accessible from said at least one accessory (512, 513, 514).

According to a further non-limiting aspect, the removable connection step of said accessory (512, 513, 514) to said service power user (510) determining a coupling of the shaft (511) with a respective counter-shaft positioned at a connector of said at least one accessory (512, 513, 514).

According to a further non-limiting aspect, the connector of the power supply device (500) is configured to retain said at least one accessory (512, 513, 514) in a predefined position, in particular fixed, with respect to said casing (501).

According to a further non-limiting aspect, the transmission of electrical energy from said at least one battery (B1), and preferably from at least one battery of the plurality of batteries (B1-B4), to said electric machine comprises a transmission of a direct current from said at least one battery (B1), and preferably from at least one battery of the plurality of batteries (B1-B4), to said electric machine.

According to a further non-limiting aspect, the service power user (510) comprises a shaft (511) positioned substantially at the connector of the power supply device (500), said shaft (511) being operatively accessible by said at least one accessory (512, 513, 514) and configured to couple with a respective counter-shaft positioned at a connector of said at least one accessory (512, 513, 514).

According to a further non-limiting aspect, the connector of the power supply device (500) is configured to retain said at least one accessory (512, 513, 514) in a predefined position, in particular fixed, with respect to said casing (501).

According to a further non-limiting aspect, said electric machine, optionally said electric motor, operates in direct current provided by said at least one battery (B1), and preferably by at least one battery of the plurality of batteries (B1-B4), to said electric machine.

According to a further non-limiting aspect, the step of removably connecting said accessory (512, 513, 514) to said service power user (510) comprises a connection of a connector of said accessory (512, 513, 514) to the connector of the power supply device (500) comprising an end profile and is configured to maintain said shaft (511) within said end profile, optionally in a recessed position.

According to a further non-limiting aspect, the removable connection of said accessory (512, 513, 514) to said service power user (510) comprises a snap and/or screw and/or bayonet-type connection and/or with translation, preferably linear, of a connector of said accessory (512, 513, 514) to the connector of the power supply device (500) which determines the retention of at least part of said at least one accessory (512, 513, 514).

According to a further non-limiting aspect, the connector of the power supply device (500) comprises an end profile and is configured to maintain said shaft (511) within said end profile, optionally in a recessed position, and/or the connector of the power supply device (500) is configured to retain at least part of said at least one accessory (512, 513, 514) by means of a snap and/or screw type connection and/or bayonet and/or with translation, preferably linear.

According to a further non-limiting aspect, the method comprises a step of providing a handle (506) for transport or lifting on the casing (501) of the power supply device (500), the supply occurring substantially at said casing (501) or by means of a substantial connection to said casing (501); optionally said handle (506) being slidably engaged to said casing (506).

According to a further non-limiting aspect, the device comprises at least one handle (506) for the transport or lifting of the power supply device (500), said at least one handle (506) being arranged substantially at said casing (501) or being operatively connected to said casing (501); optionally said handle (506) being slidably engaged to said casing (506).

According to a further non-limiting aspect, the method comprises a step of moving at least one door (508) of said casing, said door (508) being configured to allow access to a predefined portion inside the casing (501) itself and in particular being configured to allow access to said at least one compartment (509) housing, in use, said at least one battery and preferably said plurality of batteries (B1-B4).

According to a further non-limiting aspect, the step of moving said door (508) comprises a movement of the same door between an open configuration in which it allows access to said predefined inner portion of the casing (501), preferably to said at least one compartment (509) housing, in use, said at least one battery, and a closed configuration in which it prevents access to said predefined inner portion of the casing (501).

According to a further non-limiting aspect, the movement of the door (508) from the open configuration to the closed configuration determines an insulation of said portion inside the casing (501) itself, preferably an insulation of said at least one compartment (509) housing, in use, said at least one battery, at least from sprays of water and/or dust.

According to a further non-limiting aspect, the casing (501) comprises at least one door (508) configured to allow access to a predefined portion inside the casing (501) itself.

According to a further non-limiting aspect, said door (508) is configured to allow access to said at least one compartment (509) housing, in use, said at least one battery and preferably said plurality of batteries (B1-B4).

According to a further non-limiting aspect, said door (508) is movable between an open configuration in which it allows access to said predefined inner portion of the casing (501), preferably to said at least one compartment (509) housing, in use, said at least one battery, and a closed configuration in which it prevents access to said predefined inner portion of the casing (501).

According to a further non-limiting aspect, said closed configuration of the door (508) determines an insulation of said portion inside the casing (501) itself, preferably an insulation of said at least one compartment (509) housing, in use, said at least one battery, at least from sprays of water and/or dust.

According to a further non-limiting aspect, in said method, said door (508) is made of plastic material, preferably by injection moulding or co-moulding, and/or is at least partially transparent, and/or the step of moving said door comprises a movement of the door (508) at a hinge thereof, arranged at a hinging side of the door (508) on said casing.

According to a further non-limiting aspect, said movement determines a rotation of the door around a hinging axis made at the hinge.

According to a further non-limiting aspect, the step of moving said door (508) comprises a translation thereof, optionally a linear translation, between said open configuration and said closed configuration, with respect to the casing (501) and comprises a translation of the door (508) relative to the casing (501) of the power supply device (500) occurring on at least one guide engaging on said casing (501).

According to a further non-limiting aspect, said door (508) is made of plastic material, preferably for injection moulding or co-moulding, and/or is at least partially transparent, and/or comprises a hinging side at which a hinge for the hinging of the door (508) is present on said casing (501).

According to a further non-limiting aspect, said hinge identifies a hinging axis.

According to a further non-limiting aspect, said door (508) is movable between said open configuration and said closed configuration by rotation about said hinging axis, or is configured to translate, optionally linearly, between said open configuration and said closed configuration, with respect to the casing (501) and comprises at least one guide engaging on said casing (501) to determine said translation.

According to a further non-limiting aspect, the method comprises a step of operatively introducing or extracting said at least one battery (B1) respectively into, or from, said at least one compartment (509), said step of operatively introducing or extracting comprising a substantially linear introduction or extraction of said at least one battery (B1) respectively into, or from, said at least one compartment (509).

According to a further non-limiting aspect, said introduction or extraction occurs at at least one guide of said at least one compartment (509), said guide being configured to guide the translation of said at least one battery (B1).

According to a further non-limiting aspect, said introducing or extracting determines a connection or a disconnection of a power connector present in said compartment (509) respectively with, or from, at least one pair of terminals present on said at least one battery (B1) and configured to provide, in use, electrical energy to said at least one service power user (510).

According to a further non-limiting aspect, said at least one compartment (509) is configured to allow an operative introduction or extraction of said at least one battery (B1) by means of a preferably substantially linear translation.

According to a further non-limiting aspect, said at least one compartment (509) comprises at least one guide configured to guide the translation of said at least one battery (B1).

According to a further non-limiting aspect, said at least one compartment (509) comprises a power supply connector, configured to couple with at least one pair of terminals present on said at least one battery (B1) and configured to provide, in use, electrical energy to said at least one service power user (510).

According to a further non-limiting aspect, said method comprises a step of powering at least a first power user (101, 102) by means of at least one power output (503) arranged at an accessible portion of said casing (501).

According to a further non-limiting aspect, said at least one power output (503) is operatively connected with said at least one battery (B1), preferably with said plurality of batteries (B1-B4).

According to a further non-limiting aspect, said at least one power user (101, 102) is removably connectable to the at least one power output (503).

According to a further non-limiting aspect, in the method, said power supply step determines a provision of an electrical energy to said at least one power user (101, 102).

According to a further non-limiting aspect, the power supply device (500) comprises at least one power output (503), operatively connected with said at least one battery (B1), preferably with said plurality of batteries (B1-B4).

According to a further non-limiting aspect, said power output (503) is configured to provide, in use, an electrical energy to at least one power user (101, 102) removably connectable to the at least one power output (503) thereof.

According to a further non-limiting aspect, said at least one power output (503) is arranged at an accessible portion of said casing (501).

According to a further non-limiting aspect, the method comprises an operative interfacing step between a remote electronic device and a wireless interface module (521) of the power supply device (500), said operative interfacing step determining a transmission and/or a reception, respectively from and/or to said remote electronic device, of usage and/or control and/or alarm data associated with the operation of the power supply device (500), of the control unit (10) and/or of the at least one battery, preferably of one or more of the batteries of the plurality of batteries (B1 - B4).

According to a further non-limiting aspect, the interfacing step determines a selective reception and/or transmission, respectively, from and/or to a selected number of remote electronic devices and/or to one or more predefined remote electronic devices.

According to a further non-limiting aspect, the method comprises a step of receiving, by means of said wireless interface module (521), a command to activate and/or deactivate the electrical energy supply to said service power user (510).

According to a further non-limiting aspect, the power supply device (500) comprises a wireless interface module (521), preferably a radio module, configured to operatively interface with a remote electronic device and to receive and/or transmit, respectively from and/or to said remote electronic device, usage and/or control and/or alarm data associated with the operation of the power supply device (500), the control unit (10) and/or of at least one battery, preferably one or more of the batteries of the plurality of batteries (B1 - B4).

According to a further non-limiting aspect, said wireless interface module (521) is optionally configured to receive and/or transmit said data in selective mode, respectively to and from a selected number of remote electronic devices and/or to one or more predefined remote electronic devices.

According to a further non-limiting aspect, said power supply device (500) is specifically configured to receive, by means of said wireless interface module (521), a command to activate and/or deactivate the electrical energy supply to said service power user (510).

According to a further non-limiting aspect, the method comprises a step of charging at least one tool, in particular at least one tool for agriculture or gardening which is self-propelled and/or has at least partially automated control, the charging step occurring by means of a tool charging module, said tool charging module optionally being a wireless charging module; said tool charging module being operatively connected to said at least one battery (B1), preferably connected to said plurality of batteries (B1-B4).

According to a further non-limiting aspect, the method comprises a step of transferring electrical energy from said at least one battery (B1), preferably from said plurality of batteries (B1-B4), to said tool, by means of said tool charging module, in particular when said tool is in contact with at least one contact present on said tool charging module and/or when said tool is located substantially near said tool charging module.

According to a further non-limiting aspect, the power supply device (500) comprises a charging module for tools, in particular tools for gardening and/or agriculture which are self-propelled and/or have at least partially automated control, said tool charging module optionally being a wireless charging module.

According to a further non-limiting aspect, said tool charging module is operatively connected to said at least one battery (B1), preferably connected to said plurality of batteries (B1-B4).

According to a further non-limiting aspect, said tool charging module is configured to receive, in use, electrical energy from said at least one battery (B1), preferably from said plurality of batteries (B1-B4) and is configured to transfer said electrical energy to a tool, in particular to said tool for agriculture or gardening which is self-propelled and/or has at least partially automated control, when in contact with at least one contact present on said tool charging module and/or when said tool is located substantially near said tool charging module.

According to a further non-limiting aspect, the method comprises a step of parallel connection of said power supply device (500) with at least one further power supply device (500), said parallel connection occurring by means of a mutual connection of said power supply device (500) and of said at least one further power supply device (500) on a mutual parallel power supply input; the parallel connection step determining in use a power supply of the service power user (510) and/or of the at least one power user (101, 102) with an electrical energy coming from said at least one battery (B1), preferably from said plurality of batteries (B1-B4) and, simultaneously, with an electrical energy coming from at least one battery of said further power supply device (500).

According to a further non-limiting aspect, the power supply device (500) comprises at least one parallel power input, configured to allow, in use, a modular operating connection of said power supply device (500) with at least one further power supply device (500) and/or configured to power said service power user (510) and/or said at least one power user (101, 102) with an electrical energy from said at least one battery (B1), preferably from said plurality of batteries (B1-B4), and, simultaneously, with an electrical energy from at least one battery of said further power supply device (500).

According to a further non-limiting aspect, the method comprises a step of supplying electrical energy intended for the at least partial charging of the at least one battery (B1), preferably intended for at least partial charging of the plurality of batteries (B1-B4) and/or intended for powering the service power user (510) and/or the at least one power output (503) by means of at least one photovoltaic cell panel (520), arranged substantially at said casing (501) of the power supply device (500) and/or movably, optionally removably, connectable to said casing (501) of the power supply device (500).

According to a further non-limiting aspect, the power supply device (500) comprises at least one photovoltaic cell panel (520), arranged substantially at said casing (501) and/or movably, optionally removably, connectable to said casing (501), said photovoltaic cell panel (520) being configured to provide an electrical energy intended for the at least partial charging of the at least one battery (B1), preferably intended for the at least partial charging of the plurality of batteries (B1-B4) and/or intended for powering the service power user (510) and/or the at least one power output (503).

According to a further non-limiting aspect, the device is configured to simultaneously charge at least a first part of said plurality of batteries (B1-B4), optionally with at least one among a power supply (30) installed within said casing (501) and configured to receive in use an electrical power supply from an electrical energy distribution grid and said photovoltaic cell panel (520) and to power, by means of at least a second part of said plurality of batteries (B1-B4) distinct from said first part of said plurality of batteries (B1, B4), at least one of said service power user (510) and said at least one power user (101, 102) by means of said at least one power output (503).

According to a further non-limiting aspect, a charging of at least one part of said plurality of batteries (B1-B4), optionally with at least one among a power supply (30) installed within said casing (501) and receiving in use an electrical power supply from an electrical energy grid and said photovoltaic cell panel (520), occurs simultaneously with a power supply of at least one among said service power user (510) and said at least one power user (101, 102) by means of said at least one power output (503), the power supply occurring by means of a second part of said plurality of batteries (B1-B4) which is distinct with respect to said first part of said plurality of batteries (B1-B4).

According to a further non-limiting aspect, the power supply device (500) comprises at least one power supply (30), installed within said casing (501), said power supply (30) being configured to receive, in use, an electrical power supply from an electrical energy distribution grid.

According to a further non-limiting aspect, the power supply (30) comprises an input connected with said charging socket (502) and at least one output connected with said control unit (10) and/or connected with the at least one battery (B1), preferably with said plurality of batteries (B1-B4).

According to a further non-limiting aspect, said charging step occurs by means of an electrical energy transfer from a power supply (30) installed within said casing (501) and receiving, in use, an electrical power supply from an electrical energy distribution grid.

According to a further non-limiting aspect, the charging step comprises a transfer of electrical energy from said electrical energy distribution grid to an input of said power supply (30) by means of said charging socket (502).

According to a further non-limiting aspect, the method comprises a step of receiving data of at least one feature of said accessory (512, 513, 514) by means of an identification module of said power supply device (500), said identification module executing a transmission of at least part of said data of said at least one feature of said accessory (512, 513, 514) to a control unit of said power supply device (500).

According to a further non-limiting aspect, the method comprises a step of electronically detecting any malfunctions of said accessory (512, 513, 514), executed by said control unit (10), by means of an electronic comparison, optionally occurring in substantially real time, among current and/or electrical voltage absorption data from said at least one service power user (510), with said data of said at least one feature of said accessory (512, 513, 514).

According to a further non-limiting aspect, the power supply device (500) comprises an identification module, configured to receive data of at least one feature of said accessory (512, 513, 514); said identification module being positioned substantially at said service power user (510); said identification module being configured to transmit at least part of said data of said at least one feature of said accessory (512, 513, 514) to a control unit (10) of the power supply device (500).

According to a further non-limiting aspect, said control unit (10) is configured to electronically detect any malfunctions of said accessory (512, 513, 514) by electronically comparing, optionally substantially in real time, current and/or electrical voltage absorption data from said at least one service power user (510), with said data of said at least one feature of said accessory (512, 513, 514).

A kit is further disclosed in accordance with the present disclosure, comprising:
- a power supply device (500) according to one or more of the aspects described herein,
- a power accessory (512, 513, 514) configured to be removably coupled to the service power user (510) of said power supply device (500) and configured to receive driving force from said electric machine.

According to a further non-limiting aspect, said accessory (512, 513, 514) comprises a casing and a connector adapted to be removably coupled on the connector of said power supply device (500).

According to a further non-limiting aspect, said accessory comprises a counter-shaft configured to be in use rotated by the shaft (511) of the service power user (510) when the accessory connector (512, 513, 514) is connected on said connector of the power supply device (510);
optionally wherein said accessory (512, 513, 514) comprises at least one of a fan (512), an aspirator (513), a vacuum cleaner (514), a refrigerating machine, a heating device, an actuator configured to drill and/or cut and/or sand and/or bend, and/or lift, and/or to generate electric current, and/or to compress a fluid, a scintillator.

According to a further non-limiting aspect, said accessory (512, 513, 514) comprises at least one identification chip, containing electronic data identifying a feature of the accessory (512, 513, 514); said identification chip optionally being a wireless identification chip, preferably of the passive type.

According to a further non-limiting aspect, the method comprises:
- a selection step, a first part (B1) of said plurality of batteries (B1-B4) being selected in said selection step;
- a charging step, said first part (B1) of said plurality of batteries (B1-B4) being selectively charged in said charging step;
- at least one further selection step, a further part (B2, B3, B4) of said plurality of batteries (B1-B4) being selected in said further selection step;
- at least one further charging step, said further part (B2, B3, B4) of said plurality of batteries (B1-B4) being selectively charged in said further charging step;
- a power supply step, at least one power user (101, 102) and/or a service power user (510) of said power supply device (500) being supplied in said power supply step by a transfer of electrical energy to said at least one power user (101, 102) and/or to said service power user (510) occurring simultaneously from said first part (B1) of said plurality of batteries (B1-B4) and from said further part (B2, B3, B4) of said plurality of batteries (B1-B4).

According to a further non-limiting aspect, said at least one power user (101, 102) and/or said service power user (510) of said power supply device (500) is powered in said power supply step by means of a transfer of electrical energy to said at least one power user (101, 102) and/or to said at least one service power user (510) simultaneously occurring from each battery of said plurality of batteries (B1-B4).

According to a further non-limiting aspect, the selection step of said first part (B1) or said further part (B2, B3, B4) of the plurality of batteries (B1-B4) comprises the transmission, from the control unit (10) and by means of at least one charge enabling control line (14) operatively connected with a control input of said plurality of batteries (B1-B4), a control signal intended to select said first part (B1) of said plurality of batteries (B1-B4) or said further part (B2, B3, B4) of said plurality of batteries (B1-B4) to cause a switching of a supply controller or switch (44) of the first part (B1) or of the further part (B2, B3, B4) of said plurality of batteries (B1-B4) so that a flow of electrical energy from a power supply (30) can determine the charging thereof.

According to a further non-limiting aspect, the selection step includes the transmission, on said at least one control line (14) of a numerical signal, in particular binary, optionally in which the "0s" and "1s" are transmitted with pulses of different time extension.

According to a further non-limiting aspect, the pulses are negative voltage pulses, in which at the "0s" or "1s", a voltage normally assuming a first and higher value is temporarily brought, for the time extension of the "0s" and "1s", to a second and lower value.

According to a further non-limiting aspect, the control line (14) is of the 1-wire type.

According to a further non-limiting aspect, the selection step of said first part (B1) or said further part (B2, B3, B4) of the plurality of batteries (B1-B4) comprises the transmission, from the control unit (10) and through a control line of a plurality of charge enabling control lines (14) each operatively connected with a control input of a respective battery of said plurality of batteries (B1-B4), a control signal intended to select a specific battery of said plurality of batteries (B1-B4) to cause a switching of a supply controller or switch (44) of said specific battery, so that a flow of electrical energy from a power supply (30) can determine the charging thereof.

According to a further non-limiting aspect, the method comprises:
- at least one further selection step, in which the control unit (10) selects a subsequent part (B2, B3, B4) of said plurality of batteries (B1-B4), and
- a charging step, in which the power supply (30) selectively charges said subsequent part (B2, B3, B4) of said previously selected plurality of batteries (B1-B4).

According to a further non-limiting aspect, the first part (B1) of said plurality of batteries (B1-B4) comprises a single first battery.

According to a further non-limiting aspect, the subsequent part of said plurality of batteries (B1-B4) comprises at least a single second battery which is different with respect to said first battery.

According to a further non-limiting aspect, the selection step of the subsequent part (B2, B3, B4) of the plurality of batteries (B1-B4) being alternative to the selection step of the first part (B1) of the plurality of batteries (B1-B4) and determining an isolation of said subsequent part (B2, B3, B4) of the plurality of batteries (B1-B4) from the first part (B1) of said plurality of batteries (B1-B4).

According to a further non-limiting aspect, the selection step of said first part (B1) or said subsequent part (B2, B3, B4) of the plurality of batteries (B1-B4) comprises the transmission, from the control unit (10) and by means of at least one charge enabling control line (14) operatively connected with a control input of said plurality of batteries (B1-B4), a control signal intended to select said first part (B1) of said plurality of batteries (B1-B4) or said subsequent part (B2, B3, B4) of said plurality of batteries (B1-B4) to cause a switching of a supply controller or switch (44) of the first part (B1) or of the subsequent part (B2, B3, B4) of said plurality of batteries (B1-B4) so that a flow of electrical energy from said power supply (30) can determine the charging thereof.

According to a further non-limiting aspect, the method comprises a step of detecting the charge of said first part (B1) of said plurality of batteries (B1-B4) by means of at least one charge sensor, in particular a voltage sensor.

According to a further non-limiting aspect, the method comprises an interruption of the charging of the first part (B1) of said plurality of batteries (B1-B4) when said charging sensor detects a higher charge, in particular a voltage and/or a current, with respect to a predetermined threshold value.

According to a further non-limiting aspect, the selection step, the charging step, the supply step of the at least one power user (101, 102) and/or of the service power user (510) and optionally at least one of the further selection step, the charge detection step, or the interruption of the charge are managed through a control unit (10).

According to a further non-limiting aspect, the power supply (30) is configured to be removably connectable to said plurality of batteries (B1-B4) through said control unit (10), in particular through a connector (16).

According to a further non-limiting aspect, the power supply (30) is configured to receive an alternating voltage in input, optionally from a civil or industrial electrical energy distribution grid, and is configured to provide a direct voltage in output.

According to a further non-limiting aspect, said charge sensor comprises, or is, a voltage sensor or a current sensor.

According to a further non-limiting aspect, the interruption of the charge automatically determines the selection step of the subsequent part (B2, B3, B4) of said plurality of batteries (B1-B4) and a de-selection step of said first part (B1) of said plurality of batteries (B1-B4).

According to a further non-limiting aspect, the selection step comprises an electronic selection of said at least a first part (B1) of said plurality of batteries (B1-B4) and, optionally of the at least one subsequent part (B2, B3, B4) of said plurality of batteries (B1-B4).

According to a further non-limiting aspect, said selection comprises a transmission of a selection command on at least one control line (14) connected with at least one of said first part (B1) and said subsequent part (B2, B3, B4) of the plurality of batteries (B1-B4); said control line (14) ending on a control input (15) of at least one of said first part (B1) and said subsequent part (B2, B3, B4) of the plurality of batteries (B1-B4), optionally comprising a transmission of a selection command on a control line (14) uniquely associated with a battery of the plurality of batteries (B1-B4) to be charged.

According to a further non-limiting aspect, the method comprises an electronic malfunction detection step and/or a verification step of an improper operating condition, optionally performed automatically, on each battery of the plurality of batteries (B1-B4).

According to a further non-limiting aspect, the method comprises an exclusion step at least one battery selected among the batteries of the plurality of batteries (B1-B4) when for said at least one battery of the plurality of batteries said malfunction and/or said improper operating condition is detected; the exclusion step determining the exclusion of said selected battery from the supply step.

According to a further non-limiting aspect, said malfunction comprises at least one of a lower operating voltage with respect to a first lower threshold or higher with respect to a second upper threshold, a lower operating temperature with respect to a first lower threshold or higher with respect to a second upper threshold.

According to a further non-limiting aspect, the plurality of batteries (B1-B4) is configured to be removed or inserted "hot," and/or the method comprises enabling a removal or insertion of at least one battery of said plurality of batteries (B1-B4) "hot" and/or during at least the supply and/or charging, without causing a power supply interruption of said at least one power user (101, 102) and/or said service power user (510) and/or without causing a charging interruption of the remaining batteries of the plurality of batteries (B1-B4).

According to a further non-limiting aspect, the method comprises a step of detecting a temperature (t) of at least one part of said plurality of batteries (B1-B4) by means of at least one temperature sensor, in particular by means of at least one temperature sensor operatively associated with said plurality of batteries (B1-B4), and preferably by means of a plurality of temperature sensors each operatively associated with a respective battery (B1-B4).

According to a further non-limiting aspect, the method comprises:
- an electronic comparison step of a signal indicative of the temperature (t) assumed by at least one battery of said plurality of batteries (B1-B4) with a temperature threshold value (t_{TH}), and
- an activation step of at least one fan for cooling said at least one battery of said plurality of batteries (B1-B4) when the signal indicates a temperature (t) higher than said temperature threshold (t_{TH});
the method optionally comprising:
- an electronic comparison step of a plurality of signals indicative of the temperature (t) assumed by each battery of said plurality of batteries (B1-B4) with a temperature threshold value (t_{TH}), and
- an activation step of at least one fan for cooling each of the batteries of the plurality of batteries (B1-B4) whose relative signal indicates a temperature (t) higher than said temperature threshold (t_{TH}).

According to a further non-limiting aspect, the method comprises a control of a number n of batteries (B1-B4) operatively connected with the control unit (10), and comprises an enabling an actuation of at least one priority power user (102) among the plurality of power users (101, 102) and/or the service power user (510) and/or of a priority power user (102) and of a secondary power user (101) among the plurality of power users (101, 102) and the service power user (510) as a function of said number n of batteries (B1-B4).

According to a further non-limiting aspect, the method comprises:
- a selection step, in which a control unit (10) operatively interposed between the plurality of batteries (B1-B4) and a plurality of power users (101, 102) and/or the service power user (510) of the power supply device (510) selects at least a first part (B1) of said plurality of batteries (B1-B4), enabling a charge thereof.
According to a further non-limiting aspect, the method comprises:
- a power supply step of the at least one power user (101, 102) and/or the service power user (510) of said power supply device (500), said supply step comprising a transfer of electrical energy simultaneously occurring from at least part of said plurality of batteries (B1-B4) to said at least one power user (101, 102).
According to a further non-limiting aspect, the method comprises:
a control of a number n of batteries (B1-B4) operatively connected with the control unit (10), and comprises an enabling an actuation of at least one priority power user (102) among the plurality of power users (101, 102) and/or the service power user (510) and/or of a priority power user (102) and of a secondary power user (101) among the plurality of power users (101, 102) and/or the service power user (510) as a function of said number n of batteries (B1-B4).

According to a further non-limiting aspect, the priority power user (102) comprises at least one motor, in particular an electric motor, and/or an electronic control unit intended to control, in particular to determine at least one of a power supply, a powering down, and a power delivery, of said at least one motor.

According to a further non-limiting aspect, the method comprises:
- a charging step, in which a power supply (30) selectively charges said first part (B1) of said previously selected plurality of batteries (B1-B4).

According to a further non-limiting aspect, the enabling of the actuation is such that:
- as long as the number n of batteries (B1-B4) is less than a first number i of batteries sufficient to allow enabling the actuation of the priority power user (102), the actuation of the priority power user (102) and the secondary power user (101) is denied;
- as long as the number n of batteries (B1-B4) is equal to or greater than said first number i of batteries sufficient to allow enabling the actuation of the priority power user (102) and less than a second number k, greater than i, of batteries sufficient to allow enabling the actuation of the priority power user (102) and the secondary power user (101), the actuation of the priority power user (102) is authorized and the actuation of the secondary power user (101) is denied;
- as long as the number n of batteries (B1-B4) is greater than said first number i of batteries sufficient to allow enabling the actuation of the priority power user (102) and is greater than the number k of batteries sufficient to allow enabling the actuation of the secondary power user (101), the actuation of the priority power user (102) and the secondary power user (101) is authorized.

According to a further non-limiting aspect, the method comprises an electronic survey step of a voltage value of said at least one part (B1) of the plurality of batteries (B1-B4), in particular during the charging step of the batteries; the method comprising an interruption of charging said at least a first part (B1) of the plurality of batteries (B1-B4) when a voltage value of said at least a first part (B1) of the plurality of batteries (B1-B4) reaches a maximum voltage threshold value (Vmax) and/or comprising an electronic disabling of said at least a first part (B1) of the plurality of batteries (B1-B4), such that said at least a first part (B1) of the plurality of batteries (B1-B4) is excluded from the power supply of the at least one power user (101, 102) when the voltage of said at least a first part (B1) of the plurality of batteries (B1-B4) is below a minimum threshold value (Vmin).

According to a further non-limiting aspect, the method comprises a step of electronically detecting a value of a charging current supplied to said at least one part (B1) of the plurality of batteries (B1-B4) during the charging step of the batteries; the method comprising an interruption of charging said at least a first part (B1) of the plurality of batteries (B1-B4) when the current value exceeds a given maximum safety value (Iₘₐₓ) and/or falls below a minimum charging current value (Iₘᵢₙ).

According to a further non-limiting aspect, said maximum safety value (Iₘₐₓ) is greater than said minimum charging current value (Iₘᵢₙ).

According to a further non-limiting aspect, the method comprises:
- an immediate interruption of the charging step when the charging current value is above said maximum safety value (Iₘₐₓ); or
- an interruption of the charging step when the charging current value remains below said minimum charging current value (Iₘᵢₙ) for a time equal to or greater than a determined waiting time (Tw).

According to a further non-limiting aspect, the step of verifying an improper operating condition comprises a step of verifying a voltage imbalance (Δ*V*(*Bₙ, B*_{*n*+*i*})) and/or a charge level imbalance (Δ*SoC*(*Bₙ, B*_{*n*+*i*})) between at least a first battery (Bn) and a second battery (Bₙ₊ᵢ) of said plurality of batteries (B1-B4), the step of verifying said voltage imbalance (Δ*V*(*Bₙ, B*_{*n*+*i*})) and/or said charge level imbalance (Δ*SoC*(*Bₙ, B*_{*n*+*i*})) comprising:
- a comparison, in particular an electronic comparison, between a charge level difference (Δ*SoC*(*Bn, B*_{*n*+*i*})) between said at least a first battery (Bn) and a second battery (Bn+i) and a first reference value (Vv1), and/or
- a comparison, in particular an electronic comparison, between a voltage imbalance (Δ*V*(*Bn*, *B*_{*n*+*i*}))between said at least a first battery (Bn) and a second battery (Bn+i) and a second reference value (Vv2).

According to a further non-limiting aspect, if it is found that the charge level imbalance Δ*SoC*(*Bₙ, Bₙ₊ᵢ*) between said at least a first battery (Bn) and a second battery (Bₙ₊ᵢ) is greater than said first reference value (Vv1), the method comprises disabling said at least one power user (101, 102) and/or said service power user (510).

According to a further non-limiting aspect, the method comprises a step of selecting and/or limiting a maximum electrical power deliverable by each battery of the plurality of batteries (B1-B4), said selecting and/or limiting being an electronic selection and/or limitation, respectively.

According to a further non-limiting aspect, said selection and/or limitation step is executed by the control unit (10).

According to a further non-limiting aspect, the step of selecting and/or limiting the maximum power comprises a transmission, in particular performed selectively and/or independently for each battery of the plurality of batteries (B1-B4), of a power management signal to a switch, in particular a bidirectional power switch, of at least one battery selected among the batteries of said plurality of batteries.

According to a further non-limiting aspect, in the charging step the control unit (10) is configured to charge at least a first part of the plurality of batteries (B1-B4) with a predefined charging current, optionally constant, until a predetermined threshold voltage value is reached; the control unit (10) being configured to execute a step of completing a charging of said at least a first part of the plurality of batteries (B1-B4), occurring when the voltage of said at least a first part of the plurality of batteries (B1-B4) exceeds said predetermined threshold voltage value, in which a charging current of said at least a first part of the plurality of batteries (B1-B4) is progressively reduced, optionally to a substantially zero value.

According to a further non-limiting aspect, the method comprises:
- a power supply step of the at least one power user (101, 102) and/or a service power user (510) of said power supply device (510), said supply step comprising a transfer of electrical energy simultaneously occurring from at least part of said plurality of batteries (B1-B4) to said at least one power user (101, 102) and/or to said service power user (510).

According to a further non-limiting aspect, the method comprises:
- a step of selecting and/or limiting a maximum electrical power deliverable by each battery of the plurality of batteries (B1-B4), said selecting and/or limiting being an electronic selection and/or limitation, respectively.

According to a further non-limiting aspect, the method comprises:
- a selection step, in which the control unit (10) operatively interposed between the plurality of batteries (B1-B4) and at least one power user (101, 102) and/or a service power user (510) of the power supply device (500) selects at least a first part (B1) of said plurality of batteries (B1-B4), enabling a charge thereof.

According to a further non-limiting aspect, the method comprises:
- a charging step, in which a power supply (30) selectively charges said first part (B1) of said previously selected plurality of batteries (B1-B4).

According to a further non-limiting aspect, the method includes interrupting or allowing said power supply step by means of at least one power switch (20', 20s), controllable by means of a control signal determining, in use, a switching between a closed configuration and an open configuration of said power switch; said at least one internal power switch (20', 20s) being configured and intended to determine the power supply or supply interruption of said at least one power user (101, 102) and/or of said service power user (510).

According to a further non-limiting aspect, the method includes interrupting or allowing said power supply step by means of a power switch (20s) positioned on board the power supply device (500) and operatively interposed between said plurality of batteries (B1-B4) and said at least one power user (101, 102) and/or the service power user (510).

According to a further non-limiting aspect, the method includes interrupting or allowing said power supply step by means of a power switch (20') inside said control unit (10), the power switch (20') being operatively interposed between said plurality of batteries (B1-B4) and said at least one power user (101, 102), and/or said service power user (510), the power switch (20') being controllable by means of a control signal determining, in use, a switching between a closed configuration and an open configuration adapted to determine an interruption or a supply of said at least one power user (101, 102) and/or said service power user (510).

According to a further non-limiting aspect, the power switch (20s) of the control system (20) and the supply switch (20') of the control unit (10) are connected in series.

According to a further non-limiting aspect, the method comprises a transmission of said control signal by means of, or from, a contact circuit or switch, optionally a contact key (42) present on said power supply device (500).

According to a further non-limiting aspect, said contact circuit or switch, optionally said contact key (42) is controllable or hierarchically over-controllable, with a remote control, optionally executed by receiving a control signal from said remote electronic device and/or by means of said wireless communication interface.

According to a further non-limiting aspect, the power supply device (500) comprises a control unit (10) operatively interposed between the plurality of batteries (B1-B4) and at least one power user (101, 102) and/or the service power user (510); the power supply device (500) and/or the control unit (10) comprising:
- a charging operating configuration, wherein said control unit (10):
   - selects a first part (B1) of said plurality of batteries (B1-B4),
   - causes a selective charging, by a power supply (30) of said first part (B1) of said plurality of batteries (B1-B4),
   - selects a further part (B2, B3, B4) of said plurality of batteries (B1-B4) and
   - causes a selective charging, by a power supply (30) of said further part (B2, B3, B4) of said plurality of batteries (B1-B4);
- a power supply operating configuration, wherein the control unit (10) causes a power supply of the at least one power user (101, 102) and/or the service power user (510) of said power supply device (500), determining, in use, a transfer of electrical energy to said at least one power user (101, 102) and/or to said service power user (510) occurring simultaneously from said first part (B1) of said plurality of batteries (B1-B4) and from said further part (B2, B3, B4) of said plurality of batteries (B1-B4),
optionally in which the control unit (10) causes a power supply of the at least one power user (101, 102) and/or of said service power user (510), determining, in use, a transfer of electrical energy to said at least one power user (101, 102) and/or to said service power user (510) occurring simultaneously from each battery of said plurality of batteries (B1-B4).

According to a further non-limiting aspect, in the charging operating configuration, the control unit (10):
- selects a subsequent part (B2, B3, B4) of said plurality of batteries (B1-B4), and
- causes a selective charging, by a power supply (30) of said subsequent part (B2, B3, B4) of said previously selected plurality of batteries (B1-B4).

According to a further non-limiting aspect, the selection of the subsequent part (B2, B3, B4) of the plurality of batteries (B1-B4) being alternative to the selection of the first part (B1) of the plurality of batteries (B1-B4) and determining an isolation of said subsequent part (B2, B3, B4) of the plurality of batteries (B1-B4) from the first part (B1) of said plurality of batteries (B1-B4).

According to a further non-limiting aspect, the control unit (10) comprises at least one charge enabling control line (14), operatively connected with a control input of said plurality of batteries (B1-B4); said control unit (10) being configured to select said first part (B1) of said plurality of batteries (B1-B4) or to select said subsequent part (B2, B3, B4) of said plurality of batteries (B1-B4) transmitting, in use, a control signal on said at least one control line (14).

According to a further non-limiting aspect, said control signal is intended to cause a switch of a supply controller or switch (44) of the first part (B1) or of the subsequent part (B2, B3, B4) of said plurality of batteries (B1-B4) so that a flow of electrical energy coming from said power supply (30) can determine the charging thereof.

According to a further non-limiting aspect, said control unit (10) is configured to transmit, on said at least one control line (14), a numerical signal, in particular binary, optionally in which the "0s" and the "1s" are transmitted with pulses of different time extension.

According to a further non-limiting aspect, the control unit (10) comprises a plurality of charge enabling control lines (14), each operatively connected with a control input of a respective battery of said plurality of batteries (B1-B4); said control unit (10) being configured to select a specific battery of said plurality of batteries (B1-B4) by transmitting, in use, a control signal on one of said control lines (14).

According to a further non-limiting aspect, said control signal is intended to cause a switch of a supply controller or switch (44) of the specific battery so that a flow of electrical energy from said power supply (30) can determine the charging thereof.

According to a further non-limiting aspect, the control unit comprises at least one charge sensor, in particular a voltage sensor, electrically connected with a respective battery of said plurality of batteries (B1-B4), and in which the control unit (10) is configured to cause an interruption of the charge of the first part (B1) of said plurality of batteries (B1-B4) when said charge sensor detects a charge, in particular a voltage, which is greater with respect to a predetermined threshold value, and to automatically cause the selection of the subsequent part (B2, B3, B4) of said plurality of batteries (B1-B4) and a de-selection of said first part (B1) of said plurality of batteries (B1-B4).

According to a further non-limiting aspect, the control unit is configured to electronically select said at least a first part (B1) of said plurality of batteries (B1-B4) or, optionally, the at least one subsequent part (B2, B3, B4) of said plurality of batteries (B1-B4); said control unit (10) being configured to transmit a selection command on at least one control line (14) connected with at least one of said first part (B1) and said subsequent part (B2, B3, B4) of the plurality of batteries (B1-B4).

According to a further non-limiting aspect, said control line (14) ends on a control input (15) of at least one of said first part (B1) and said subsequent part (B2, B3, B4) of the plurality of batteries (B1-B4), optionally said control unit (10) being configured to transmit a selection command on a control line (14) uniquely associated with a battery of the plurality of batteries (B1-B4) which is intended to be charged.

According to a further non-limiting aspect, the control unit is configured to execute an electronic malfunction control and/or electronic control of an improper operating condition, performed, optionally automatically, on each battery of the plurality of batteries (B1-B4);

According to a further non-limiting aspect, the control unit (10) is configured to exclude at least one battery selected among the batteries of the plurality of batteries (B1-B4) when for said at least one battery of the plurality of batteries said malfunction and/or said improper operating condition is detected; the exclusion determining the exclusion of said selected battery from the power supply step.

According to a further non-limiting aspect, the malfunction comprises at least one of a lower operating voltage with respect to a first lower threshold or higher with respect to a second upper threshold, a lower operating temperature with respect to a first lower threshold or higher with respect to a second upper threshold.

According to a further non-limiting aspect, the plurality of batteries (B1-B4) is configured to be removed or inserted "hot", and/or the control unit (10) is configured and specifically intended to allow the removal or introduction of at least one battery of said plurality of batteries (B1-B4) "hot" and/or during at least the power supply and/or charging, without causing a power interruption of said at least one power user (101, 102) and/or without causing an interruption of a charging of the remaining batteries of the plurality of batteries (B1-B4).

According to a further non-limiting aspect, the control unit (10) is configured to detect a temperature (t) of at least one part of said plurality of batteries (B1-B4) by means of at least one temperature sensor, in particular by means of at least one temperature sensor operatively associated with said plurality of batteries (B1-B4), and preferably by means of a plurality of temperature sensors each operatively associated with a respective battery (B1-B4).

According to a further non-limiting aspect, the control unit (10) is configured for:
- electronically comparing a signal indicative of the temperature (t) assumed by at least one battery of said plurality of batteries (B1-B4) with a temperature threshold value (t_{TH}), and
- transmitting an activation signal to a respective fan for cooling said at least one battery of said plurality of batteries (B1-B4) when said signal indicates a temperature (t) greater than said temperature threshold (t_{TH});
the control unit (10) being configured for:
- electronically comparing a signal indicative of a plurality of signals indicative of the temperature (t) assumed by each battery of said plurality of batteries (B1-B4) with a temperature threshold value (t_{TH}), and
- transmitting an activation signal to a respective fan for cooling each of the batteries of the plurality of batteries (B1-B4) whose signal indicates a temperature (t) greater than said temperature threshold (t_{TH}).

According to a further non-limiting aspect, the control unit (10) is configured to perform a control of a number n of batteries (B1-B4) operatively connected to the control unit (10), and to electronically determine an enabling of an actuation of at least one priority power user (102) among the plurality of power users (101, 102) and/or the service power user (510), or of a priority power user (102) and a secondary power user (101) between the plurality of power users (101, 102) and/or the service power user (510), as a function of said number n of batteries (B1-B4).

According to a further non-limiting aspect, the control unit (10) is configured to be operatively interposed in use between the plurality of batteries (B1-B4) and a plurality of power users (101, 102) and/or the service power user (510).

According to a further non-limiting aspect, the control unit (10) comprises:
- a charging operating configuration, wherein said control unit (10):
- selecting at least a first part (B1) of said plurality of batteries (B1-B4), enabling a charge thereof;
- at least a first power supply operating configuration, in which the control unit (10) causes a power supply of the plurality of power users (101, 102) and/or of the service power user (510) of the power supply device (500), determining, in use, a transfer of electrical energy occurring simultaneously from at least part of said plurality of batteries (B1-B4) to said plurality of power users (101, 102) and/or the service power user (510).

According to a further non-limiting aspect, the control unit (10) is configured to perform a control of a number n of batteries (B1-B4) operatively connected to the control unit (10), and to electronically determine an enabling of an actuation of at least one priority power user (102) among the plurality of power users (101, 102) and/or the service power user (510), or of a priority power user (102) and a secondary power user (101) between the plurality of power users (101, 102) and/or the service power user (510), as a function of said number n of batteries (B1-B4).

According to a further non-limiting aspect, in the charging operating configuration, the control unit (10) causes a selective charging, by a power supply (30) of said first part (B1) of said previously selected plurality of batteries (B1-B4).

According to a further non-limiting aspect, the enabling of the actuation allowed by the control unit (10) is such that:
- as long as the number n of batteries (B1-B4) is less than a first number i of batteries sufficient to allow enabling the actuation of the priority power user (102), the actuation of the priority power user (102) and the secondary power user (101) is denied;
- as long as the number n of batteries (B1-B4) is equal to or greater than said first number i of batteries sufficient to allow enabling the actuation of the priority power user (102) and less than a second number k, greater than i, of batteries sufficient to allow enabling the actuation of the priority power user (102) and the secondary power user (101), the actuation of the priority power user (102) is authorized and the actuation of the secondary power user (101) is denied;
- as long as the number n of batteries (B1-B4) is greater than said first number i of batteries sufficient to allow enabling the actuation of the priority power user (102) and is greater than the number k of batteries sufficient to allow enabling the actuation of the secondary power user (101), the actuation of the priority power user (102) and the secondary power user (101) is authorized.

According to a further non-limiting aspect, the control unit (10) is configured to electronically detect a voltage value of said at least a first part (B1) of the plurality of batteries (B1-B4), in particular when in said battery charging operating configuration;
said control unit (10) being configured to stop charging said at least a first part (B1) of the plurality of batteries (B1-B4) when a voltage value of said at least a first part (B1) of the plurality of batteries (B1-B4) reaches a maximum voltage threshold value (Vₘₐₓ), and/or being configured to electronically disable said at least a first part (B1) of the plurality of batteries (B1-B4), such that said at least a first part (B1) of the plurality of batteries (B1-B4) is excluded from the power supply of the at least one power user (101, 102) and/or of the service power user (510) when the voltage of said at least a first part (B1) of the plurality of batteries (B1-B4) is below a minimum voltage threshold value (Vₘᵢₙ).

According to a further non-limiting aspect, the control unit (10) comprises at least one charge sensor, in particular a current sensor, electrically connected with at least one respective battery of said plurality of batteries (B1-B4), said control unit being configured to electronically detect, by means of said charge sensor, a value of a charging current supplied to said at least one part (B1) of the plurality of batteries (B1-B4) during the charging operating configuration.

According to a further non-limiting aspect, the control unit (10) is configured to terminate said charging operating configuration of said at least one part (B1) of the plurality of batteries (B1-B4) when the current value exceeds a certain maximum safety current value (Iₘₐₓ) and/or falls below a minimum charging current value (Iₘᵢₙ).

According to a further non-limiting aspect, the control unit is configured to terminate said charging operating configuration of said at least one part (B1) of the plurality of batteries (B1-B4):
- immediately, when the charging current value is above said maximum safety value (Iₘₐₓ); or
- following a time equal to or greater than a determined waiting time (Tw) if the charging current value remains below said minimum charging current value (Iₘᵢₙ) for said waiting time (Tw).

According to a further non-limiting aspect, the control unit (10), in said electronic control of said improper operating configuration, is configured to verify a voltage imbalance (Δ*V*(*Bₙ, B*_{*n*+*i*})) and/or a charge level imbalance (Δ*SoC*(*Bₙ, B*_{*n*+*i*})) between at least a first battery (Bn) and a second battery (Bn+i) of said plurality of batteries (B1-B4), in particular executing:
- a comparison, in particular an electronic comparison, between a charge level difference (Δ*SoC*(*Bₙ, B*_{*n*+*i*})) between said at least a first battery (Bn) and a second battery (Bn+i) and a first reference value (Vv1), and/or
- a comparison, in particular an electronic comparison, between a voltage imbalance (Δ*V*(*Bn*, *B*_{*n*+*i*}))between said at least a first battery (Bn) and a second battery (Bn+i) and a second reference value (Vv2).

According to a further non-limiting aspect, the control unit (10) is configured to disable said at least one power user (101, 102) if the charge level imbalance Δ*SoC*(*Bₙ, B*_{*n*+*i*}) between said at least a first battery (Bn) and a second battery (Bₙ₊ᵢ) is greater than said first reference value (Vv1) and/or if the voltage imbalance (Δ*V*(*Bₙ, B*_{*n*+*i*})) between said at least a first battery (Bn) and a second battery (Bn+i) is greater than said second reference value (Vv2).

According to a further non-limiting aspect, the control unit (10) is configured and specifically intended to cause a selection and/or a limitation, in particular an electronic selection and/or limitation, of a maximum electrical power deliverable by each battery of the plurality of batteries (B1-B4).

According to a further non-limiting aspect, said control unit (10) is configured to transmit, in particular selectively and/or independently for each battery of the plurality of batteries (B1-B4), a power management signal to a switch, in particular a bidirectional power switch, of at least one battery selected among the batteries of said plurality of batteries (B1-B4).

According to a further non-limiting aspect, in the charging operating configuration, the control unit (10) is configured to charge at least a first part of the plurality of batteries (B1-B4) with a predefined charging current, optionally constant, until reaching a predetermined threshold voltage value; the control unit (10) comprising an operating configuration for completing a charging of said at least a first part of the plurality of batteries (B1-B4), occurring when the voltage of said at least a first part of the plurality of batteries (B1-B4) exceeds said predetermined threshold voltage value, in which a charging current of said at least a first part of the plurality of batteries (B1-B4) is progressively reduced, optionally to a substantially zero value.

According to a further non-limiting aspect, the control unit (10) is configured to be operatively interposed in use between the plurality of batteries (B1-B4) and at least one power user (101, 102) and/or at least one service power user (510) of the power supply device (500) and comprises at least a first power supply operating configuration, in which the control unit (10) causes a power supply of the at least one power user (101, 102) and/or of the service power user (510) of said power supply device (500), determining, in use, a transfer of electrical energy occurring simultaneously from at least part of said plurality of batteries (B1-B4) to said at least one power user (101, 102) and/or to said service power user (510).

According to a further non-limiting aspect, the control unit (10) is configured and specifically intended to cause a selection and/or a limitation, in particular an electronic selection and/or limitation, of a maximum electrical power deliverable by each battery of the plurality of batteries (B1-B4).

According to a further non-limiting aspect, the control unit (10) comprises:
- a charging operating configuration, wherein said control unit (10):
- selecting a first part (B1) of said plurality of batteries (B1-B4), enabling a charge thereof;
- causing a selective charging, by a power supply (30) of said first part (B1) of said previously selected plurality of batteries (B1-B4).

According to a further non-limiting aspect, the control unit (10) comprises a supply switch (20'), controllable by means of a control signal determining, in use, a switching between a closed configuration and an open configuration of said supply switch (20'); said supply switch (20') being configured and intended to determine the power supply or interruption of said at least one power user (101, 102) and/or of the service power user (510).

Further aspects related to one or more embodiments described herein are listed below.

According to a further non-limiting aspect, the method comprises:
- a power supply step of at least one power user (101, 102) and/or said service power user (510), the at least one power user (101, 102) and/or the service power user (510) defining a priority power user (102) and a secondary power user (101), in which, in the power supply step, at least one among a first battery (B1) and/or a second battery (B2) of a plurality of batteries (B1-B4) configured to be removably installed on said power supply device (500) contributes to power said at least one power user (101, 102) and/or said service power user (510) by means of a power supply circuit.

According to a further non-limiting aspect, the method comprises:
- a step of enabling a power supply of the at least one priority power user (102), or an actuation of the priority power user (102) and the secondary power user (101), in which:
- in the enabling step, an electronic control of at least one value among an electrical power, charge, voltage or current made available by the at least one battery connected to said power supply circuit is executed and/or an electronic control of a number n of batteries (B1-B4) installed in said power supply device (500) is executed and,
- in accordance with said at least one value among an electrical power, charge, voltage or current and/or in accordance with said number n of batteries (B1-B4), is electronically enabled, and optionally automatically:
   - the electrical power supply, by means of said power supply circuit, of only the priority power user (102); or
   - the electrical power supply, by means of said power supply circuit, of the priority power user (102) and the secondary power user (101).

According to a further non-limiting aspect, if said at least one value among an electrical power, charge, voltage or current is greater than a minimum threshold value, the electrical power supply is electronically enabled, by means of said power supply circuit, of the priority power user (102) and of the secondary power user (101) and if said at least one value among an electrical power, charge, voltage or current is less than or equal to a minimum threshold value, the electrical power supply is electronically enabled, by means of said power supply circuit, of the priority power user only (102) and/or the electrical power supply is electronically disabled, by means of said power supply circuit, of said secondary power user (101).

According to a further non-limiting aspect,
- as long as the number n of batteries (B1-B4) is less than a first number i of batteries sufficient to allow enabling the electrical power supply of the priority power user (102), the electrical power supply is electronically disabled by means of the power supply circuit of the priority power user (102) and the secondary power user (101);
- as long as the number n of batteries (B1-B4) is equal to or greater than said first number i of batteries sufficient to allow enabling the electrical power supply of the priority power user (102) and less than a second number k, greater than i, of batteries sufficient to allow enabling the electrical power supply of the priority power user (102) and the secondary power user (101), the method includes an electronic enabling of the electrical power supply of the priority power user (102) and an electronic disabling of the electrical power supply of the secondary power user (101);
- as long as the number n of batteries (B1-B4) is greater than said first number i of batteries sufficient to allow the electrical power supply of the priority power user (102) and greater than the number k of batteries sufficient to allow the electrical power supply of the secondary power user (101), the method includes an electronic enabling of the power supply of the priority power user (102) and the secondary power user (101).

According to a further non-limiting aspect, the electronic control of the at least one value among an electrical power, charge, voltage or current, made available by the at least one battery connected to said power supply circuit comprises transmitting a control signal from at least one among an electrical power, charge, voltage or current sensor to a control unit (10), and/or in which the electronic control of the number n of batteries (B1-B4) installed on said power supply device (500) comprises transmitting a battery presence control signal to said control unit (10).

According to a further non-limiting aspect, the control unit (10) is configured to cause, in use, the execution of the electronic, and optionally automatic, enabling step of:
- said electrical power supply, by means of said power supply circuit, of only the priority power user (102); or
- said electrical power supply, by means of said power supply circuit, of the priority power user (102) and the secondary power user (101).

According to a further non-limiting aspect, the electronic control of the number n of batteries (B1-B4) installed on the power supply device (500) comprises a step of verifying the presence of a voltage, in particular of a non-zero voltage, at at least one electrical contact susceptible in use to come into contact with at least one of said batteries (B1-B4) when installed on said power supply device (500),
optionally said voltage being the voltage of said at least one battery.

According to a further non-limiting aspect, the control unit (10) is configured to be operatively connected with:
- at least one power user (101, 102), in particular by means of said at least one power output (503), and/or said service power user (510) of said power supply device (500), the at least one power user (101, 102) and/or the service power user (510) comprising a priority power user (102) and a secondary power user (101) and being configured to be electrically powered,
- a plurality of batteries (B1-B4), and in particular to be operatively connected with at least one among a first battery (B1) and/or a second battery (B2) of the plurality of batteries (B1-B4),

in which the plurality of batteries (B1-B4) are configured to be removably installed on said power supply device (500) and intended to power, at least in part, said at least one power user (101, 102) and/or said service power user (510) by means of a power supply circuit;
in which the control unit (10) is configured for:
   - executing an electronic control of at least one value among an electrical power, charge, voltage or current, made available by the at least one battery connected to said power supply circuit and/or an electronic control of a number n of batteries (B1-B4) installed on said power supply device (500),
   - electronically enabling, and optionally automatically, in accordance with said at least one value among an electrical power, charge, voltage or current and/or in accordance with said number n of batteries (B1-B4):
      - the electrical power supply, by means of said power supply circuit, of only the priority power user (102); or
      - the electrical power supply, by means of said power supply circuit, of the priority power user (102) and the secondary power user (101).

According to a further non-limiting aspect, the control unit is configured to electronically compare said at least one value among an electrical power, charge, voltage or current with a minimum threshold value, and if said at least one value among an electrical power, charge, voltage or current is greater than said minimum threshold value, the control unit (10) is configured to electronically enable the electrical power supply, by means of said power supply circuit, of the first power output (503) and the second power output (503) and/or for powering the priority power user (102) and the secondary power user (101) and if said at least one value among an electrical power, charge, voltage or current is less than or equal to a minimum threshold value, the control unit (10) is configured to electronically disable the electrical power supply, by means of said power supply circuit, of the power output (503), in particular the first power output (503), operatively connected only with the priority power user (102) and/or for electronically disabling the power supply, by means of said power supply circuit, the second power output (503) intended to power said secondary power user (101).

According to a further non-limiting aspect, in the control unit,
- as long as the number n of batteries (B1-B4) is less than a first number i of batteries sufficient to allow enabling the electrical power supply of the priority power user (102) by means of said first power output (503), the control unit (10) is configured to electronically disable the power supply, by means of the power supply circuit, of the priority power user (102) and the secondary power user (101) by means of said first power output (503) and said second power output (503);
- as long as the number n of batteries (B1-B4) is equal to or greater than said first number i of batteries sufficient to allow enabling the electrical power supply of the priority power user (102) by means of said first power output (503) and less than a second number k, greater than i, of batteries sufficient to allow enabling the electrical power supply of the priority power user (102) and the secondary power user (101) by means of said first power output (503) and said second power output (503), the control unit (10) is configured to electronically enable the electrical power supply of the priority power user (102) and to electronically disable the electrical power supply of the secondary power user (101) by means of said first power output (503);
- as long as the number n of batteries (B1-B4) is greater than said first number i of batteries sufficient to allow the electrical power supply of the priority power user (102) and greater than the number k of batteries sufficient to allow the electrical power supply of the secondary power user (101) by means of said second power output (503), the control unit (10) is configured to electronically enable the electrical power supply of the priority power user (102) and the secondary power user (101) by means of said first and said second power output (503).

According to a further non-limiting aspect, the control unit (10) is configured to be connected with at least one among an electrical power, charge, voltage or current sensor and to receive, from said sensor, a control signal of at least one value among an electrical power, charge, voltage or current, made available by the at least one battery connected to said power supply circuit, and/or to receive a battery presence control signal, indicative of the number n of batteries (B1-B4) installed on the power supply device (500).

According to a further non-limiting aspect, the control unit (10) is configured for electronically enabling, and optionally automatically:
- said electrical power supply, by means of said power supply circuit, of only the priority power user (102) by means of said first power output (503); or
- said electrical power supply, by means of said power supply circuit, of the priority power user (102) and of the secondary power user (101) by means of said first and said second power output (503),
in accordance with said control signal.

According to a further non-limiting aspect, the control unit (10) is configured to be operatively connected with at least one electrical contact susceptible in use to contact with at least one of said batteries (B1-B4) when installed on said power supply device (500), and in which
the battery presence control signal is a voltage signal, in particular of a non-zero voltage, taken from said electrical contact,
optionally in which said voltage signal is indicative of the voltage of said at least one battery.

According to a further non-limiting aspect, the method comprises:
- a step of powering at least one power user (101, 102) by means of at least a first power output (503) of said power supply device (500) and/or of at least one service power user (510) of the supply device (500), in which at least a first battery (B1) installed on the power supply device (500), optionally at least a first battery (B1) and a second battery (B2) of a plurality of batteries (B1-B4) installed on the power supply device (500), contributes to powering said power user (101, 102) by means of a supply circuit.

According to a further non-limiting aspect, the method comprises:
- a step of controlling the power supply of said at least one power user (101, 102) powered by means of said at least one power output (503) and/or of the service power user (510) by means of at least one solid-state supply switch circuit (20s'), positioned in series with said at least a first battery (B1), optionally positioned in series with said plurality of batteries (B1-B4), and arranged between said at least a first battery (B1) and said at least one power output (503) intended to power said at least one power user (101, 102) and/or said power user (510), optionally operatively arranged between said plurality of batteries (B1-B4) and said at least one power output (503) and/or said service power user (510).

According to a further non-limiting aspect, the solid-state supply switch circuit (20s') forms a unidirectional power switch, configured to be switched between a closed configuration, which allows the passage of an electrical current from said at least one battery (B1-B4), optionally from the plurality of batteries (B1-B4), to said at least one power output (510) and/or to said at least one service power user (510) and an open operating configuration, which prevents the passage of said electrical current from the at least one battery (B1), optionally from the plurality of batteries (B1-B4) to said at least one power output (503) and/or to said service power user (510), configured to allow the transit of an electrical current in only one direction, and
- the step of controlling the power supply of the at least one power output (503) comprises at least one switching between said closed configuration and said open configuration.

According to a further non-limiting aspect, said solid-state supply switch circuit (20s') comprises at least a first field-effect transistor (201) and at least a second field-effect transistor (202), in particular at least a first MOSFET (201) and a second MOSFET (202), and a first diode (301) and a second diode (302), in which the first diode (301) is connected between a drain terminal (D1) and a source terminal (S1) of the first field-effect transistor (201), and in which the second diode (302) is connected between a drain terminal (D2) and a source terminal (S2) of the second field-effect transistor (202).

According to a further non-limiting aspect, the step of controlling the power supply of said at least one power user (101, 102) by means of said at least one power output (503) comprises supplying a first bias signal on a gate terminal (G1) of the first field-effect transistor (201) and a second bias signal on a gate terminal (G2) of the second field-effect transistor (202) so that said first field-effect transistor (201), together with said first diode (301), behaves like a substantially ideal diode and so that said second field-effect transistor (202), together with said second diode (302), behaves like a solid-state switch having a closed configuration and an open configuration.

According to a further non-limiting aspect, in the control step, the switching between said closed configuration and said open configuration comprises a switching of the assembly formed by said second diode (302) and by the second field-effect transistor (202) between said closed configuration and said open configuration.

According to a further non-limiting aspect, the method comprises:
- a selection step, a first part (B1) of said plurality of batteries (B1-B4) being selected in said selection step;
- a charging step, said first part (B1) of said plurality of batteries (B1-B4) being selectively charged in said charging step;
- at least one further selection step, a further part (B2, B3, B4) of said plurality of batteries (B1-B4) being selected in said further selection step;
- at least one further charging step, said further part (B2, B3, B4) of said plurality of batteries (B1-B4) being selectively charged in said further charging.

According to a further non-limiting aspect, in the power supply step, said at least one power output (503) and/or the service power user (510) of said power supply device (500) is powered by a transfer of electrical energy originating simultaneously from said first part (B1) of said plurality of batteries (B1-B4) and from said further part (B2, B3, B4) of said plurality of batteries (B1-B4).

According to a further non-limiting aspect, said selection step, said charging step, said at least one further selection step and said at least one power supply step are controlled by a control unit (10), and the control step of the power supply of the at least one power output (503) and/or the service power user (510) is controlled by means of said control unit (10).

According to a further non-limiting aspect, the method comprises a step of configuring a control unit (10) in use controlling at least one among an activation of an electrical power supply, a deactivation of the electrical power supply and an adjustment of the electrical power supplied, by at least part of the plurality of batteries (B1-B4), in particular by at least one among the first battery (B1) and/or the second battery (B2), to said at least one power outlet (503) and/or to the service power user (510).

According to a further non-limiting aspect, in said configuration step, the control unit (10) allows the connection or disconnection of at least one battery of the plurality of batteries (B1-B4), in particular of one among the first battery (B1) and the second battery (B2), from the power supply circuit, without interruption of the electrical power supplied to the power output (503) and/or to the service power user (510).

According to a further non-limiting aspect the power supply device (500) comprises a first power output (503) in use configured to power the first power user (102) as a priority power user (102) and a second power output (503) intended to power a second power user as a secondary power user (101) and/or is configured to consider one among the at least one service power user (510) and the at least one power user (101, 102) as a priority power user (102) and the other of the at least one service power user (510) and the at least one power user (101, 102) as a secondary power user (101).

According to a further non-limiting aspect, the method comprises:
- a step of enabling a power supply of the at least one priority power user (102), or an actuation of the priority power user (102) and the secondary power user (101), in which:
- in the enabling step, an electronic control of at least one value among an electrical power, charge, voltage or current made available by the at least one battery connected to said power supply circuit is executed and/or an electronic control of a number n of batteries (B1-B4) installed on the power supply device (500) is executed.

According to a further non-limiting aspect:
- in accordance with said at least one value among an electrical power, charge, voltage or current and/or in accordance with said number n of batteries (B1-B4), is electronically enabled, and optionally automatically:
   - the electrical power supply, by means of said power supply circuit, of only the priority power user (102); or
   - the electrical power supply, by means of said power supply circuit, of the priority power user (102) and the secondary power user (101).

According to a further non-limiting aspect, the control unit (10) comprises a solid-state supply switch circuit (20s'), positioned in series with said at least a first battery (B1), optionally positioned in series with said plurality of batteries (B1-B4), and arranged between said at least a first battery (B1) and said at least one power user (101, 102), optionally arranged between said plurality of batteries (B1-B4) and said at least one power user (101, 102).

According to a further non-limiting aspect, said solid-state supply switch circuit (20s') forms a unidirectional power switch, configured to be switched between a closed configuration, which allows the passage of an electrical current from said at least one battery (B1-B4), optionally from the plurality of batteries (B1-B4), to said at least one power output (503) powering in use said at least one power user (101, 102) and/or to said service power user (510) and an open operating configuration, which prevents the passage of said electrical current from the at least one battery (B1), optionally from the plurality of batteries (B1-B4) to said at least one power output (503) powering in use said at least one power user (101, 102) and/or to said service power user (510), the unidirectional power switch being configured to allow the transition of only one electrical current in one direction.

According to a further non-limiting aspect, said control unit (10) comprises a power supply operating configuration in which it controls the power supply of the at least one power output (503) and/or of said service power user (510) by means of the solid-state supply switch circuit (20s'), controlling at least one switching between said closed configuration and said open configuration of said solid-state supply switch circuit (20s').

According to a further non-limiting aspect, said solid-state supply switch circuit (20s') comprises at least a first field-effect transistor (201) and at least a second field-effect transistor (202), in particular at least a first MOSFET (201) and a second MOSFET (202), and a first diode (301) and a second diode (302), in which the first diode (301) is connected between a drain terminal (D1) and a source terminal (S1) of the first field-effect transistor (201), and in which the second diode (302) is connected between a drain terminal (D2) and a source terminal (S2) of the second field-effect transistor (202).

According to a further non-limiting aspect, the control unit (10) is configured to control the power supply of said at least one power user (101, 102), supplying a first bias signal on a gate terminal (G1) of the first field-effect transistor (201) and a second bias signal on a gate terminal (G2) of the second field-effect transistor (202) so that said first field-effect transistor (201), together with said first diode (301), behaves like a substantially ideal diode and so that said second field-effect transistor (202), together with said second diode (302), behaves like a solid-state switch having a closed configuration and an open configuration.

According to a further non-limiting aspect, the control unit (10) is configured to control a switching between said closed configuration and said open configuration of said solid-state supply switch circuit (20s') by controlling a switching of the assembly formed by said second diode (302) and by the second field-effect transistor (202) between said closed configuration and said open configuration.

According to a further non-limiting aspect, the control unit (10) comprises:
- a charging operating configuration, wherein said control unit (10):
   - selects a first part (B1) of said plurality of batteries (B1-B4),
   - causes a selective charging, by a power supply (30) of said first part (B1) of said plurality of batteries (B1-B4),
   - selects a further part (B2, B3, B4) of said plurality of batteries (B1-B4) and
   - causes a selective charging, by a power supply (30) of said further part (B2, B3, B4) of said plurality of batteries (B1-B4).

According to a further non-limiting aspect, in the power supply operating configuration, in which the control unit (10) causes a power supply of the at least one power output (503) and/or of the service power user (510), determining, in use, a transfer of electrical energy to said at least one power output (503) for powering said at least one power user (101, 102) and/or to said service power user (510) occurring simultaneously from said first part (B1) of said plurality of batteries (B1-B4) and from said further part (B2, B3, B4) of said plurality of batteries (B1-B4).

According to a further non-limiting aspect, the control unit (10) causes a power supply of the at least one power output (503) and/or of the service power user (510), determining, in use, a transfer of electrical energy to said at least one power output (503) and/or to said service power user (510) occurring simultaneously from each battery of said plurality of batteries (B1-B4).

According to a further non-limiting aspect, the control unit is configured to allow the connection or disconnection of at least one battery of the plurality of batteries (B1-B4), in particular of one among the first battery (B1) and the second battery (B2), from the power supply circuit, without interruption of an electrical power supply provided to said at least one power outlet (503).

According to a further non-limiting aspect, the control unit (10) is configured for:
- executing an electronic control of at least one value among an electrical power, charge, voltage or current, made available by the at least one battery connected to said power supply circuit and/or an electronic control of a number n of batteries (B1-B4) installed on the power supply device (500).

According to a further non-limiting aspect, the control unit (10) is configured for:
- electronically enabling, and optionally automatically, in accordance with said at least one value among an electrical power, charge, voltage or current and/or in accordance with said number n of batteries (B1-B4):
   - the electrical power supply, by means of said power supply circuit, of only the priority power user (102) by means of said first power output (503); or
   - the electrical power supply, by means of said power supply circuit, of the priority power user (102) and of the secondary power user (101) by means of said first power output (503) and, respectively, said second power output (503).

According to a further non-limiting aspect:
the at least one power user (101, 102) comprises a priority power user (102) and a secondary power user (101),
- and the control unit (10) is configured to cause a power supply of the at least one priority power user (102) by means of said first power output (503), or an actuation of the priority power user (102) and the secondary power user (101) by means of said second power output (503).

According to a further non-limiting aspect, the control unit (10) is configured to execute an electronic control of at least one value among an electrical power, charge, voltage or current, made available by the at least one battery connected to said power supply circuit and/or to execute an electronic control of a number n of batteries (B1-B4) installed on the power supply device (500).

According to a further non-limiting aspect, said electronic control is such that, in accordance with said at least one value among an electrical power, charge, voltage or current and/or in accordance with said number n of batteries (B1-B4).

According to a further non-limiting aspect, the control unit (10) electronically enables, and optionally automatically:
- the electrical power supply, by means of said power supply circuit, of only the priority power user (102) by means of said first power output (503); or
- the electrical power supply, by means of said power supply circuit, of the priority power user (102) and of the secondary power user (101) by means of said first power output (503) and, respectively, said second power output (503).

According to a further non-limiting aspect, the method comprises:
- a power supply step of at least one power output (503) intended to power, in use, at least one power user (101, 102) and/or a power supply step of the service power user (510), in which at least one among a first battery (B1) and/or a second battery (B2) of a plurality of batteries (B1-B4) configured to be removably installed on the power supply device (500), contributes to powering said power user (101, 102) by means of said at least one power output (503) and/or contributes to powering said service power user (510).

According to a further non-limiting aspect, the method comprises a step of electronically measuring an electrical power (P(t)) instantly absorbed by said at least one power user (101, 102) connected to said at least one power output (503), in which the step of electronically measuring the instantly absorbed power (P(t)) is executed by a control unit (10) configured to control the power supply of said at least one power user (101, 102) or is executed by an electronic sensor, operatively connected with said control unit (10).

According to a further non-limiting aspect, the method comprises a step of electronically limiting the electrical power supplied by said at least a first battery (B1) and/or a second battery (B2), to said at least one power user (101, 102) by means of the at least one power output (503) and/or to said at least one service power user (510), said step of electronically limiting the electrical power supplied by said at least a first battery (B1) and/or a second battery (B2) to at least a first maximum power value.

According to a further non-limiting aspect, said electrical power supplied by said at least a first battery (B1) and/or by said at least a second battery (B2) comprises at least one electric current supplied by said at least a first battery (B1) and/or by said at least a second battery (B2).

According to a further non-limiting aspect, the step of electronically limiting the electrical power supplied by said at least a first battery (B1) and/or a second battery (B2) to said at least one power user (101, 102) by means of said at least one power output (503) comprises a step of electronically limiting an electrical current supplied by said at least a first battery (B1) and/or a second battery (B2) to said at least one power user (101, 102) by means of said at least one power output (503).

According to a further non-limiting aspect, the first battery (B1) and the second battery (B2) are electrically connected in parallel to power said at least one power output (503) and, optionally, selectively at least one among said first power output (503) and said second power output (503).

According to a further non-limiting aspect, the method comprises:
- a storage step of at least one datum related to a maximum electrical power deliverable by at least one among said first battery (B1) and said second battery (B2), optionally a storage step of a first datum related to the maximum power deliverable by said first battery (B1) and a second datum related to the maximum power deliverable by said second battery (B2), and/or
- an electronic retrieval step of said at least one datum related to a maximum electrical power deliverable by at least one among said first battery (B1) and said second battery (B2), optionally an electronic retrieval step of said first datum related to the maximum power deliverable by said first battery (B1) and said second datum related to the maximum power deliverable by said second battery (B2).

According to a further non-limiting aspect, the maximum deliverable electrical power comprises a maximum deliverable electrical current and/or the datum related to a maximum deliverable electrical power comprises a maximum deliverable electrical current datum.

According to a further non-limiting aspect, the first maximum power value corresponds to said datum and optionally in which the first maximum power value corresponds to the first datum and in which a second maximum power value corresponds to said second datum.

According to a further non-limiting aspect, the electronic limitation of the electrical power supplied by said at least a first battery (B1) and/or a second battery (B2) only occurs when the electrical power supplied to said at least one power user (101, 102) exceeds the value corresponding to said datum, optionally to said first datum and/or to said second datum.

According to a further non-limiting aspect:
- said electronic limitation step occurs immediately when a power instantly requested by said at least one power user (101, 102) by means of said at least a first power output (503) causes exceeding said at least a first maximum power value, optionally causes exceeding at least one of said at least a first maximum power value and said second maximum power value, or
- said electronic limitation step occurs when a power instantly requested by said at least one power user (101, 102) by means of said at least one power output (503) causes exceeding said at least a first maximum power value, optionally causes exceeding at least one of said at least a first maximum power value and said second maximum power value, for at least one predefined time interval (Δtₚₘₐₓ).

According to a further non-limiting aspect, said first maximum power value comprises, or is, a first maximum electrical current value, and/or said second maximum electrical power value comprises, or is, a second maximum electrical current value.

According to a further non-limiting aspect, the limitation step comprises a transmission of a power limitation signal (Sₗᵢₘ) to at least one power limitation circuit, said power limitation circuit being positioned within said at least a first battery (B1) and/or a second battery (B2) of said plurality of batteries (B1-B4) and/or being positioned within said control unit (10).

According to a further non-limiting aspect, the power supply device (500) comprises:
- a first power output (503), connected in use with a priority power user (102),
- a second power output (503), connected in use with a secondary power user (101);
and/or
in which the at least one power output (503) is connected, in use, to at least one power user (101, 102), the power supply device (500) comprising a service power user (510), at least one among the at least one power user (101, 102) and the service power user (510) defining a priority power user, and the other among the at least one power user (101, 102) and the service power user (510) defining a secondary power user.

According to a further non-limiting aspect, the method comprises a step of enabling a power supply of the at least one priority power user (102), or an actuation of the priority power user (102) and the secondary power user (101), in which in the enabling step an electronic control of at least one value among an electrical power, charge, voltage or current, made available by the at least one battery connected to said power supply circuit is executed and/or an electronic control of a number n of batteries (B1-B4) installed on the power supply device (500) is executed.

According to a further non-limiting aspect:
- in accordance with said at least one value among an electrical power, charge, voltage or current and/or in accordance with said number n of batteries (B1-B4), is electronically enabled, and optionally automatically:
   - the electrical power supply of only the priority power user (102); or
   - the electrical power supply of the priority power user (102) and the secondary power user (101).

According to a further non-limiting aspect, the method comprises a step of electronically comparing a signal indicative of the temperature (t) assumed by at least one battery of said plurality of batteries (B1-B4) with a temperature threshold value (t_{TH}).

According to a further non-limiting aspect, the method comprises:
- an activation step of at least one fan for cooling said at least one battery of said plurality of batteries (B1-B4) when the signal indicates a temperature (t) higher than said temperature threshold (t_{TH}), and/or
- a forced activation step of said at least one fan for cooling said at least one battery of said plurality of batteries (B1-B4) when the electrical power (P(t)) instantly absorbed by said at least one power user (101, 102) and/or by the service power user (510), reaches a predefined power value requiring an active cooling, optionally in which said predefined power value requiring an active cooling is substantially equal to 2/3 of said first maximum power value and preferably substantially equal to said first maximum power value.

According to a further non-limiting aspect, the method comprises a step of configuring a control unit (10) in use controlling at least one among an activation of an electrical power supply, a deactivation of the electrical power supply and an adjustment of the electrical power supplied, by at least part of the plurality of batteries (B1-B4), in particular by at least one among the first battery (B1) and/or the second battery (B2), to said at least one power user (101, 102) and/or to the service power user (510),

in which in said configuration step, the control unit (10) allows the connection or disconnection of at least one battery of the plurality of batteries (B1-B4), in particular of one among the first battery (B1) and the second battery (B2), from the power supply circuit, without interruption of the electrical power supplied to said at least one power user (101, 102) and/or to the service power user (510),.

According to a further non-limiting aspect, the control unit (10) is configured to be operatively connected with, or comprising, at least one electrical sensor intended to measure a power instantly absorbed (P(t)) by said at least one power user (101, 102) and/or by said service power user (510).

According to a further non-limiting aspect, the control unit (10) is configured to limit to at least a first maximum power value an electrical power supplied by said at least a first battery (B1) and/or a second battery (B2), to said at least one power user (101, 102) and/or to said service power user (510) by means of the power supply circuit.

According to a further non-limiting aspect, the control unit (10) is configured for:
- storing at least one datum related to a maximum electrical power deliverable by at least one among said first battery (B1) and said second battery (B2), optionally for storing a first datum related to the maximum power deliverable by said first battery (B1) and a second datum related to the maximum power deliverable by said second battery (B2), and/or
- electronically retrieving said at least one datum related to a maximum electrical power deliverable by at least one among said first battery (B1) and said second battery (B2), optionally electronically retrieving said first datum related to the maximum power deliverable by said first battery (B1) and said second datum related to the maximum power deliverable by said second battery (B2).

According to a further non-limiting aspect, the first maximum power value corresponds to said datum and optionally in which the first maximum power value corresponds to the first datum and in which a second maximum power value corresponds to said second datum.

According to a further non-limiting aspect, the control unit (10) is configured to electronically limit the electrical power supplied by said at least a first battery (B1) and/or a second battery (B2) only when the electrical power supplied to said at least one power user (101, 102) by means of said at least one power output (503) and/or to said service power user (510) exceeds the value corresponding to said datum, optionally to said first datum and/or to said second datum.

According to a further non-limiting aspect, the control unit is configured to electronically limit the electrical power immediately when a power instantly requested by said at least one power user (101, 102) and/or by the service power user (510) causes exceeding said at least a first maximum power value, optionally causing exceeding at least one of said at least a first maximum power value and said second maximum power value,
or is configured to electronically limit the electrical power when a power instantly requested by said at least one power user (101, 102) and/or by the service power user (510) causes exceeding said at least a first maximum power value, optionally causes exceeding at least one of said at least a first maximum power value and said second maximum power value, for at least one predefined time interval (Δtₚₘₐₓ).

According to a further non-limiting aspect, the control unit (10) is configured to limit the electrical power by transmitting a power limitation signal (Sₗᵢₘ) to at least one power limitation circuit, said power limitation circuit being positioned within said at least a first battery (B1), and/or transmitting said power limitation signal (Sₗᵢₘ) to a second battery (B2) of said plurality of batteries (B1-B4) and/or being positioned within said control unit (10).

According to a further non-limiting aspect, the control unit is configured for:
- executing an electronic control of at least one value among an electrical power, charge, voltage or current, made available by the at least one battery connected to said power supply circuit and/or an electronic control of a number n of batteries (B1-B4) installed on said power supply said device (500).

According to a further non-limiting aspect, the control unit is configured for:
- electronically enabling, and optionally automatically, in accordance with said at least one value among an electrical power, charge, voltage or current and/or in accordance with said number n of batteries (B1-B4):
   - the electrical power supply of only the priority power user (102); or
   - the electrical power supply of the priority power user (102) and the secondary power user (101).

According to a further non-limiting aspect, the control unit is configured for:
- electronically comparing a signal indicative of the temperature (t) assumed by at least one battery of said plurality of batteries (B1-B4) with a temperature threshold value (t_{TH}), and transmitting an activation signal to at least one fan for cooling said at least one battery of said plurality of batteries (B1-B4) when said signal indicates a temperature (t) higher than said temperature threshold (t_{TH}), and/or
- transmitting an activation signal to said at least one fan for cooling said at least one battery of said plurality of batteries (B1-B4) when the electrical power (P(t)) instantly absorbed by said at least one power user (101, 102) and/or by said service power user (510), reaches a predefined power value requiring an active cooling, optionally in which said predefined power value requiring an active cooling is substantially equal to 2/3 of said first maximum power value and preferably substantially equal to said first maximum power value.

According to a further non-limiting aspect, the control unit is configured to allow the connection or disconnection of at least one battery of the plurality of batteries (B1-B4), in particular of one among the first battery (B1) and the second battery (B2), from the power supply circuit, without interruption of an electrical power supply provided to said at least one power user (101, 102) and/or to said service power user (510).

According to a further non-limiting aspect, the control unit (10) allows the connection or disconnection of at least one battery of the plurality of batteries (B1-B4), in particular of one among the first battery (B1) and the second battery (B2), from the power supply circuit, without interruption of the electrical power supplied to said at least one power user (101, 102).

According to a further non-limiting aspect, following a connection or disconnection of said at least one battery of the plurality of batteries (B1-B4), in particular a connection or disconnection of one among said first battery (B1) and said second battery (B2) from said power supply device (500), the method includes a step of filtering and/or limiting voltage and/or current peaks and/or drops, upstream of said at least one power user (101, 102), in particular upstream of said power supply circuit of the power user (101, 102).

According to a further non-limiting aspect, the method comprises a step of connecting or disconnecting said at least one battery of the plurality of batteries (B1-B4) comprising a step of introducing or extracting said at least one battery from a respective compartment (509) of the power supply device (500).

According to a further non-limiting aspect, the method comprises a step of enabling the delivery of electrical energy to a priority power user (102) among the plurality of power users (101, 102) and/or the service power user (510), or of an actuation of the priority power user (102) and the secondary power user (101) respectively selected among the plurality of power users (101, 102) and/or the service power user (510), as a function of a number n of batteries (B1-B4),
optionally in which the enabling of the actuation is such that:
- as long as the number n of batteries (B1-B4) is less than a first number i of batteries sufficient to allow enabling the supply of electrical energy to the priority power user (102), the supply of electrical energy to the priority power user (102) and the secondary power user (101) is denied;
- as long as the number n of batteries (B1-B4) is equal to or greater than said first number i of batteries sufficient to allow the supply of electrical energy to the priority power user (102) and less than a second number k, greater than i, of batteries sufficient to allow the supply of electrical energy to the priority power user (102) and to the secondary power user (101), the actuation of the priority power user (102) is authorised and the supply of electrical energy to the secondary power user (101) is denied;
- as long as the number n of batteries (B1-B4) is greater than said first number i of batteries sufficient to allow the supply of electrical energy to the priority power user (102) and greater than the number k of batteries sufficient to allow the supply of electrical energy to the secondary power user (101), the supply of electrical energy to the priority power user (102) and to the secondary power user (101) is authorised.

According to a further non-limiting aspect, the control unit (10) allows the connection or disconnection of at least one battery of the plurality of batteries (B1-B4), in particular of one among the first battery (B1) and the second battery (B2), from the power supply circuit, without interruption of an electrical power supply provided to said priority power user (102) and determining a powering down or an electrical power supply of said secondary power user (101) in accordance with at least one value among an electrical power, charge, voltage or current, made available by the at least one battery connected to said power supply circuit.

According to a further non-limiting aspect, following said disconnection step, the control unit (10) automatically performs an electronic verification step of whether at least one among an electrical power, charge, voltage or current, made available by the at least one battery connected to said power supply circuit is sufficient to power the at least one power user (101, 102) and/or the service power user (510), preferably the at least one among said priority power user (102) and said secondary power user (101), and following said electronic verification step, and in accordance with at least one among the electrical power, charge, voltage or current, made available by the at least one battery residually connected to said power supply circuit, executes at least one among the following actions:
- an electronic limitation of a power which can be provided to said at least one power user (101, 102) and/or to said service power user (510), and/or of power absorbable by said at least one power user (101, 102) and/or by the service power user (510), preferably an electronic limitation of the power which can be provided to said priority power user (102) and/or said secondary power user (101), and/or of power absorbable by said priority power user (102) and/or by said secondary power user (101);
- said powering down of said secondary power user (101),
- a powering down of said priority power user (102),
- a powering down of the service power user (510);
optionally allowing an electrical power supply of at least itself, and of electrical control circuits of said priority (102) and/or secondary (101) power user.

According to a further non-limiting aspect, the control unit (10) is configured to allow the connection or disconnection of at least one battery of the plurality of batteries (B1-B4), in particular of one among the first battery (B1) and the second battery (B2), from the power supply circuit, without interruption of an electrical power supply provided to said at least one power user (101, 102) and/or to said service power user (510).

According to a further non-limiting aspect, the control unit comprises a step of filtering and/or limiting voltage and/or current peaks and/or drops, executing, in use, a filtering and/or limiting of voltage and/or current peaks and/or drops, upstream of said at least one power user (101, 102) and/or of said service power user (510), in particular upstream of said power supply circuit of the power user (101, 102) and/or upstream of said service power user (510),.

According to a further non-limiting aspect, the control unit is configured to allow the connection or disconnection of at least one battery of the plurality of batteries (B1-B4), in particular of one among the first battery (B1) and the second battery (B2), from the power supply circuit, without interruption of an electrical power supply provided to said at least one power user (101, 102) and/or to said service power user (510) by means of said at least one power output (503), following an introduction or extraction of the first battery (B1) or the second battery (B2) from a respective compartment (509) positioned on the power supply device (500).

According to a further non-limiting aspect said control unit is specifically intended to cause a selection and/or a limitation, in particular an electronic selection and/or limitation, of a maximum electrical power deliverable by each battery of the plurality of batteries (B1-B4) and in which said control unit (10) is configured to transmit, in particular selectively and/or independently for each battery of the plurality of batteries (B1-B4), a power management signal to a switch, in particular a bidirectional power switch, of at least one battery selected from the batteries of said plurality of batteries (B1-B4) and/or
in which said control unit (10) is configured to enable an actuation of the priority power user (102) selected among the plurality of power users (101, 102) and/or the service power user (510), or an actuation of the priority power user (102) and the secondary power user (101) respectively selected among the plurality of power users (101, 102) and/or the service power user (510), as a function of the number n of batteries (B1-B4).

According to a further non-limiting aspect, the enabling of the actuation is such that:
- as long as the number n of batteries (B1-B4) is less than a first number i of batteries sufficient to allow the supply of electrical energy to the priority power user (102), the supply of electrical energy to the priority power user (102) and the secondary power user (101) is denied;
- as long as the number n of batteries (B1-B4) is equal to or greater than said first number i of batteries sufficient to allow the supply of electrical energy to the priority power user (102) and less than a second number k, greater than i, of batteries sufficient to allow the supply of electrical energy to the priority power user (102) and to the secondary power user (101), the supply of electrical energy to the priority power user (102) is authorised and the supply of electrical energy to the secondary power user (101) is denied;
- as long as the number n of batteries (B1-B4) is greater than said first number i of batteries sufficient to allow the supply of electrical energy to the priority power user (102) and greater than the number k of batteries sufficient to allow the supply of electrical energy to the secondary power user (101), the supply of electrical energy to the priority power user (102) and to the secondary power user (101) is authorised.

According to a further non-limiting aspect, the control unit is configured to allow the connection or disconnection of at least one battery of the plurality of batteries (B1-B4), in particular of one among the first battery (B1) and the second battery (B2), from the power supply circuit, without interruption of an electrical power supply provided to said at least one priority power user (102) and to determine a powering down or an electrical power supply of said secondary power user (101) in accordance with at least one value among an electrical power, charge, voltage or current, made available by the at least one battery connected to said power supply circuit.

According to a further non-limiting aspect, in use, following the disconnection of the at least one battery, the control unit (10) is configured to perform an automated electronic verification of whether at least one among an electrical power, charge, voltage or current, made available by the at least one battery connected to said power supply circuit is sufficient to power the at least one power user (101, 102) and/or the service power user (510), preferably the at least one among said priority power user (102) and said secondary power user (101), and is configured to perform, following said electronic verification, and in accordance with at least one value among an electrical power, charge, voltage or current, made available by the at least one battery residually connected to said power supply circuit, at least one among:
- an electronic limitation of a power which can be provided to said at least one power user (101, 102) and/or to said service power user (510), and/or of power absorbable by said at least one power user (101, 102) and/or by the service power user (510), preferably an electronic limitation of the power which can be provided to said priority power user (102) and/or said secondary power user (101), and/or of power absorbable by said priority power user (102) and/or by said secondary power user (101);
- said powering down of said secondary power user (101);
- a powering down of said priority power user (102);
- a powering down of the service power user (510);
optionally allowing an electrical power supply of at least itself, and of electrical control circuits of said priority (102) and/or secondary (101) power user.

According to a further non-limiting aspect, the power supply device (500) comprises at least one compartment (509) intended to contain at least one among said first battery (B1) and said second battery (B2).

According to a further non-limiting aspect, the control unit (10) is configured to allow the connection or disconnection of at least one battery of the plurality of batteries (B1-B4), in particular one among the first battery (B1) and the second battery (B2), from the power supply circuit of the at least one power output (503) and/or the service power user (510), without interruption of an electrical power supply provided to said at least one power user (101, 102) and/or the service power user (510) following an introduction or extraction of the first battery (B1) or the second battery (B2) from the respective compartment (509).

According to a further non-limiting aspect, the power supply device (500) comprises a plurality of power users (101, 102) comprising a priority power user (102) and a secondary power user (101), and/or the at least one service power user (510) identifies with one among said priority power user or said secondary power user.

According to a further non-limiting aspect, said control unit (10) is specifically intended to cause a selection and/or a limitation, in particular an electronic selection and/or limitation, of a maximum electrical power deliverable by each battery of the plurality of batteries (B1-B4).

According to a further non-limiting aspect, said control unit (10) is configured to transmit, in particular selectively and/or independently for each battery of the plurality of batteries (B1-B4), a power management signal to a switch, in particular a bidirectional power switch, of at least one battery selected among the batteries of said plurality of batteries (B1-B4).

In accordance with the present disclosure, a kit is disclosed comprising a power supply device (500) in accordance with one or more of the aspects disclosed herein and at least one battery (B1-B4), optionally a plurality of batteries (B1-B4).

According to a further non-limiting aspect, the plurality of batteries (B1-B4) is configured and specifically intended to be subjected to a charge and/or discharge control by means of the control unit (10) of the power supply device (500) in accordance with one or more of the aspects disclosed herein.

According to a further non-limiting aspect, at least part of the batteries of the plurality of batteries (B1-B4) is lithium.

According to a further non-limiting aspect, the control unit (10) is configured to electronically identify one or more of the batteries (B1-B4) installed on said power supply device (500), preferably to uniquely identify one or more of the batteries (B1-B4) installed on said power supply device (500).

According to a further non-limiting aspect, the control unit (10) is configured to transmit to a remote electronic device at least one data identifier of said one or more batteries (B1-B4), optionally electronically associated with a residual charge and/or voltage datum of said one or more batteries (B1-B4), preferably by means of said wireless interface module.

According to a further non-limiting aspect, the method comprises an electronic identification step of one or more of the batteries (B1-B4) installed on said power supply device (500), said identification step being a unique identification step of one or more of the batteries B1-B4) installed on said power supply device (500).

According to a further non-limiting aspect, the method comprises a step of transmitting to a remote electronic device at least one data identifier of said one or more batteries (B1-B4), optionally electronically associated to a residual charge and/or voltage datum of said one or more batteries (B1-B4), the transmission step occurring by means of said wireless interface module.

In accordance with the present disclosure, a computer program is also disclosed, comprising portions of software code; said computer program being configured to be executed by at least one control unit (10); said portions of software code causing, in use, the execution of one or more of the steps of the method according to one or more of the aspects disclosed herein.

### Figures

Some embodiments of that which forms an object of the present disclosure are disclosed below. The description refers to the appended figures, which relate to non-limiting embodiments; a brief disclosure of such figures is provided hereinbelow.
Figure 1 illustrates a schematic diagram of a power supply device in accordance with the present disclosure.
Figure 2 illustrates a first perspective view of a first embodiment of a power supply device in accordance with the present disclosure.
Figure 3 illustrates a second perspective view of the first embodiment of the power supply device.
Figure 4 illustrates a third perspective view of the first embodiment of the power supply device, in an open configuration.
Figure 5 illustrates a first perspective view of a second embodiment of a power supply device in accordance with the present disclosure.
Figure 6 illustrates a second perspective view of the second embodiment of the power supply device.
Figure 7 illustrates a third perspective view of the second embodiment of the power supply device, in an open configuration.
Figure 8 illustrates a perspective view of a third embodiment of the power supply device in accordance with the present disclosure.
Figure 9 illustrates a perspective view of a first accessory removably connectable to the power supply device when in the third embodiment.
Figure 10 illustrates a perspective view of a second accessory connectable to the power supply device when in the third embodiment.
Figure 11 illustrates a perspective view of a third accessory connectable to the power supply device when in the third embodiment.
Figure 12 illustrates a perspective view of the power supply device in the third embodiment and in which the third accessory is coupled to the aforesaid device.
Figure 13 illustrates a perspective view of a fourth embodiment in accordance with the present disclosure.
Figure 14 illustrates a perspective view of the fourth embodiment of the device in accordance with the present disclosure, in an open configuration and with an accessory coupled thereto.
Figure 15 illustrates a perspective view of the fourth embodiment of the device in accordance with the present disclosure, in a closed configuration and with a further accessory coupled thereto.
Figure 16 illustrates a circuit diagram of the control unit present on board the aforesaid power supply device.
Figure 17 illustrates a circuit diagram of a discharge management module of one or more batteries; the discharge management module is part of the control unit.
Figure 18 illustrates a circuit diagram of a battery, in which the presence of a control line is highlighted which allows the activation of a solid-state switch for enabling charging the cells contained in the battery.
Figure 19 illustrates a brief flowchart of a control related to enabling the activation of one or more power users.
Figure 20 illustrates a brief flowchart of a control related to a number of batteries needed to provide an activation of one or more power users.
Figure 21 illustrates a brief flowchart of a control related to a voltage and/or charge disparity control between two or more batteries.
Figure 22 illustrates a principle diagram of a charging circuit of a first battery and a second battery, in which there is a pair of bidirectional power switches.
Figure 23 illustrates a principle diagram of a discharging circuit, in which a first and a second battery supply a power user. Also in this case, there is a pair of bidirectional power switches.
Figures 24 to 28 illustrate possible circuit configurations which allow the aforesaid bidirectional power switch to be made.
Figure 29 illustrates in section a configuration of a casing housing an electronic board for the control of the batteries present on board the power supply device.
Figure 30 illustrates a first non-limiting embodiment of a current switch circuit, comprising a unidirectional power switch.
Figure 31 illustrates second non-limiting embodiment of a current switch circuit, comprising a unidirectional power switch.
Figure 32 illustrates a simplified diagram of a power switch circuit.
Figure 33 illustrates a time diagram of an electrical power absorbed by at least one power user, in which a control unit intervenes to cause a limitation of the maximum power deliverable by at least one battery connected to said at least one power user immediately when a maximum power value deliverable by said at least one battery is exceeded.
Figure 34 illustrates a time diagram of an electrical power absorbed by said at least one power user, in which the control unit intervenes to cause a limitation of the maximum power deliverable by at least one battery connected to said at least one power user only following a predefined time interval.

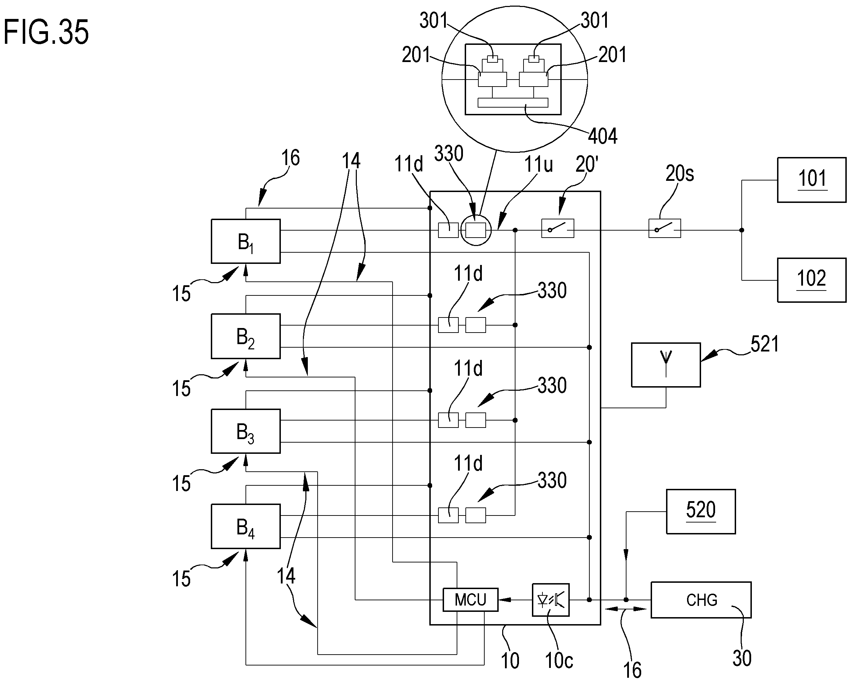

Figure 35 illustrates an overall circuit diagram of an embodiment of the control unit in which a plurality of unidirectional power switches are present.

### Detailed description

### The power supply device.

The present disclosure first describes a power supply device 500. Such a supply device 500 is configured to supply at least one power user 101, 102 of electrical type.

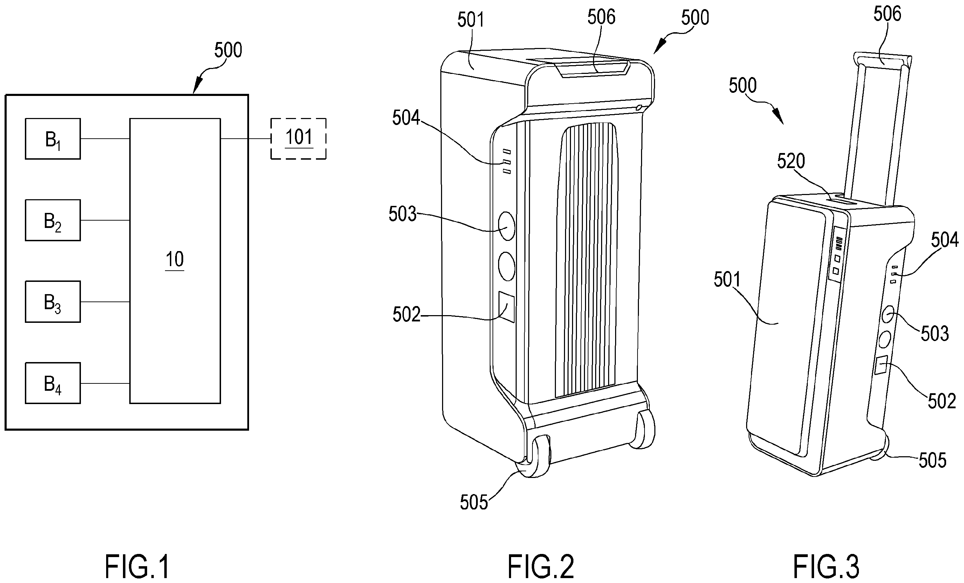

An embodiment of the power supply device 500 is schematically depicted in figure 1. In such an embodiment, the power supply device 500 comprises a plurality of batteries B1 - B4 and a control unit 10, which is operatively connected with the plurality of batteries B1 - B4, so as to control the discharging and/or charging thereof in accordance with the methods which will be described in greater detail below. The batteries B1 - B4 are modularly connected on the power supply device 500. As better clarified in the following description portion, this means that the batteries can be connected or disconnected individually or in a multiplicity, so as to provide a variable amount of electrical power available for powering one or more electrical-type power users.

Figures 2, 3 and 4 illustrate a first non-limiting embodiment of the power supply device 500. Such an embodiment in particular relates to a transportable device, i.e. intended to be able to be moved by a user. The power supply device 500 comprises a casing 501, which is substantially rectangular in shape, with chamfered corners.

Preferably, but not limitedly, the casing 501 is made of plastic material or fibreglass or a mixed material comprising (also in layers) a plastic material and a fibreglass. The use of plastic material allows to limit the overall weight of the casing 501, and therefore of the power supply device 500. Since the Applicant has devised the power supply device 500 to be used in applications in the external environment, the use of plastic material allows to reduce the risk of rust formation and places the electrical components contained within the casing 501 protected from at least sprays of dirt and water.

A particular embodiment for the casing 501 is characterized by protection against dust and heavy water spray or immersion, for example according to the degree of protection IP 56, or IP 66 or IP67.

On the casing 501, in particular on an accessible portion of said casing, a plurality of power outputs 503, in the form of a power outlet, and a charging inlet 502 are operatively arranged. The plurality of power outputs 503 and the charging input 502 are connected to the plurality of batteries B1 - B4 by means of the control unit 10. For the purposes of the present disclosure, "operatively accessible" means that the power outputs 503 are made accessible to a user during the normal use of the power supply device 500.

In a particular embodiment the power supply device 500 comprises a first and a second power output 503, respectively configured to power a respective first power user 101 and a second power user 102. In an embodiment, the power supply device 500 is configured to allow, in particular by means of the control imposed by the control unit 10, the alternative or combined selection of the activation of the first power output 503 and the second power output 503. The two power outputs are therefore independently controllable.

A plurality of low power outputs 504, in particular of USB type or similar, is provided on the casing 501 substantially near the power outputs 503.

The particular embodiment of the power supply device 500 illustrated in figures 2 and 3 is of trolley type, and is for this purpose provided with a plurality of wheels 505, in particular one pair of wheels. The wheels 505 are preferably configured to rotate independently and are positioned in a lower portion, particularly a lower angular portion, of the casing 501.

In order to promote the transportability of the power supply device 500, a handle 506 is slidably arranged with respect to the casing 501. The power supply device 500 comprises a first configuration in which the handle 506 is retracted within the casing 501 and a second configuration in which the handle 506 is extracted from the casing 501.

The handle 506 comprises a pair of longitudinal bars adapted to be introduced and extracted at least partially from the casing 501 and a crossbar (for example rubberised) arranged between the longitudinal bars, in particular substantially at said longitudinal bars.

In the latter configuration, the user grabs a crossbar of said handle 506 and drags the power supply device 500 on the ground causing a rotation of the wheels 505.

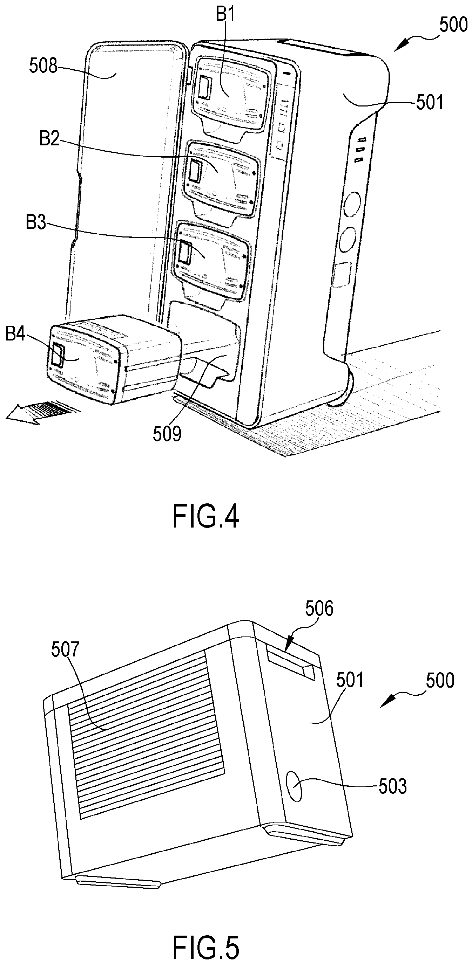

The power supply device 500 further comprises a door 508 which allows access to the plurality of batteries B1 - B4. In figure 3, the supply device 500 is depicted with a door 508 closed. In figure 4, on the other hand, the power supply device 500 is shown with the door 508 open and with a battery B4 extracted from a respective compartment.

The door 508 can also be made of plastic material and, in an embodiment, can be at least partially transparent or translucent, so as to allow the user to view the possible presence or absence of one or more of the batteries of the plurality of batteries B1 - B4 without necessarily opening the door itself. The door 508 is hinged substantially at one of its end sides. It can be opened and closed by rotation about the hinging axis.

In an embodiment, compartments 509 are made inside the power supply device 500 adapted to each contain a respective battery. Alternatively, there can be a single compartment capable of containing a plurality of batteries. Preferably, an embodiment of the power supply device 500 is characterized in that each of the compartments 509 has a cross-section whose shape substantially follows the shape of the battery. The compartments 509 are arranged in a single column. The compartments 509 are configured and specifically intended to allow the extraction of at least one battery, or of a plurality of batteries B1 - B4, by means of a substantially linear translation.

Although such a technical feature is not intended to be limiting, in an embodiment, each of the compartments 509 is uniquely identified so as to allow the battery installed therein to be uniquely identified. This is particularly useful where the power supply device 500 is provided with a feature for specifically identifying a non-functioning or discharged battery (see below in the description).

At the bottom of each compartment 509, or - in the case of a single compartment - at the bottom of the compartment 509, there is a power connector which in use couples with at least one pair of terminals present on the respective battery. Such terminals are those which, in use, provide electrical energy to one or more of the power users.

The door 508 comprises a closed configuration, in which it prevents access to the compartments 509, and an open configuration in which access to the compartments 509 is possible for the user. In the closed configuration, the door 508 determines an insulation of the compartments from at least sprays of water and/or dust. The door 508 can comprise a gasket which allows to provide adequate insulation to the compartments 509. The Applicant notes that more generally the door 508 can be configured to allow or prevent access to an internal cavity of the casing 501, not necessarily corresponding to one of the compartments 509.

An alternative embodiment of the power supply device 500 in accordance with the present disclosure is illustrated in figures 5, 6 and 7. Also in this case, at least one power output 503 and one charging input 502 are present on the casing 501. The features and materials of the casing 501 have already been described and therefore are not repeated.

The embodiment of figures 5 to 7 is free of wheels, and is made to be carried by hand by the user by lifting. The casing 501 assumes a substantially box-like shape, and is provided with a first and a second handle 506. Preferably the first and the second handle 506 are arranged in an opposite manner, and preferably are positioned at an upper portion of the casing 501. Said first and second handle 506 are made by means of a recess made on the body of the casing 501. Although in figures 5 to 7 the at least one power output 503 is positioned on a side wall, this is not to be construed in a limiting manner. In fact, in an alternative embodiment, the power outlet 503 can be positioned at an upper portion, in particular at the upper wall (orthogonal with respect to the side walls) of the casing 501.

The side walls, or a bottom part, can preferably end with a pair of feet or with a set of three or four feet, aimed at keeping the bottom wall raised from the ground. In a non-limiting embodiment, the feet are substantially linear in type and extend for at least half, preferably at least 2/3 of the extension of at least one of the side walls.

Figure 5 illustrates a particular embodiment in which a first foot is formed in a single piece on the side wall or bottom wall of the casing 501, and a second foot is formed in a single piece on the side wall or bottom wall of the casing 501.

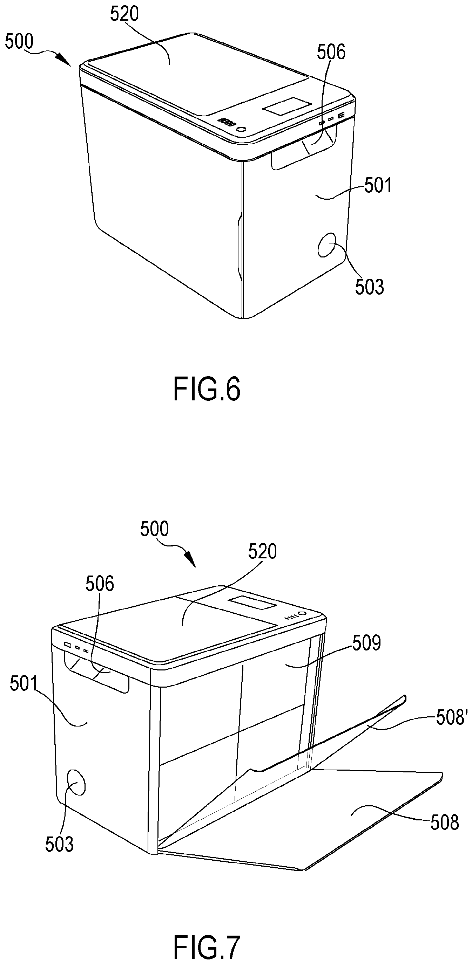

The embodiment shown in figures 5 to 7 is also provided with a door 508. In figure 6 the door 508 is in a closed configuration; in figure 7 the door 508 is in an open configuration.

In particular, it is noted that the door 508 is associated with a counter-door 508' which is interposed in use between the compartments of the batteries B1 - B4 and the door 508. As in the case of the embodiment of figures 2 to 4, also in this case the door 508 is hinged so as to rotate at its end side. Also in this case, the door can be transparent or translucent.

In the embodiment of figures 5 to 7, the plurality of compartments is arranged on two columns, and more generally can identify a sort of matrix or grid pattern.

The Applicant notes that the rotatable door 508 is only one of the possible embodiments of the door actually conceived. In fact, the Applicant has conceived further variants of the door 508 which instead of being hinged at one side thereof can for example be configured to slide relative to the casing 501 along a substantially axial direction (preferably in vertical use). In this case, the door 508 can be completely disconnected from the casing 501, and is provided with a pair of guides preferably arranged on two parallel and opposite sides of the same device. In a non-limiting embodiment, the door 508 is made by moulding, in particular by injection or co-moulding, and the guides are integral on the body of the door itself. Moreover, the door 508 can be mounted on brackets which allow a rototranslational movement relative to the casing 501.

Although this is not to be understood in a limiting manner, in an embodiment there can be slits on the casing 501 which allow to provide a controlled air exchange with the internal cavity of the casing itself and in particular with one or more of the battery compartments. In combination with such slits, or alternatively, at least one fan can be present. Furthermore, the dissipation of the heat generated in use by the at least one battery present on board the power supply device 500 and/or by the control unit 10 can occur by means of dissipation by irradiation. In such a case, suitable metal heatsinks can be present substantially at at least one portion of the casing 501.

### Particular embodiments with service power user.

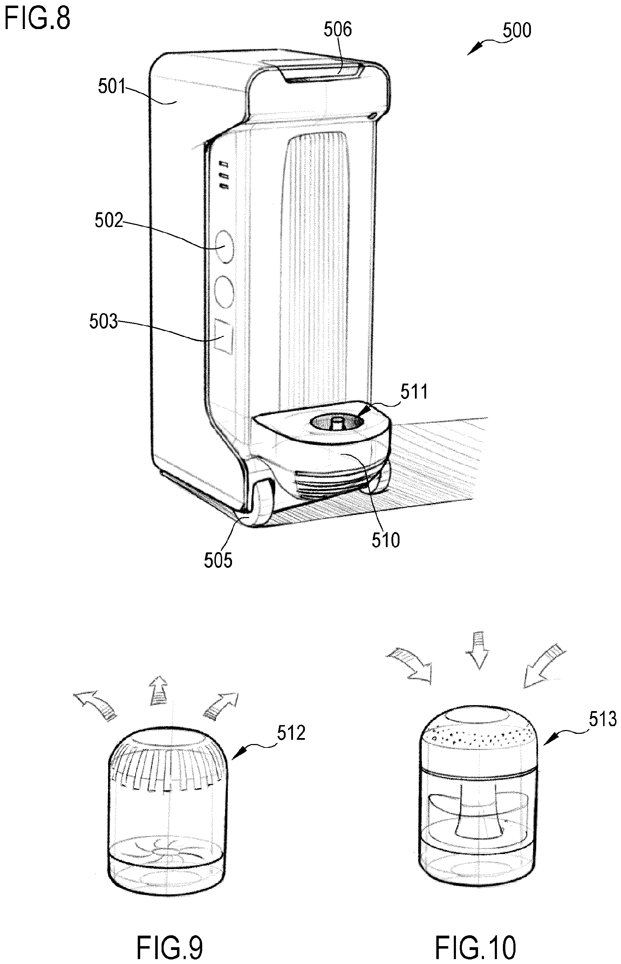

Figure 8 illustrates a particular embodiment of the power supply device 500 in accordance with the present disclosure. Such an embodiment substantially resumes that of figures 2 to 4. However, in this embodiment there is a service power user 510, which comprises at least one electric machine. In an embodiment, said electric machine comprises an electric motor. The electric machine, in particular the electric motor, is configured to provide driving force to at least one accessory 512, 513, 514 removably connectable to the power supply device at the casing 501.

For the purposes of the present disclosure, "driving force" means a force of a mechanical or electrical nature capable of promoting a movement of a body; in particular, in an embodiment, "driving force" means a mechanical force of rotation or translation or a combination of rotation and translation.

In an embodiment, the at least one accessory 512, 513, 514 is an accessory of the passive type or free of electrical components, in particular free of power electrical components. Such an accessory can include small electrical circuits intended to receive or transmit electrical signals of any nature for applications or purposes other than the primary purpose for which the accessory is intended. For example, the accessory can be a fan mechanically powered by the service power user 510, and can be provided with an RFID chip.

In an alternative embodiment or in combination with the above, the at least one accessory 512, 513, 514 can be an active accessory or with electrical components, capable of transforming in any manner an electrical energy for the purpose for which the accessory itself is conceived and/or substantially intended. For example, such an accessory can be a cooler and be provided with a Peltier cell, in particular as the only cooling or heat exchanger element.

The Applicant notes that figure 8 illustrates an embodiment in which a power output 503 is present, and such an embodiment is therefore configured to allow the power supply of at least one further power user 101, 102. It is noted here that the Applicant has also conceived a particular embodiment of the power supply device 501, without power outputs 503; this embodiment is therefore exclusively intended to power the service power user 510.

Preferably, such an electric motor is a direct-current electric motor; this is convenient since the batteries B1-B4 supply a direct voltage. The electric motor can be of the radial flow or axial flow type.

In a preferred but non-limiting embodiment, the service power user 510 is arranged at substantially one end portion of one side of the casing 501 and is arranged so as to be readily accessible.

The electric motor is enclosed by the casing 501 but a shaft 511 is accessible, connected to the electric motor, which allows the actuation - in particular the actuation in rotation - of one or more accessories which will be better described in the following description portion.

In the embodiment of figure 8, it is noted that when the power supply device 500 is left in rest configuration and rests entirely on the ground, the shaft 511 extends substantially vertically and therefore rotates about a substantially vertical axis thereof.

In a non-limiting embodiment, the shaft is arranged at a connector of the power supply device 500, which allows the aforesaid one or more accessories 512, 513, 514 to be coupled. Such a connector is in particular a proprietary type connector. Such a proprietary connector in the embodiment of figure 8 is of recessed type, but this is not to be understood in a limiting manner. The connector, which has its own end profile, is configured to maintain the shaft 511 within the end profile, optionally in a recessed position. This allows to reduce the risk of unwanted contact with the shaft 511 and promotes the reduction of accidents even if such a shaft 511 is operated in rotation without the coupled accessory 512, 513, 514.

The removable coupling which is made between the connector and the accessory does not require tools; thanks to this technical feature it is possible to easily and quickly replace one or more accessories on the connector. In particular, the connector is configured to retain the at least one accessory 512, 513, 514 in a predefined, in particular fixed, position with respect to the casing.

The removable connection which is created between the power supply device 500 and the respective accessory 512, 513, 514 at the connector can advantageously be a snap and/or screw type connection, and/or bayonet and/or with translation, preferably linear.

Figure 9 illustrates a first accessory, in particular a fan 512. The fan 512 comprises a fan enclosed in a casing e.g., made of plastic material. Such a casing can be at least partially transparent. The casing is provided so as to protect the user from intercepting one or more portions of the fan when in rotation. The fan 512 is in particular an axial fan. The casing is provided with a plurality of slits from which the air pushed by the fan exits in use. The fan preferably pushes the air from the bottom to the top.

The fan is provided with a spindle (counter-shaft) which engages the shaft 511 of the service power user 510 when the accessory is removably coupled to the connector.

Figure 10 illustrates a second accessory, in particular an aspirator. The aspirator 513 also comprises a fan enclosed in a casing for example made of plastic material. Such a casing can be at least partially transparent. The casing is provided so as to protect the user from intercepting one or more portions of the fan when in rotation. The fan of the aspirator 513 identifies an axial-type aspirator. The casing is provided with a plurality of slits from which the air pushed by the fan exits in use. The fan sucks the air preferably from the bottom upwards.

In an embodiment, the aspirator 513 comprises a filter, for example a paper or activated carbon filter, useful for the purpose of filtering the air from impurities, microorganisms, bacteria, fungi, or mould. The casing is in this case preferably openable so as to allow the replacement of the filter.

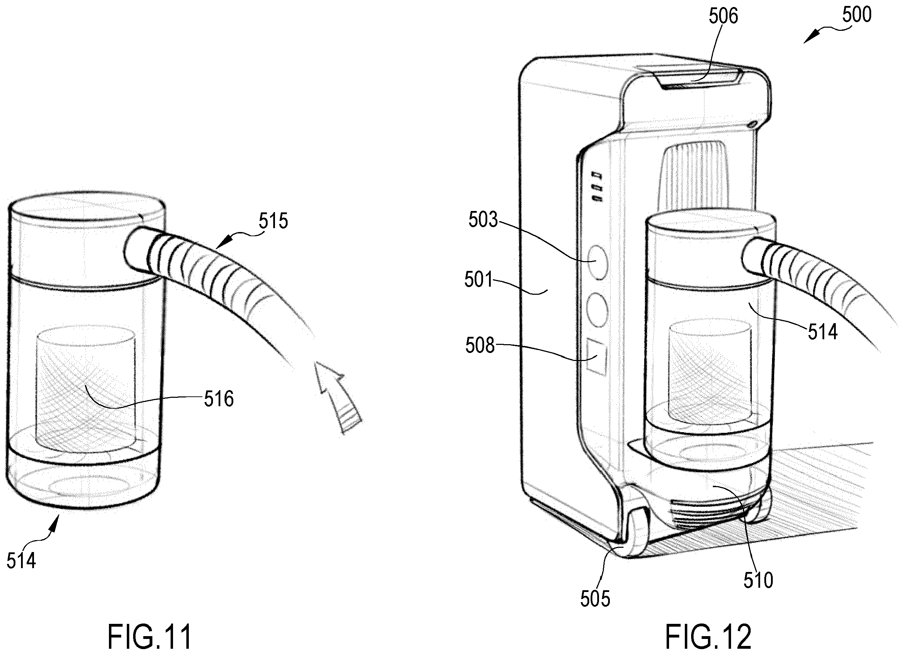

Figure 11 illustrates a third accessory, in particular a vacuum cleaner 514. The vacuum cleaner 514 comprises a fan enclosed in a casing for example made of plastic material. Such a casing, as in the case of the other two accessories described above, can be at least partially transparent. The casing is provided so as to protect the user from intercepting one or more portions of the fan when in rotation.

The vacuum cleaner comprises a corrugated tube 515 which for the purposes of the present disclosure forms a suction inlet. The corrugated tube is connected 515 at an upper-side portion of the casing.

Within the casing there is a filter 516 which is operatively interposed between the fan and the corrugated tube 515, so that it is possible to filter the air sucked by the fan before it contacts the fan itself. The casing therefore defines a dust collection cavity, which is retained therein thanks to the action of the filter. Such a filter is preferably of known type and therefore its technical features are not described here. In an embodiment, the arrangement of the connection of the corrugated tube 515 with the casing and/or suitable flow diverters can result in a substantially cyclonic air flow within the casing.

The fan is also in this case located in the lower portion of the vacuum cleaner, and is provided with a spindle which couples with the shaft 511.

Figure 12 illustrates a configuration in which the vacuum cleaner 514 is connected to the power supply device 500.

In use, a user activates - by means of a power command - the power supply of the service power user 510 and part of the electrical energy stored in at least one of the batteries of the plurality of batteries is supplied to the motor of the service power user 510 upon the control performed by the control unit 510.

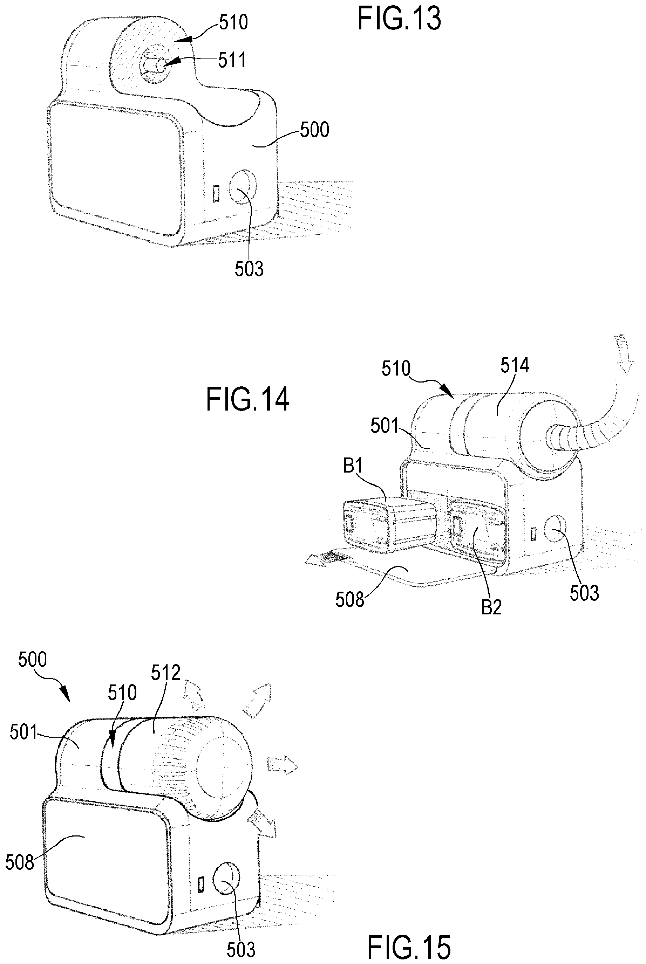

Figures 13, 14 and 15 illustrate a further embodiment of the power supply device 500 in accordance with the present disclosure. Unlike that described above, this embodiment has a service power user 510 which is arranged in a substantially upper portion of the casing 510. Figure 13 clearly shows the shaft 511 which is accessible at the recessed connector of the service power user 510.

Figure 14 illustrates the power supply device 500 provided with a vacuum cleaner 514 connected to the service power user 510. The vacuum cleaner 514 has features similar to those of the vacuum cleaner of figures 11 and 12, and therefore such features are not repeated again. It is noted, however, that the vacuum cleaner 514 illustrated in figure 14 has a substantially axial inlet of the corrugated tube 515 with respect to the fan, and is positioned at a top of the head portion of the casing. Figure 14 illustrates a particular configuration of the power supply device 500 in which the door 508 is opened and one (the battery identified by reference B1) of the two batteries B1-B2 which contribute to powering the at least one power user 101, 102 and/or the service power user 510, is partially extracted from the respective seat.

Figure 15 illustrates an embodiment of the power supply device 500 in which a fan 512 is connected to the service power user 510. The features of the fan have already been described and are therefore not repeated here.

The type of accessories illustrated in the accompanying drawings is not to be construed as limiting, in particular, in fact, further accessories can be connected to the service power user 510; a non-exhaustive list of such accessories is provided below:
- refrigeration machinery, including fluid compressor and/or Peltier cell refrigeration machinery,
- heating devices, such as for example hair dryers, small ovens, plates for heating food by induction;
- actuators configured for drilling (drills), and/or cutting (saws) and/or sanding (sanders) and/or bending, and/or lifting, and/or for generating electric current (alternators) and/or compressing fluids (air compressors, fluid pumps, for example self-priming pumps for gardening applications);
- scintillators.

In a particular embodiment, the accessory 512, 513, 514 comprises at least one identification chip, which contains electronic data identifying at least one feature of the accessory 512, 513, 514. Preferably, but not limitedly, the identification chip is of the wireless type; in a preferred embodiment the chip is of the passive type; alternatively the chip can be of the semi-active or active type.

The use of such a chip allows to more easily detect any malfunctions of the accessory itself, simply by analysing the behaviour of voltage and/or current absorption, therefore analysing the absorption of electrical power by the electric motor of the service power user 510.

### Malfunction identification module.

In a specific embodiment, the power supply device 500 comprises an identification module, preferably contained within the casing 501 or near an outer surface of the casing 501. The identification module is electrically (or more generally operatively) connected to the control unit 10.

The identification module is configured to receive data of at least one feature of the accessory 512, 513, 514, so as to be able to detect suddenly, by analysing the voltage and/or current absorption behaviour, thus analysing the electrical power absorption by the electric motor of the service power user 510, if the accessory 512, 513, 514 has a malfunction (e.g., fan seizure).

Preferably, the identification module operates according to a wireless technology, and for this reason, also so as to contain the transmission power needed to interrogate the identification chip of the accessory 512, 513, 514, it is arranged substantially at the service power user 510.

The identification module is configured to transmit at least part of the data of the at least one feature of said accessory 512, 513, 514 received by the chip to the control unit 10. The latter is configured to electronically detect any malfunctions of said accessory 512, 513, 514 by electronically comparing, optionally substantially in real time, current and/or electrical voltage absorption data by said at least one service power user 510, with said data of said at least one feature of said accessory 512, 513, 514.

### Power supply of the power output.

In an embodiment, the power output 503 is configured to provide a direct voltage. Alternatively, the power output 503 is configured to provide an alternating voltage. In the latter case, the power supply device 500 will comprise an inverter. Preferably, such an inverter is arranged downstream of the control unit but the power output 503 is still operatively arranged between the plurality of batteries B1 - B4. The purpose of the inverter is to provide on such an output an almost sinusoidal voltage (e.g., modified sinusoidal), preferably at 110 V or 115 V or 220 V or 230 V or 240 V, sufficient to power one or more tools of known type, such as drills, hair dryers, small stereophonic diffusers, televisions, lamps, gardening tools, electric pumps, electric heaters, etc. The alternating voltage generated on the power output 503 is therefore intended to allow the power supply of traditional tools supplied with domestic mains voltage.

Some non-limiting examples of gardening or farming tools can be electro-actuated shears, mowers, sprayers, chainsaws, hedge trimmers, bio-grinders, blowers, aspirators, snow blowers, pressure washers.

The technical features of the inverter are not described herein, since such an inverter can conveniently be an inverter of known type.

However, preferably, the inverter installed on board the power supply device 500 can advantageously be provided with a control terminal useful for controlling the activation or deactivation of the inverter itself. Disabling the inverter itself causes a behaviour substantially similar to an open circuit, with no transmission of electrical power to the at least one power output 503.

### Wireless interface module.

In a preferred, but non-limiting, embodiment, the power supply device 500 of the present disclosure comprises a wireless interface module 521. Such a wireless interface module 521 is configured to operatively interface with a remote electronic device, such as for example a laptop computer, a cellular phone, a tablet computer, a remote server.

In a preferred embodiment, the wireless interface module 521 is a radio module, which operates according to standardized communication protocol, e.g., Bluetooth, IEEE 803.11, Bluetooth, ZigBee, WiMax; alternatively or in combination, the wireless interface module 521 operates according to one or more proprietary communication protocols.

The wireless interface module 521 is configured to receive and/or transmit, respectively from and/or to the remote electronic device, usage and/or control and/or alarm data which are associated with the operation of the power supply device 500 itself, the control unit 10 and/or one or more of the batteries of the plurality of batteries B1 - B4 when installed on board. The transmission and reception occurs in selective mode, i.e., specifically intended for a selected number (e.g., one) of remote electronic devices.

Conveniently, a software program can be developed which can be installed on the remote electronic device, so that the user can view the data received by the wireless interface module 521, interact there with and, through the software program, transmit control and operation alteration data to the wireless interface module 521.

The usage and/or control and/or alarm data which is received and/or transmitted by the wireless interface module 521 comprises at least datum among power, energy, residual charge, voltage, current absorbed by one or more of the batteries of the plurality of batteries B1 - B4, charging or power supply operating configuration of one or more of the power users 101, 102, temperature of one or more of the batteries of the plurality of batteries B1 - B4, exclusion and/or lack of one or more of the batteries of the plurality of batteries B1 - B4.

A specific embodiment of the power supply device 500 described herein is characterized in that it has a software control function of activating or deactivating the power supply of the at least one power output 503 and/or the service power user 510. The software control is performed by the user by means of their remote electronic device and a control signal (datum or command) is received from such a remote electronic device by means of the wireless interface module 521. By virtue of this function it is possible for example to disable the power supply of the power output 503 leaving the power supply device 500 near children, avoiding the risk that they can suffer electrical shocks deriving from contact with the powered power output 503 or can introduce their hands near the shaft 511 of the service power user 510.

The software control function causes the closing or opening switch of one of the power switches which will be better described in the following portion of the description. Preferably, but not limitedly, the software control function of activating or deactivating the power supply of the at least one power output 503 and/or the service power user 510 has a higher hierarchy with respect to a manual or electronic control which can be performed on the power supply device 500 itself. In an embodiment, the control unit 10 can be configured to enable or disable the software hierarchy control function of the activation or deactivation of the power supply of the at least one power output 503 and/or the service power user 510. When disabled, one control which can be performed directly on the power supply device 500 has a hierarchy which is greater than or equal with respect to controls which can be performed remotely.

### Sensors.

The Applicant has conceived a particular embodiment of the power supply device 500 which is provided with at least one, preferably a plurality of, environmental sensors. The following environmental sensors have been indicated by the Applicant as sensors which can be installed on the power supply device: a temperature sensor, a humidity sensor, a light or solar radiation sensor, a barometric pressure sensor. Such sensors are specifically designed to detect environmental parameters substantially at the power supply device 500. The solar radiation sensor can be a light radiation sensor or can be a UV type sensor.

In an embodiment, there is a logical connection between the wireless interface module 521 and said at least one environmental sensor. Thereby, the use and/or control and/or alarm data can comprise temperature and/or humidity and/or brightness and/or barometric pressure data obtained from one or more of the environmental sensors.

On the basis of such data, operations such as the deactivation of the power output 503, or the activation of the power output 503, or the activation or deactivation of the service power user 510 can optionally be decided automatically by the control unit 10.

As will be better clarified in the following portion of the disclosure, in fact, an embodiment of the control unit prefers, in particular in the event of limited power available from the batteries, the power supply of the priority power user 102. Also for the purposes of the present disclosure, the electronic control unit intended to control the aforesaid motor is in turn considered a priority power user. Such a control unit is in particular configured and specifically intended to determine at least one among a power supply, a powering down, and a power delivery, of said at least one traction motor.

### Charging module for tools.

Preferably, but not limitedly, the power supply device 500 can comprise a charging module for tools, in particular for tools for agriculture or gardening which are self-propelled and/or have at least partially automated control. For example, such tools for agriculture or gardening comprise lawnmower robots.
In a preferred embodiment, the charging module for tools is a wireless charging module.

The charging module for tools is operatively connected to the at least one battery B1 and when present is connected to said plurality of batteries B1-B4.

The charging module for tools is configured to receive, in use, electrical energy from said at least one battery B1, and if present and/or available to power more than one battery of the plurality of batteries B1-B4 and is configured to transfer said electrical energy to a tool, in particular to said tool for agriculture or gardening which is self-propelled or has at least partially automated control, when the latter tool comes into contact with at least one contact present on the tool charging module and/or when said tool is substantially near the tool charging module itself. Advantageously, therefore, the power supply device 500 can act as a charging device intended to allow the power supply of - for example - lawnmower robots, while at the same time allowing the power supply of further power users in a modular and operationally flexible manner.

### Modularity with further power supply devices.

In order to make the power supply device 500 even more flexible in its use, the Applicant has devised a particular embodiment of the power supply device 500, described below. It comprises at least one parallel power supply input, configured to allow, in use, a modular operating connection of said power supply device 500 with at least one further power supply device 500.

Such a parallel power supply input is made operatively accessible by the user and is positioned at an easily accessible portion of the casing 501, for example it is positioned near the at least one power output 503. In an embodiment, such an input is at least visually differentiated from said power output 503.

The parallel power input is configured to power said service power user 510 and/or said at least one power user 101, 102 with an electrical energy from at least one battery B1 among the batteries present on board the power supply device 500, and, simultaneously, with an electrical energy from at least one battery of said further power supply device 500.

That is, by means of the parallel power input, the batteries of the two or more power supply devices 500 are operating in parallel. Their currents available to the power users are summed, ideally.

Although this technical feature is not to be interpreted in a limiting manner, in an embodiment the parallel power supply input is connected downstream of the control unit 10 and therefore directly upstream of the one or more power users (first and/or second power users 101, 102, therefore directly upstream of the at least one power output 503, or directly upstream of the electric machine of the service power user 510); in particular it is downstream of the power switch 20s or, in any case, downstream of the last of the controls of safety and/or limitation of the power deliverable by one or more of the batteries. Thereby, if more than one power supply device 500 is connected in parallel and has one or more of the control and/or limitation features described herein, these features will also be maintained following the interconnection of more than one power supply device 500 in parallel.

### Auxiliary power supply sources.

A further non-limiting embodiment of the power supply device 500 comprises at least one photovoltaic cell panel 520.

The photovoltaic cell panel 520 is arranged substantially at the casing 501 and/or is movably, optionally removably, connectable to the casing 501, for example by means of a bracket or an adjustable and in particular flexible support.

The photovoltaic cell panel 520 is configured to provide an electrical energy intended for the at least partial charging of the at least one battery B1, preferably intended for the at least partial charging of at least one part of the plurality of batteries B1-B4, if any, and/or intended for the power supply of the service power user 510 and/or the at least one power output 503. The photovoltaic cell panel 520 can thus optionally be connected by means of the control unit 10, to the at least one power output 503 and/or to the service power user 510, by means of for example a voltage transformer or a voltage regulator.

From the operating point of view, the photovoltaic cell panel 520 can be operatively connected downstream of the output of the power supply 30. Thereby, the controls made available by means of the control unit 10 for charging the batteries, described in the present description, are kept unchanged. It is noted in particular that the power supply provided by the photovoltaic cell panel 520 is also combinable with that of the power supply 30. In other words, these two devices can cooperate together to provide power at least for charging the one or more batteries present on board the power supply device.

There is therefore a particular operating configuration for charging the at least one battery B1, and if present the plurality of batteries B1-B4. In such a particular charging configuration, the power supply 30 and the photovoltaic cell panel 520 cooperate together to provide electrical energy intended for charging one or more batteries.

A particular embodiment of the power supply device 500 described herein has a control unit 10 specifically configured to allow the charging of batteries and the power supply of power users substantially simultaneously. Such a particular embodiment the photovoltaic cell panel 520 and the power supply 30 cooperate to charge a first part of the plurality of batteries B1-B4 which is installed on the power supply device 500, and to power, by means of a second part of the plurality of batteries B1-B4 distinct from the first part of the plurality of batteries B1-B4, at least one among the service power user 510 and the at least one power user 101, 102, in particular by means of the at least one power output 503. The first and/or the second part of the plurality of batteries B1-B4 can also comprise only a single battery. The Applicant notes that the specific configuration of the control unit 10 described herein, which is reflected in a specific operating configuration of the power supply device 500, is also applicable to embodiments of the power supply device 500 without the service power user 510, and therefore exclusively intended to allow the power supply of at least one power user 101, 102 through one or more of the power outputs 503.

### Hot swaps.

In a particular and non-limiting embodiment, the batteries B1-B4 can be removed or inserted "hot". This means that in an embodiment it is possible to extract, or insert, at least one of the batteries B1-B4 of the power supply device 500 without needing to have a complete powering down thereof, and/or (when charging) without needing to disconnect a power supply necessary for their charging. When the power supply device 500 is configured to simultaneously power a plurality of power users of which a first is a priority power user and a second is a secondary power user, the removal or insertion of one or more batteries can be possible without the need to power down at least the secondary power user 101. The priority power user 102 will be kept electrically powered within the limits of the power deliverable by the connected battery (or, if multiple, by the connected batteries). By virtue of this aspect, the operating flexibility is increased.

In particular, the Applicant has conceived a particular embodiment of the control unit 10 which is configured to be operatively connected with at least one power user 101, 102 preferably through a respective first and second power output 503 and with the plurality of batteries B1-B4, and in particular to be operatively connected with at least one among a first battery B1 and/or a second battery B2 forming part of the plurality of batteries B1-B4.

Clearly the plurality of batteries, and in particular the first battery B1 and the second battery B2 are installed on board the power supply device 500, and are intended to power, at least in part, said at least one power user 101, 102, by means of the at least one power output 503, in particular by means of a power supply circuit connected with the at least one power output 503 and configured to withstand the electrical current absorbed by the at least one power user 101, 102. Where present, clearly the first battery B1 and the second battery B2 are intended to power the service power user 510.

The control unit 10 is configured to allow the connection or disconnection of at least one battery of the plurality of batteries B1-B4, in particular of one among the first battery B1 and the second battery B2, from the power supply circuit, without interrupting the power supply provided to the at least one power user 101, 102 and/or without interrupting the power supply provided to the service power user 510.

In particular, the control unit 10 is configured to allow the connection or disconnection of said at least one battery without interrupting the electrical power supplied to the priority power user 102 and to the secondary power user 101, in the latter case if possible in accordance with the availability of charge and/or power or electrical power deliverable by the batteries.

In particular, to avoid causing malfunctions or failures, the control unit 10 comprises a stage of filtering and/or limiting voltage and/or current peaks and/or drops, executing, in use, a filtering and/or limiting of voltage and/or current peaks and/or drops, upstream of the at least one power output 503, and therefore upstream of the at least one power user 101, 102 and/or upstream of the service power user 510.

In a particular non-limiting embodiment, following the disconnection of a battery, the control unit 10 is configured to perform - through its own electrical circuits or in accordance with one or more software routines executed thereby - an automated electronic verification of whether at least one among an electrical power, charge, voltage or current, made available by the at least one battery installed on board the power supply device 500 is sufficient to power the at least one power user 101, 102 and/or the service power user 510.

In particular, in embodiments which envisage a distinction between a priority power user and a secondary power user, such an electronic verification is intended to allow to verify whether at least one among an electrical power, charge, voltage or current, made available by the at least one battery installed on board the power supply device 500 is sufficient to power the at least one among the priority power user 102 and the secondary power user 101.

The control unit 10 is then configured to perform, following said electronic verification, and in accordance with at least one value among an electrical power, charge, voltage or current, made available by the at least one battery residually connected to the power supply circuit, at least one among:
- an electronic limitation of a power which can be provided to the at least one power user 101, 102 and/or to the service power user 510 and/or of power absorbable by the power user 101, 102 and/or by the service power user 510, preferably an electronic limitation of the power deliverable to the priority power user 102 and/or the secondary power user 101, and/or of power absorbable by the priority power user 102 and/or the secondary power user 101;
- the powering down of the secondary power user 101;
- a powering down of the priority power user 102;
- a powering down of the service power user 510.

Optionally, the control unit 10 is intended to maintain an electrical power supply of at least itself, and of electrical control circuits of the priority 102 and/or secondary power user 101.

### Battery technology.

In principle, the batteries B1-B4 can be made according to any technology. However, in a particular and non-limiting embodiment, the batteries are of the lithium type. This ensures significant compactness in relation to the overall capacity.

Preferably, but not limitedly, the batteries B1-B4 are of the same type, in particular they - each - have a same capacity (Ah) and/or a same voltage (V).

The batteries B1-B4 are connected in parallel and provide power to one or more of the power users 101, 102 provided through one or more of the power outputs 503. Clearly, when one or more of the batteries of the aforesaid plurality is electronically excluded from the power supply due to a control imposed by the control unit 10, the number of batteries operating in parallel will be consequently reduced.

The fact of having batteries B1-B4 in parallel implies that the voltage which is supplied to the power users is the voltage of each of the batteries B1-B4, while the total current deliverable to such power users is - ideally - the sum of the maximum currents that deliverable by each of the batteries B1-B4. The discharging of the batteries in parallel essentially determines a balanced discharging of all the batteries B1-B4 installed on board the power supply device 500.

In a preferred but non-limiting embodiment, each of the batteries B1-B4 is configured and specifically intended to provide a maximum voltage substantially between 20V and 80V, more preferably substantially between 22V and 48V.

Such batteries B1-B4 also power any other low-power utility with which the power supply device 500 is provided; for example, the batteries B1-B4 power low-power outputs such as USB ports or the like, or small LED lights which are provided on the power supply device 500. In addition, the batteries B1-B4 can be designed to power one or more fans which are arranged inside the casing 501 for cooling the electronic circuits and the batteries.

The batteries B1-B4 are configured to be transported operationally. For the purposes of the present disclosure, this implies that the batteries B1-B4 are not to be understood as batteries intended to remain inside and above all hidden, from the access of a normal user; on the contrary, they are batteries specifically designed to be able to be handled by a user traditionally intended to operate with the power supply device 500; the casing of the batteries is for this purpose intended to isolate the user from accesses to live portions, and is designed for the purpose of being handled safely, in particular during the handling operations necessary for the introduction and extraction of the batteries from the respective compartments inside the casing 510. Therefore, for this reason, the batteries B1-B4 each comprise a casing adapted to be transported and/or stored and/or handled by a user. The at least one cell 43 is clearly positioned inside said casing. The casing of the batteries B1-B4 allows a sufficient level of protection IP, preferably equal to or greater with respect to that guaranteed by the casing 501 of the power supply device 500.

The supply switch 44 which will be better described in the following description portion is positioned inside the battery casing, and each battery of the plurality of batteries B1-B4 comprises a connector, accessible at an end portion of the casing and configured to be removably connected with a counter-connector arranged inside the casing 501 of the power supply device 500.

### Control unit.

As already anticipated above, the power supply device 500 described herein is provided with a control unit - indicated by the reference number 10 - which is intended to control the charging and discharging of the batteries B1-B4.

The control unit 10 disclosed herein can comprise various electronic data processing and/or programmable circuits, including a processor of the general purpose type, or an ASIC, or an FPGA, or a PLC, each of which can be programmed with a specific software program loaded onto an integrated memory or operatively accessible by the control unit 10. Such a software program can therefore comprise portions of code which when executed cause the execution of one or more of the steps of the method disclosed herein.

The control unit 10 can comprise several physical sub-portions, each positioned in a different position within the casing 501 of the power supply device 500, where this is convenient for reasons of production convenience, energy efficiency and/or safety.

The control unit 10 is specifically configured and intended to be interposed in use between the plurality of batteries B1-B4 and at least one power user 101, 102 connected to the power supply device 500, and thus to be operatively interposed in use between the batteries B1-B4 and the at least one power output 503 and/or, where present, the service power user 510.

The control unit 10 has a particular configuration of use which determines, in the use of the power supply device 500, the execution of a plurality of steps of a management method for charging and discharging the aforesaid batteries B1-B4 as well as controlling the modes with which the power users 101, 102 and/or with which the service power user 510 is electrically powered.

The present detailed disclosure will not always distinguish between the method and the configurations of use of the control unit 10; this, in order not to become excessively long. It is understood that where a particular configuration is specified for the control unit 10, such a configuration will clearly be equivalent to one or more corresponding steps of a management method for charging and/or discharging one or more batteries, and vice versa.

### Charging operating configuration.

The control unit 10 firstly comprises a charging operating configuration. In the charging operating configuration, the control unit 10:
- selects at least a first part B1 of the plurality of batteries B1-B4, enabling the charge thereof;
- causing a selective charging, by a power supply 30 of the first part B1 of the previously selected plurality of batteries B1-B4.

Subsequently, in the charging operating configuration, the control unit 10 selects a second part B2-B4 of the plurality of batteries, enabling the charge thereof, and causes a selective charging, by the power supply 30, of the second part B2-B4 of the plurality of batteries B1-B4.

More specifically, in a first embodiment the first part B1 of the plurality of batteries is a single battery. This means that while the charging of the batteries B1-B4 occurs on one battery at a time, or, for example, in groups of two, in the discharge process following the power supply of the power users 101, 102 and/or of the service power user 510, preferably all the batteries of the aforementioned plurality compete together. The control unit 10 is therefore configured to execute a sequential charging of each of the batteries forming said plurality of batteries B1-B4.

In an embodiment, the control unit 10 is configured and specifically intended to cause a charge of each battery of the plurality of batteries B1-B4 with CCCV mode (constant current, constant voltage). At the beginning of its charge (i.e., starting from a nearly discharged battery configuration), each battery is charged with a constant current, the value of which is established by the control unit. A threshold voltage value is stored in a memory of the control unit 10, or in a memory operatively accessible thereby; when such a threshold voltage value is exceeded, a progressive reduction of the charging current of the battery is determined, up to substantially an ideal value of zero, which substantially corresponds to a full charge.

In an embodiment, in which the control unit 10 selects one battery at a time, among the plurality of batteries B1-B4, the total charging time T_{ch} necessary to charge all the N batteries of the plurality of batteries is given by T_{ch} =N*T_{b}, where T_{b} is the time necessary to charge a battery.

At least one battery of said plurality of batteries B1-B4 can be removed without compromising the operation of the power supply device 500; said battery, when removed (and charged) can be favourably used for further purposes, for example in further power supply devices 500, or even in other tools which support the installation of the aforesaid battery.

### Power supply operating configuration.

The control unit 10 further comprises a power supply operating configuration. In the power supply operating configuration, the control unit 10 causes a power supply of the at least one power user 101, 102 (through the power output 503) connected to the power supply device 500 and/or, if present, of the service power user 510, determining, in use, a transfer of electrical energy simultaneously occurring from the plurality of batteries B1-B4 to the at least one power user 101, 102.

This means that when "seen" by the at least one power user 101, 102, the batteries appear connected in parallel. Their overall voltage is therefore, at least ideally, equal to the voltage of each of the batteries of the plurality of batteries B1-B4. The deliverable current is the sum of the currents deliverable by each of the batteries of the plurality of batteries B1-B4. The total electrical power deliverable by the plurality of batteries is given by the sum of the electrical powers deliverable by each of the batteries of the plurality of batteries.

In use, the control unit 10 is configured to operate the power supply operating configuration only when all of the batteries of the plurality of batteries B1-B4, when technically chargeable (see subsequent portions of the disclosure), have been charged.

For this reason, the control unit 10 comprises a plurality of discharge modules 11. Each discharge module 11 comprises a respective discharge diode.

As will be better disclosed below, in an embodiment each discharge module comprises a diagnosis module 11d.

The number of discharge modules 11 is equal to the number of batteries of the plurality of batteries B1-B4. Each discharge module 11 is operatively connected with the power users 101, 102 by means of at least one power switch 20s of controlled type. The power switch 20s is the switch which can be controlled by means of software through the control performed by the user's remote electronic device or directly by one or more commands present on the body of the power supply device 500.

In use, through a control exerted by the control unit 10 and by means of the plurality of discharge modules 11, in at least one particular power supply operating configuration, the discharge of the batteries B1-B4 therefore occurs in a balanced manner. Therefore, in such a particular power supply operating configuration, all the batteries of the plurality of batteries B1-B4 contribute to powering the power users 101, 102.

### Description of the power supply for charging the batteries.

The control unit 10 further comprises a charge module operatively and in particular electrically associated with each battery of the plurality of batteries B1-B4.

The control unit 10 further comprises a power supply input, which is configured to provide electrical power necessary for charging the plurality of batteries B1-B4. In particular, the power supply input is connected (by means of a connector, schematically depicted by the double arrow 16, and therefore removably) to a power supply 30 configured and specifically designed to receive a single-phase alternating voltage in input, for example an alternating voltage at 220V or 240V or 115V, preferably of the sinusoidal type, typical of domestic power supplies. Alternatively, the power supply 30 is configured and specifically intended to receive an alternating three-phase voltage in input, for example at 380V. Still alternatively, the power supply 30 can be configured to select the single-phase or three-phase power supply, also automatically. Suitable electronic circuits, not described in detail, will be present to allow the aforesaid automatic selection. An input of the power supply 30 is connected to the charging input 502. The input of the power supply 30 can thus conveniently be supplied with direct current.

The power supply 30 further comprises a voltage converter which converts the alternating voltage into direct voltage, and thus makes a conversion stage from alternating voltage to direct voltage. Typically, the power supply 30 further comprises a transformer, used with a voltage lowering function.

The power supply 30 can conveniently be provided with electrical protection circuits, of known type and therefore not described in detail.

Optionally, the power supply 30 is disconnectable from the plurality of batteries B1-B4 and the control unit 10, and therefore also from the power supply device 500. In order to keep the power supply 30 as inexpensive as possible, and universally applicable for a large variety of applications or tools, the intelligence of the power supply 30 is limited to the minimum possible.

In the event of a sudden disconnection and/or reconnection of the power supply 30 with the control unit 10, in particular when charging the batteries B1-B4, it is noted that the already accumulated charge is not lost, and the control unit 10 is conveniently configured to prevent damage to the batteries B1-B4, in particular to filter out any voltage surges which may occur.

In a preferred, but non-limiting embodiment, the connection of the power supply 30, and in particular the supply of electrical power to at least one of the batteries of the plurality of batteries B1-B4, determines an electrical disconnection of the at least one power user 101, 102 and/or the service power user. Such a disconnection, in an embodiment, determines an opening of the power switch 20s.

### Inputs and control lines for the batteries.

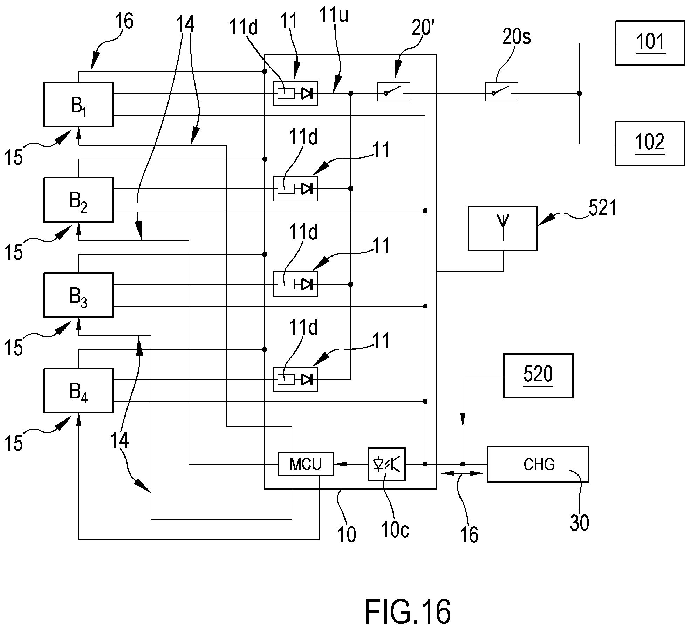

As illustrated in particular in figure 16, in an embodiment, each battery B1-B4 is a smart battery, and has a control input 15 powered by a control line 14, on which a battery charge enabling signal is selectively transmitted. The number of control lines 14 is equal to the number of batteries of the plurality of batteries B1-B4. The control input, when an appropriate signal is received, causes a switching of a supply switch 44, preferably a solid-state supply switch 44, which determines the possibility of charging the cells 43 contained in the battery. Vice versa, when such an appropriate signal is not received, it is not possible to proceed with a charging of the cells 43, since such a supply switch 44 is kept open.

For the purposes of the present disclosure, an appropriate signal is to be understood as any type of signal capable of determining a switching of the aforesaid switch; in an embodiment such a signal is simply a signal with a non-zero voltage; in a further embodiment such a signal is a signal provided with an appropriate binary coding.

At the level of the communication protocol for controlling the batteries, any protocol is in principle usable; however, in a non-limiting embodiment, the communication protocol employed by the control unit 10 for the dialogue with further electronic components of the power supply device 500 is of the CANOPEN type. The use of this specific communication protocol is not to be construed as limiting, as in an embodiment other known automation protocols can be provided for the same purpose.

By virtue of this technical feature it is possible to use, for charging the plurality of batteries B1-B4, a substantially generic power supply 30, which could also be advantageously used for further charging operations of batteries not associated with the power supply device 500.

It is noted that in a preferred but non-limiting embodiment, a 1-wire type bus system protocol is used for controlling the plurality of batteries B1-B4 by the control unit 10. Such a protocol exploits a control line 14 for each battery B1-B4 and allows the transmission of data on a single wire with a binary coding.

In particular in which the "0s" are transmitted carrying a 0V bus line signal, or in any case at a low voltage value for a first time interval (preferably, but not limited to, 60µs), while the "1s" are transmitted with a 0V bus line signal, or in any case at a low voltage level, for a second time interval, lower with respect to the first time interval (preferably, but not limitedly, 15ps).

The control unit 10 is configured to maintain a substantial complete independence for charging each battery. The assembly formed by the plurality of batteries B1-B4, each of intelligent type and provided with its own charge management system, and by the control unit 10 determines in fact the presence of a plurality of charging sub-modules; if one of the sub-modules should fail, the charging of the battery associated with the aforesaid sub-module would be compromised, but the charging of the remaining batteries of the plurality of batteries B1-B4, would instead not be compromised.

### Management of the power available from the batteries.

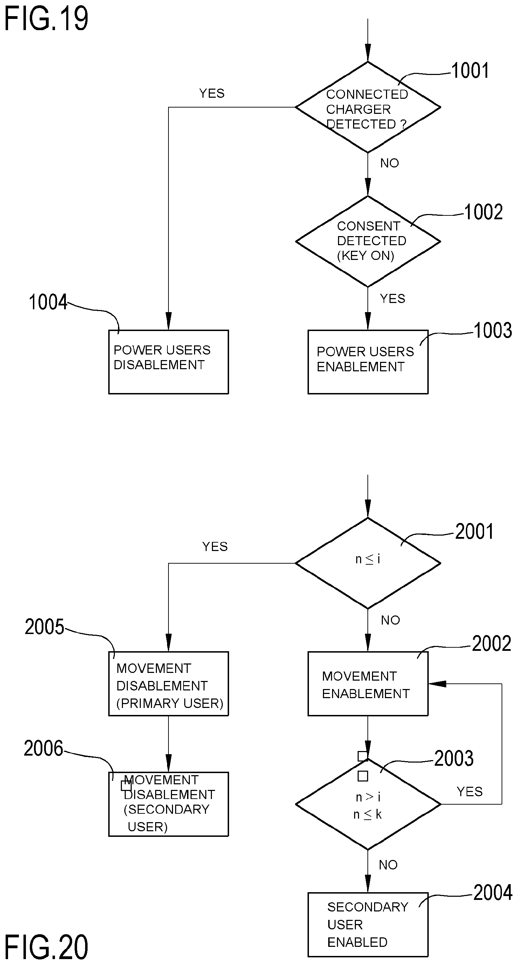

Figure 20 illustrates a block diagram regarding a specific power management functionality available on the batteries, implemented through the control unit 10. The Applicant has noted that the possibility of effectively and sufficiently lastingly actuating the power users 101, 102 also depends on the number of batteries present on board the power supply device 500.

Indeed, in an embodiment, said M is the maximum number of batteries installable on board the power supply device 500 (in the case of the present detailed description, M=4), the power supply device 500 could also operate with a lower number of batteries with respect to the maximum, although with some limitations.

The following is herein defined:
i: the minimum number of batteries required to enable activation of the priority power user 102, e.g., connected on a first power output 503;
i: the minimum number of batteries required to enable activation of the secondary power user 101, e.g., connected on a second power output 503;
n: number of batteries actually installed on board the power supply device.

It is noted in particular that where the power supply device 500 is provided with a service power user 510 and at least one power output 503 intended to power at least one power user 101, 102, one among the at least one power user 101, 102 and the service power user 510 will be considered a priority power user, while the other among the at least one power user 101, 102 and the service power user 510 will be considered a secondary power user.

In an embodiment, k>i. In fact, also for safety reasons, the possibility of maintaining the activatability of the priority power user 101 is privileged with respect to the possibility of keeping the secondary power user 102 active. As can be clearly seen from the diagram of figure 20, the control unit 10 is configured to perform a control of the number of batteries B1-B4 present on the power supply device 500, and to electronically determine the possibility of actuation of at least one priority power user among the plurality of power users and/or the service power user 510, or of a priority power user and a secondary power user among the plurality of power users 101, 102 and/or the service power user 510, as a function of a number of batteries B1-B4 installed on board the power supply device 500.

The block 2001 identifies a control step to check if the number n of batteries B1-B4 is less than i (n<i). If so, neither the priority power user 102, nor the secondary power user 101 (block 2005 and block 2006) can be actuated.

If no, it means that the number n of batteries B1-B4 installed on board is greater than i, and therefore at least the priority power user 102 is enabled.

Such a step is schematically depicted by block 2002. Subsequently (block 2003), a step of verifying whether the number n of batteries B1-B4 installed on board the power supply device 500 is less than k (n<k) is carried out. If so, it means that the number n of batteries is still not sufficient to allow the actuation of the secondary power user 101. For this reason, the priority power user continues to be kept enabled but the secondary power user is kept disabled. If no, the secondary power user is also enabled (block 2004).

For example, in the specific embodiment of the present disclosure, for example, the following conditions i=2; k=3 can apply.

This particular technical feature is well combined with the possibility of performing a previously mentioned "hot" extraction and insertion, since it allows at least the priority power user 102 to keep functioning even if the user extracts the last battery necessary to also maintain the operation of the secondary power user.

With regard to this technical aspect, the Applicant has devised an embodiment of the control unit 10 which is configured to determine a powering down or an electrical power supply of the secondary power user 101, in particular leaving the supply of the priority power user 102 unchanged and a priority, in accordance with at least one value among an electrical power, charge, voltage or current, made available by the at least one battery connected to the power supply circuit.

### Overload protection of the power supply.

The control unit 10 is also configured to allow the power users 101, 102 and/or the service power user 510 to operate only when the power supply 30 is disconnected, i.e., only when none of the batteries B1-B4 are in the charging step. This means that as long as the power supply 30 is connected to the control unit 10 and electrical power is absorbed by it, the power supply operating configuration cannot occur.

By virtue of this aspect, the power supply 30 is preserved from overloads; in fact, the current which the power supply 30 is capable of delivering is much lower with respect to the correct one absorbed in use by even one of the power users. Furthermore, the actuation of the power users is only made possible when a consent is provided through a contact circuit 42, for example a button or a key.

The flowchart of figure 19 illustrates the control performed by the control unit 10. The block 1001 identifies a step of detecting the presence of connection of the power supply 30. If the power supply 30 is connected, the possibility of actuating the power users 101, 102 (block 1004) and/or the service power user 510 is disabled. When the power supply 30 is disconnected, the possibility of actuating the power users is enabled, in particular when consent is given by the contact circuit 42, for example a button or key (e.g.: contact key in ON). The control unit 10 therefore verifies whether a consent is given by the contact circuit 42, for example by button or key (block 1002) and, if so, the power users 101, 102 and/or the service power user are enabled. This means that, in use, the presence or absence of the power supply 30 in operating connection is a priority with respect to the consent given by the contact circuit 42, e.g., a button or a key.

From a structural point of view, as shown in figure 16, the control unit 10 comprises at least one coupling sensor 10c, which is configured and specifically intended to allow to detect when the power supply 30 is operatively connected with the batteries B1-B4. In a non-limiting embodiment, such a coupling sensor 10c comprises an optocoupler. Alternatively, the coupling sensor 10c can comprise a power sensor configured to detect whether electrical power is transferred to at least part of the batteries B1-B4.

As can be seen from figure 16 the control unit 10 further comprises a power switch 20s, preferably solid-state. The power switch 20s is normally closed, so that the electrical energy from the batteries B1-B4 can be supplied to the power users 101, 102 and/or the service power user 510. The power switch 20s switches to the open configuration, interrupting the power supply of the power users 101, 102, only when the coupling sensor 10c detects the presence of the connection of the power supply 30. A control signal is transmitted from the coupling sensor 10c to the power switch 20s with a control line 13c. As can be seen from figure 16, therefore, the control of the power switch 20s is determined by the contact circuit 42. A control line 13 controls the opening and/or closing of the power switch 20s and is operatively connected to the charge management module (MCU).

### Discharge management module.

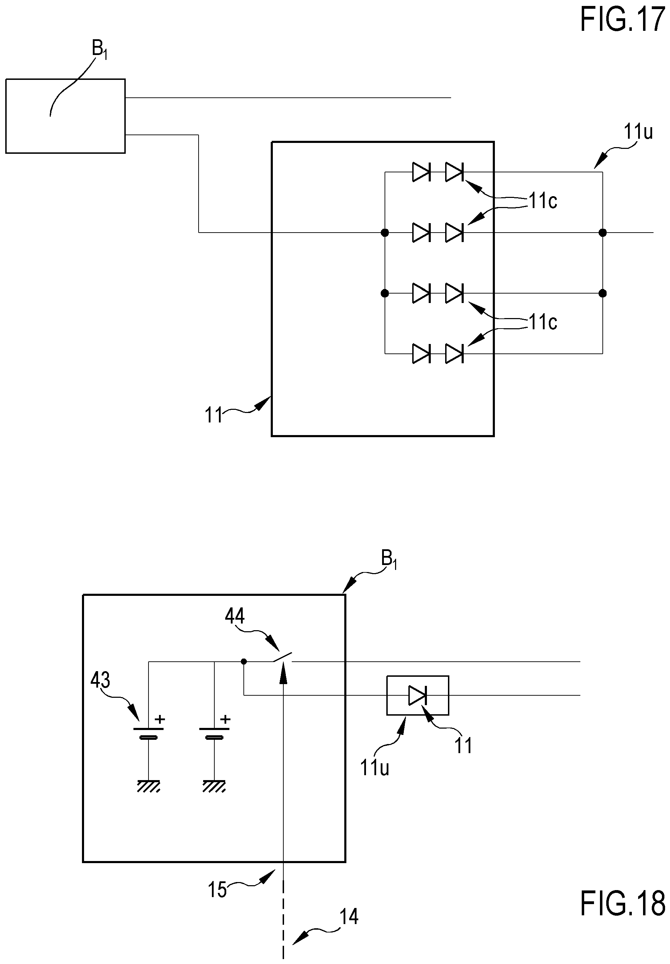

Figure 17 illustrates a discharge management module 11 for a battery B1 in detail. As can be seen in the figure, the discharge management module comprises an input powered by the battery cells (in figure 17, the battery B1) and an output 11u.

Such a module comprises a plurality of diodes 11c therein whose cathode is connected, in particular directly connected, to the input powered by the battery cells, and whose anode is connected to the output 11u. The plurality of diodes 11c is placed in parallel. The function of the diodes is to prevent an undue supply of electrical energy to the cells 43 of the battery B1 through current returns from the output 11u, i.e., to prevent a supply of an electrical current moving from the cathode to the anode of the diode (the cathode of the diode is directly connected to the output 11u).

In an embodiment the discharge management module 11 comprises a plurality of parallel branches, each of which houses at least one diode 11c. In a preferred embodiment, at least one of said parallel branches, and more preferably all of the parallel branches, have a pair of diodes placed in series. This particular configuration makes it possible to extract very high discharge currents in an energy-efficient manner and, at the same time, prevents the breakage of a diode, with consequent significant reverse current flow, from compromising the current flow function (not negligible) to the cells 43 of the battery B1. In such a case, there would still be the second of the diodes in series to prevent the problem. The joint event of a breakage of two diodes in series on the same branch, determining the loss of the supply impediment function of a non-negligible reverse current to the cells 43, is very low. In fact, it is observed that a breakage of two or more diodes, as long as not in series, on several branches, does not cause a loss of the supply impediment function of a non-negligible reverse current to the cells 43.

The diodes 11c can all be of the same type, or of different types.

The Applicant in particular observes that the presence of the diodes 11c prevents that in the power supply operating configuration, in which the batteries B1-B4 operate by supplying current in a parallel configuration, part of the current supplied by one battery can inadvertently end up in another battery of the plurality of batteries B1-B4, damaging it.

In a preferred but non-limiting embodiment, an auxiliary power switch 20' (supply switch) is arranged in series at the output 11u. Such an auxiliary power switch 20' is part of the control unit 10 and is connected in series to the power switch 20s.

### Battery temperature control.

The present disclosure illustrates the possibility of controlling the temperature of at least part of the plurality of batteries B1-B4, mainly so as to prevent the heating thereof above critical temperatures.

Preferably, but not limitedly, the power supply device 500 houses at least one fan intended to cause a cooling of the batteries B1-B4. However, in an embodiment, the power supply device 500 houses a number of fans equal to the number of batteries B1-B4. Where multiple compartments are present, each compartment of the plurality of compartments 509 will preferably comprise a respective fan.

The fans are electrically powered fans, powered by an electric motor operatively coupled thereto.

The control unit 10 is operatively connected, in particular electrically connected, with the at least one fan. When multiple fans are present, preferably the control unit 10 is connected with said fans with a particular operating configuration intended to allow the selective control of an activation and deactivation of each fan independently of the others. Such a connection can in particular entail a presence of a plurality of power supply lines of the aforesaid fans, each operatively connected with a respective fan.

In a preferred but non-limiting embodiment, the control unit 10 implements a control of a rotation speed of the fan, so as to obtain an adjustable cooling of the respective battery. The control of the rotation speed can occur independently for each fan or simultaneously for all fans. Therefore, in an embodiment, the electric motor of the fans is controllable in rotation speed, for example (and not limitedly) by means of a PWM type control or equivalent.

In a preferred but non-limiting embodiment, each of the batteries B1-B4 is provided with a temperature sensor configured to detect the temperature of the cells 43. The control unit 10 is configured to receive a temperature signal transmitted by said temperature sensor; the temperature signal is indicative of a temperature t (°C) of a given battery. The control unit 10 is further configured to activate one or more of the fans when the temperature signal transmitted by one or more of the temperature sensors indicates that the respective battery has reached (or exceeded) a temperature t which is higher with respect to a threshold temperature t_{TH}.

In a preferred, but non-limiting embodiment, the control unit 10 is configured to select, preferably automatically, the activation of all the fans even if only one of the sensors detects a temperature t which is higher with respect to the threshold t_{TH}.

Alternatively, the temperature sensors can be present at the at least one compartment 509, and therefore not be installed on board the batteries. Also in such a case, the control implemented through the control unit 10 does not change. The absence of temperature sensors on board the batteries contributes to limiting the production cost thereof.

The Applicant further notes that in an embodiment the batteries are provided with contacts configured to come into contact with respective sockets when the batteries are properly housed in the compartment in an operating position. More precisely, the batteries B1-B4 can be inserted into the at least one compartment 509 by means of translation to an end-stroke position at which the contacts are in contact with the sockets, and electrical energy can be transferred to and from the batteries B1-B4.

### Battery voltage control and imbalance management.

In a preferred but non-limiting embodiment, each battery B1-B4 is provided with a voltage sensor operatively connected to the control unit 10. Alternatively, the control unit 10 comprises a plurality of voltage sensors, each operatively connected to a respective battery B1-B4. Still alternatively, the control unit 10 comprises a single voltage sensor, and is configured to operatively couple the single voltage sensor first with the first battery B1, subsequently with the second battery B2, and gradually up to the last battery B4 of the plurality of batteries B1-B4.

The control unit 10 is configured to electronically compare the voltage value detected on at least one specific battery B1-B4 with a minimum voltage threshold value Vₘᵢₙ. The minimum voltage threshold value Vₘᵢₙ is indicative of the minimum voltage which the battery can have to be able to be charged. If the voltage detected by the voltage sensor is below the minimum voltage threshold value, the battery cannot be charged, and is considered to be faulty, and is therefore excluded from being able to provide a power supply to the power users. This means that in this case the switch 44 of the battery in question, by means of the control line 14, is placed in an open configuration, preventing the passage of electric current.

Preferably, the control unit 10 is configured to execute the aforesaid electronic comparison before the start of charging of each battery.

In fact, the Applicant has found that certain batteries, in particular if lithium or lead-acid, if discharged below a certain voltage value, can be subject to unwanted chemical reactions which determine a significant reduction in the capacity of the battery in subsequent charges. In particular, lithium batteries which are brought below a certain voltage can become chemically unstable with subsequent charges, creating the risk of short circuits in the respective cells. Therefore, the control procedure implemented by means of the control unit 10 allows to increase the safety of charging and use, including the subsequent discharge, of the batteries B1-B4.

To allow this, the control unit 10 comprises a plurality of diagnostic modules 11d, configured to diagnose the operation of a respective battery during the discharge step (i.e., in the power supply configuration). The number of diagnosis modules 11d is equal to the number of batteries of the plurality of batteries B1-B4. Figure 16 depicts four diagnosis modules 11d having four batteries. Each of the diagnosis modules 11d is arranged upstream of a respective discharge diode; the output of the diagnosis module 11d supplies the anode of the discharge diode. The diagnosis modules 11d can integrate voltage and/or current sensors.

Conversely, the diagnostics during the battery charging operating configuration is managed through a diagnostic battery charge module (reference 14 in the figure). Through the battery charging diagnostic module, the control unit 10 can also be configured to stop charging the battery, and therefore switch to charging the next battery in the plurality of batteries B1-B4, when said battery assumes a voltage value at least equal to a predetermined value Vmax.

Alternatively or in addition to what is disclosed above, the control unit 10 can be configured to execute an electronic control of the charging current supplied to each of the batteries of the plurality of batteries B1-B4. In particular, when the charging step of a battery, or a part of the plurality of batteries B1-B4, is carried out, a current sensor verifies whether the charging current:
- exceeds a given maximum safety value Iₘₐₓ, and/or
- falls below a minimum charging current value Iₘᵢₙ.

The maximum safety value Iₘₐₓ is determined so as to indicate a value above which a failure of the battery is to be understood, or of the part of the plurality of batteries concerned, determining for example a faux-short circuit condition.

The minimum charging current value Iₘᵢₙ is determined so as to indicate a value below which it is to be understood that the battery is almost fully charged. Such a minimum charging current value can conveniently be associated with a self-absorption value of the battery.

When one of the above two conditions occurs, i.e., when the charging current exceeds the given maximum safety value Iₘₐₓ or falls below the minimum charging current value Iₘᵢₙ, the charging step of the battery, or part of the plurality of batteries B1-B4, is interrupted; it may be possible to move to a subsequent charging step of another battery or another plurality of batteries B1-B4.

Preferably, but not limitedly, if the charging current exceeds the determined maximum safety value Iₘₐₓ, the battery charging step is interrupted immediately.

In an embodiment, if the charging current falls below the minimum charging current value Iₘᵢₙ, the charging step of the battery, or part of the plurality of batteries B1-B4, is interrupted; it may possibly pass to a subsequent charging step of another battery or another plurality of batteries B1-B4.

Alternatively, in order not to stop the (complete) charging too soon, before stopping the charging step of the battery, or part of the plurality of batteries B1-B4, when the charging current falls below the minimum charging current value Iₘᵢₙ, a time equal to or more than a certain waiting time Tw is waited. If the charging current, within the waiting time Tw, continues to be below the minimum charging current value Iₘᵢₙ, the charging step of the battery, or of the plurality of batteries B1-B4, ends; it may possibly pass to a subsequent charging step of another battery or of another plurality of batteries B1-B4.

Preferably, but not limitedly, the control unit 10, by means of the diagnostic battery charging module, is configured to read (for example cyclically, at predetermined time intervals) the voltage value of a battery or of the plurality of batteries B1-B4, both in the charging operating configuration and in the power supply operating configuration. In particular, reading the voltage of at least one battery among the batteries of the plurality of batteries B1-B4 allows to compare the voltage with the threshold voltage value as a result of which the charging current of the battery is progressively reduced.

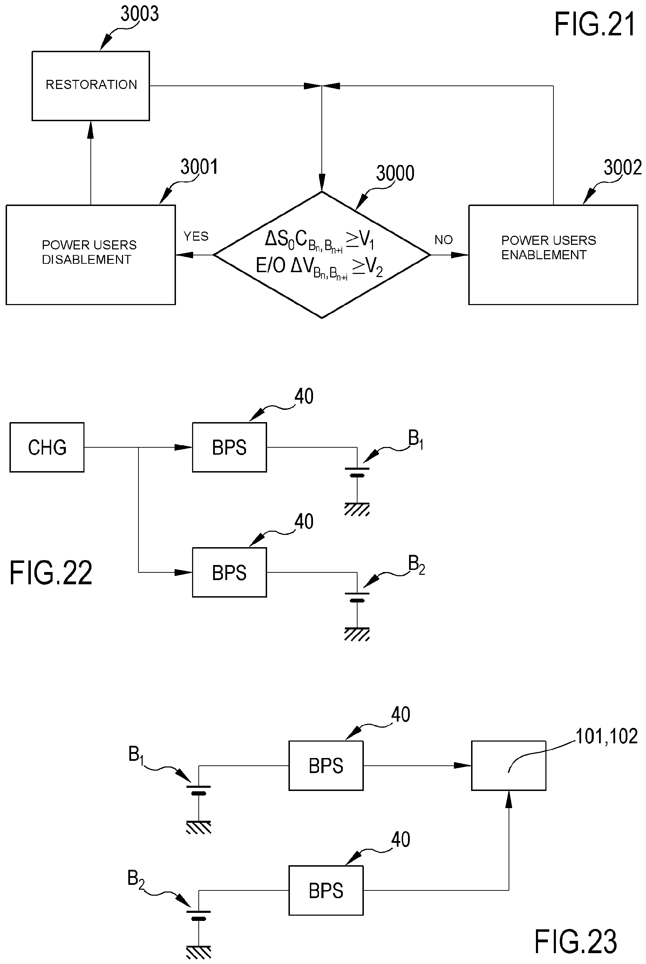

Referring to the block diagram of figure 21, in an embodiment the control unit 10 is configured and specifically adapted to execute a voltage difference verification procedure between two or more batteries of the plurality of batteries B1-B4.

Block 3000 identifies a step of verifying voltage and/or charge level imbalances between two batteries Bₙ and B_{n+i.} The voltage imbalance between two batteries Bₙ and Bₙ₊ᵢ is indicated by Δ*V*(*Bₙ,B*_{*n*+*i*}).

The charge level imbalance between two batteries Bₙ and Bₙ₊ᵢ is indicated by Δ*SoC*(*Bₙ, B*_{*n*+*i*})*.*

In the step of verifying voltage and/or charge level imbalances, a comparison is made between the charge level Δ*SoC*(*Bₙ, B*_{*n*+*i*}) between two batteries Bn and Bn+i and a first value Vv1 and/or a comparison is made between the voltage imbalance Δ*V*(*Bₙ, B*_{*n*+*i*}) between two batteries Bn and Bn+i and a second value Vv2.

In particular, in the step of verifying voltage imbalances, it is verified whether the charge level imbalance Δ*SoC*(*Bₙ, B*_{*n*+*i*}) between two batteries Bn and Bn+i is greater than or equal to a first value Vv1, and/or if the voltage imbalance Δ*V*(*Bₙ, B*_{*n*+*i*}) between two batteries Bn and Bn+i is greater than or equal to a second value Vv2.

Clearly, the above comparison is an electronic comparison.

If so (output S, block 3000), for safety, the power users 101, 102 and/or the service power user 510 are disabled.

If not (output N, block 3000), an enabling (or maintaining the enabling) of the power users 101, 102 and/or the service power user 510 is performed. Such enabling or maintenance of the enabling is depicted with block 3002 of figure 21.

As can be seen from the diagram of figure 21, after enabling (or maintaining the enabling), the step of verifying voltage and/or charge level imbalances is executed again. It is a loop control cycle, which advantageously allows to have an immediate control of any failures on the batteries.

The block diagram of figure 21 illustrates a "recovery" block (block 3003). Such a block corresponds to a recovery step in which an operator executes a replacement of a battery and/or verifies for any malfunctions of the electronics of the power supply device 500. The recovery step can comprise sending a consent command "C" to be able to proceed again with a new step of verifying voltage and/or charge level imbalances between two batteries Bn and Bn+i. It is understood that the aforesaid step of verifying voltage and/or charge level imbalances between two batteries Bn and Bn+i is performed for every n other than i until all the combinations of batteries of the plurality of batteries B1-B4 are completed.

### Limitation of deliverable power.

In a specific embodiment, the control unit 10 is configured and specifically intended to cause a selection and/or a limitation of a maximum electrical power deliverable by each battery of the plurality of batteries B1-B4. The selection and/or limitation mentioned above are respectively a selection and/or limitation of an electronic type. In particular the control unit 10 is configured to execute a particular procedure whereby selectively, and independently, for at least one battery, and optionally for each battery, of the plurality of batteries B1-B4, a maximum electrical power deliverable by the at least one battery is selected electronically, and optionally by each battery and/or the maximum electrical power deliverable by at least one battery is electronically limited, and optionally by each battery of the plurality of batteries B1-B4. To execute the above, the control unit 10 transmits a power management signal to an electronic control device of the electrical power deliverable by the battery (e.g., solid-state switch) of at least one battery selected among the batteries of the plurality of batteries B1-B4, or if applicable a part or even all of the batteries of the plurality of batteries B1-B4.

In a particular embodiment, the limitation of the maximum electrical power deliverable comprises, and in particular is, a limitation of the current which the battery, or which part of the plurality of batteries B1-B4, or which the entire plurality of batteries B1-B4, can deliver.

This peculiar technical feature allows to avoid overloading phenomena for particular types of batteries, and also allows to use batteries of a significantly different type together without risks. In particular, this peculiar technical feature allows to supply the at least one power user 101, 102 and/or the service power user 510 with a plurality of batteries B1-B4 in parallel even if one of the batteries of said plurality is capable of supplying a greater electrical current with respect to that deliverable by one or more of the other batteries of said plurality of batteries B1-B4.

In particular, the control unit 10 can be configured to prevent, in the power supply operating configuration, the discharge of a given battery of the plurality of batteries B1-B4 (e.g., of the first battery B1) from determining the charging of a given further battery of the plurality of batteries B1-B4 (e.g., of the second battery B2).

In order to envisage for an effective control of the maximum power deliverable by each battery of the plurality of batteries B1-B4 it is preferable that there is continuous monitoring of the voltage and/or current of each of the batteries.

In general, therefore, it can be stated that the present disclosure illustrates a specific embodiment of the control unit 10 which is configured to store at least one datum related to a maximum electrical power deliverable by at least one among the first battery B1 and the second battery B2.

More in particular, the control unit 10 is configured to store a first datum related to the maximum power deliverable by the first battery B1 and to store a second datum related to the maximum power deliverable by the second battery B2.

The control unit 10, alternatively or in combination, is configured to electronically find the datum related to a maximum electrical power deliverable by at least one among the first battery B1 and the second battery B2, in particular by means of an electronic interrogation step of the battery. More in particular, the control unit 10 is configured to electronically find the first datum related to the maximum power deliverable by the first battery B1 and the second datum related to the maximum power deliverable by the second battery B2.

The control unit 10 is configured to electronically limit the electrical power supplied by the at least a first battery B1 and/or a second battery B2 only when the electrical power supplied to the at least one power user 101, 102 and/or the service power user 510 exceeds the value corresponding to said datum, and in particular to the first datum and/or to the second datum. In the event of low electrical power absorption, the control operated by the control unit 10 is "transparent".

In an embodiment, the control unit 10 determines and/or stores a maximum current value deliverable by each of the plurality of batteries B1-B4. In doing so, in the specific example of the present disclosure in which there are four batteries, the control unit 10 determines and/or stores four maximum current values deliverable: I_{1, max}, I_{2, max}, I_{3, max}, I_{4, max} [A].

It should be noted that for the purposes of the present disclosure, defining a maximum power value deliverable by a battery comprises determining or storing a current value; in fact, given the fact that a battery has a voltage other than 0V, and given the fact that P=V*I, defining a maximum power value comprises defining a maximum current value delivered by a battery.

I₁, I ₂, I₃, I₄ [A] are defined as the electric currents actually delivered by the first, second, third and fourth battery.

In an embodiment, the control unit 10 executes a routine which includes setting all the batteries at a unique maximum current value Iₑₛₜ equal to the minimum of the four maximum current values deliverable: Iₑₛₜ = min { I_{1, max}, I_{2, max}, I_{3, max}, I_{4, max} }.

In doing so, as long as the current demand of the at least one power user 101, 102 and/or the service power user 510 allows it, each of the four batteries delivers a current I1, I2, I3, I4 which varies with the demand of current of the at least one power user 101, 102 and/or the service power user 510; when the demand of current of the at least one power user 101, 102 and/or the service power user 510 is such as to determine the achievement of the unique maximum current value Iₑₛₜ, each of the four batteries B1-B4 will deliver the same current Iₑₛₜ. In this case the power user 101, 102 and/or the service power user 510 will be able to absorb a maximum current equal to 4lest.

In an alternative embodiment, the control unit 10 executes a routine which includes setting a maximum current value deliverable for each of the batteries B1-B4.

In doing so, as long as the demand of current of the at least one power user 101, 102 and/or the service power user 510 allows it, each of the four batteries delivers a current I₁, I₂, I₃, I₄ which varies with the demand of current of the at least one power user 101, 102 and/or the service power user 510; when the demand of current of the at least one power user 101, 102 and/or the service power user 510 progressively rises, the lowest of the four maximum current values deliverable I_{1, max}, I_{2, max}, I_{3, max}, I_{4, max}. will be reached. The corresponding battery (suppose, the second battery B2), will begin to deliver a corresponding current value I_{2, max}. The electric current absorbable by the at least one power user 101, 102 and/or the service power user 510 can still grow, until reaching a value such that all the batteries deliver the respective maximum current. The maximum current which the at least one power user can absorb is equal to the sum of the four currents I_{1, max}, I_{2, max}, I_{3, max}, I_{4, max}.

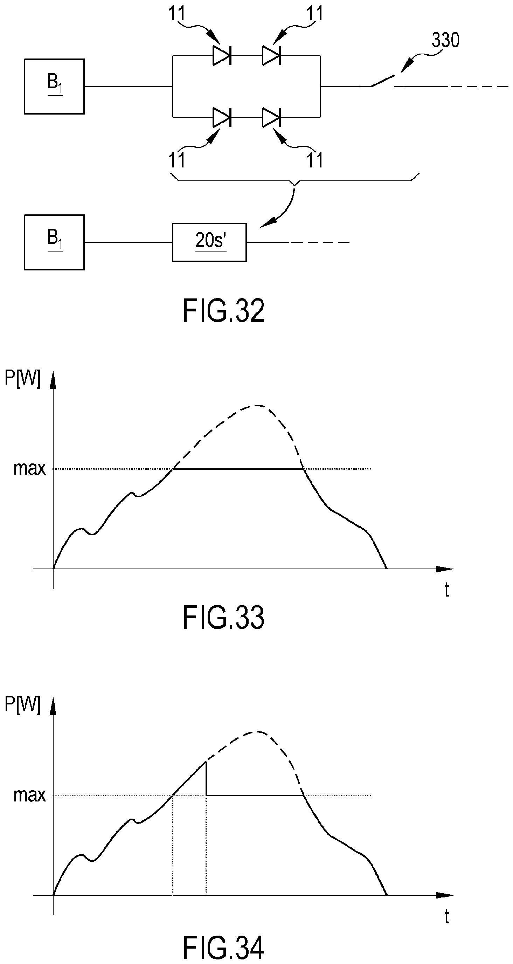

In an embodiment, the control performed by the control unit 10 is immediate. This means that if even only one of the batteries B1-B4 is instantly delivering a greater electrical power with respect to at least a first maximum power value, the aforesaid electrical power limitation is performed. This solution is schematically depicted in figure 33.

In an alternative embodiment, the control performed by the control unit 10 is such that cutting the maximum power deliverable is not immediate, but only intervenes following a predefined time interval.

A predefined time interval Δtpₘₐₓ is defined for which the maximum power value can be exceeded by the batteries B1-B4, in particular by each of the batteries B1-B4.

When the electrical power P(t) instantly absorbed by the at least one power user 101, 102 and/or by the service power user exceeds the first maximum power value (if common for all batteries B1-B4) or the maximum power value deliverable for a given battery, the control unit 10 automatically starts to perform an electronic count, until the predefined time interval Δtpₘₐₓ is reached.

Upon reaching the predefined time interval Δtpₘₐₓ, if the electrical power absorbed by the at least one power user 101, 102 and/or by the service power user 510 continues to be higher with respect to the first maximum power value (if common for all the batteries B1-B4) or the maximum power value deliverable for a given battery, the control unit 10 intervenes with said power limitation. This latter solution is schematically depicted in figure 34.

In particular, this means that if the electrical power absorbed by the at least one power user falls below the maximum power value deliverable (or the maximum power values deliverable, if different for each battery), the count performed by the control unit 10 is automatically terminated.

By virtue of this technical feature, it is possible to cope with sudden power demand peaks (for example, due to the inrush current of the electric motors) without causing power shortages to the power users, while at the same time ensuring the maintenance of correct control functionality.

Depending on the specific structure of the batteries, the limitation occurs by transmitting an appropriate power limitation signal Sₗᵢₘ from the control unit 10 to one or more of the batteries B1-B4 whose output electrical power must be limited.

In an alternative embodiment, the control unit 10 itself comprises a power limitation circuit which is intended to execute the functions described above. In such a case, there is no transmission of a power limitation signal Sₗᵢₘ from the control unit 10 to one or more of the batteries B1-B4; such a power limitation signal Sₗᵢₘ is a signal which remains inside the control unit 10, and is transmitted by the data processing unit itself to the power limitation circuit (or if necessary, to the limiting circuits).

The measurement of the instantaneous power absorbed by the at least one power user 101, 102 and/or of the service power user 510 and in particular of the current absorbed by the at least one power user 101, 102, is carried out by an electronic sensor of known type (and therefore not described in detail). The electronic sensor can be external with respect to the control unit 10 or inside the latter. Clearly, where the electronic sensor is external, this sensor will transmit a control signal of the power instantly absorbed by the at least one power user 101, 102 to the control unit 10.

In a preferred and non-limiting embodiment, the control unit 10 is configured to force the activation of the fan for cooling the batteries, even independently of reaching or exceeding said temperature threshold t_{TH}.

More in particular, the control unit 10 is configured and specifically intended to transmit an activation signal to at least one fan for cooling the plurality of batteries B1-B4 when the electrical power P(t) instantly absorbed by the at least one power user 101, 102 and/or the service power user 510, reaches a predefined power value requiring an active cooling. In a non-limiting embodiment, the predefined power value requiring an active cooling is for example substantially equal to 2/3 of the first maximum power value and preferably substantially equal to said first maximum power value.

### Battery charging circuits.

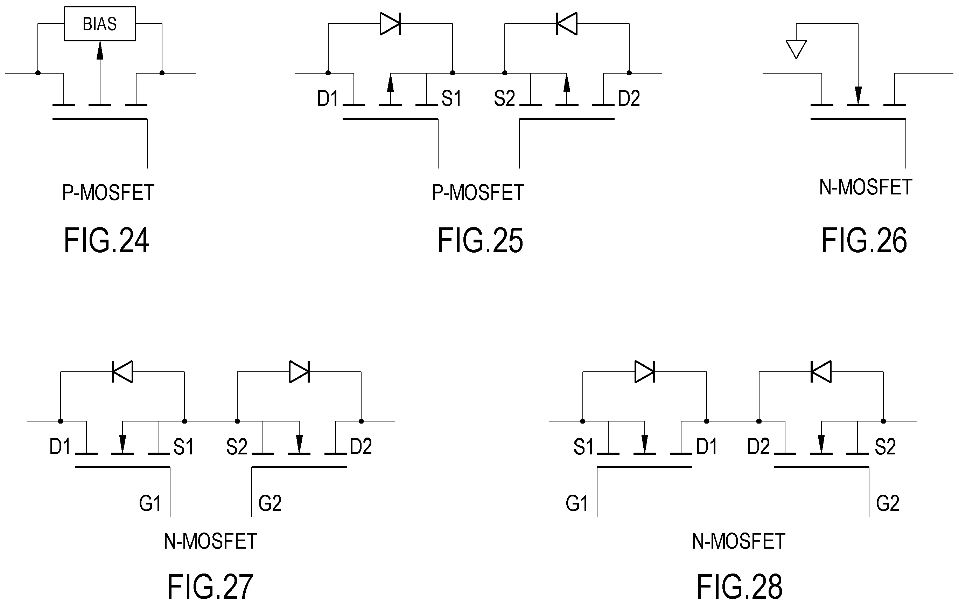

Figure 24 schematically illustrates a charging circuit of a plurality of batteries, for the sake of simplicity of a first and a second battery B1, B2. As described above, the batteries are connected in parallel with respect to the power supply. A plurality of BPS (Bidirectional Power Switch) modules 40, one for each branch, are arranged in series to the respective battery. In an embodiment, each BPS module makes said switch 44.

Figure 25 schematically illustrates a power supply circuit of a power user 101, 102 and/or the service power user 510, in which a plurality of batteries, for the sake of simplicity a first and a second battery B1, B2, powers said user.

Also in this power supply configuration, due to the specific physical connection, the plurality of BPS modules 40 is arranged so that, for each power supply branch, there is a BPS module 40 connected in series to the respective battery.

Each BPS module 40 makes an active-type switch which can support a bidirectional current flow when in the closed configuration and a bidirectional current interruption when in the open configuration.

In a preferred but non-limiting embodiment, each BPS module 40 comprises at least one transistor, in particular an FET (field-effect transistor). Figures 24, 25, 26, 27, 28 illustrate possible circuit configurations of a BPS module 40 which allow to obtain:
- when the BPS module 40 is in an open configuration, an interruption of the bidirectional current flow, to and from the respective battery, regardless of the voltage value at the terminals of the BPS module 40; and
- when the BPS module 40 is in a closed configuration, a bidirectional current flow, to and from the respective battery, with voltage at the terminals of the BPS module 40 which is ideally zero.

In particular, figure 24 illustrates a circuit configuration with a P-type MOSFET, in which there is a biasing module which allows a correct bias on the source or drain in accordance with the polarity of the voltage. Figure 25 illustrates a back-to-back type circuit configuration with two P-type MOSFETs. Figure 26 illustrates a circuit configuration with an N-type MOSFET. Figure 27 illustrates a back-to-back type circuit configuration with two N-type MOSFETs with a common source configuration. Two diodes, one for each MOSFET, are positioned between the source and the drain, with anodes connected to the respective source, and with the two sources directly connected. A similar technical functionality can be obtained by employing a back-to-back type circuit configuration with two N-type MOSFETs connected in common drain configuration (figure 28).

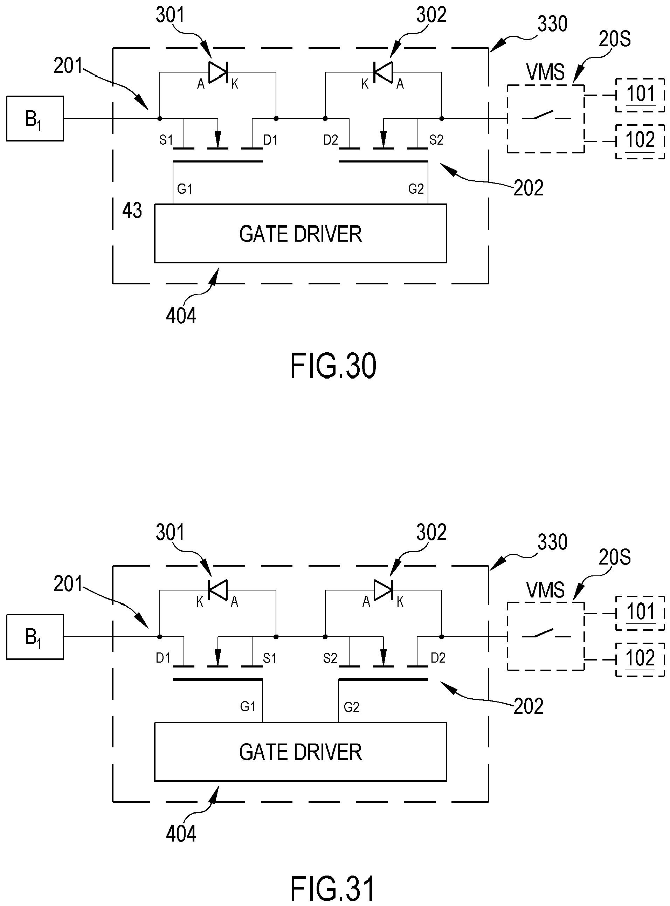

Figures 30 and 31 illustrate two particular configurations of a solid-state supply switch circuit 20s'. The supply switch circuit 20s' which makes a unidirectional power switch, i.e., a power switch capable of allowing the transit of an electric current in only one direction, which in particular is the direction to the at least one power user 101, 102 and/or the service power user 510.

As a switch, the supply switch circuit 20s' has:
- a closed configuration, which allows the passage of current from the batteries B1-B4 to the at least one power user, and
- an open configuration, which prevents the passage of current from the batteries B1-B4 to the at least one power user.

In a preferred but non-limiting embodiment, the supply switch circuit 20s' is arranged substantially at each of the batteries B1-B4. However, this configuration is not intended to be limiting; in fact, it is possible to have at least one further configuration in which the supply switch circuit 20s' is arranged outside the battery. Such a configuration is schematically depicted in figure 32. Figure 32 illustrates a principle diagram according to which a plurality of diodes 11 arranged on two branches in which, for each branch, there are two diodes 11 in series and in which the plurality of branches is arranged in series with a switch, the overall assembly formed by the plurality of diodes 11 and the switch, is made by the supply switch circuit 20s'.

The unidirectionality allowed to the current flow is such that, in principle, the supply switch circuit 20s' comprises a controllable switch in opening and closing and an ideal diode placed in series, to the controllable switch. For example, it can be considered that the ideal diode is placed upstream of the controllable switch, so as to have its anode directly connected to the respective battery.

The supply switch circuit 20s' is in particular made with a plurality of MOSFETs in back-to-back configuration with controlled piloting; figures 30 and 31 illustrate two non-limiting embodiments which employ N-MOSFETs in back-to-back configuration.

In detail in figure 30 a first embodiment is illustrated in which a first N-MOSFET and a second N-MOSFET are connected to each other in the following manner.

Proceeding from the battery to the at least one power user 101, 102, there is a first N-MOSFET 201 whose source terminal S1 is directly connected to the battery. The first N-MOSFET 201 has a drain terminal D1 which is connected to a drain terminal D2 of a second N-MOSFET 202 placed in series with the previous one.

Between the source terminal and the drain terminal of the first N-MOSFET 201 there is a first diode 301 whose anode is connected to the source terminal S1 of the first N-MOSFET 201 and whose cathode is connected to the drain terminal D1 of the first N-MOSFET 201 (and due to the direct connection between the drain terminal D1 of the first N-MOSFET 201 with the drain terminal of the second N-MOSFET 202, the cathode is also connected to the drain terminal D2 of the second N-MOSFET 202).

The second N-MOSFET 202 comprises a source terminal S2, and between the drain terminal D2 and the source terminal S2 of the second N-MOSFET 202 there is a second diode 302, the anode of which is connected to the source terminal S2 and the cathode of which is connected to the drain terminal D2 of the second N-MOSFET 202.

The assembly formed by the first diode 301 in parallel to the source and drain terminals S1, D1 of the first N-MOSFET makes the ideal diode. The assembly formed by the second diode 302 in parallel to the source and drain terminals S2, D2 of the second N-MOSFET makes the controlled switch.

The gate terminal G1 of the first N-MOSFET 201 and the gate terminal G2 of the second N-MOSFET 202 are directly connected to a respective terminal of a gate piloting circuit 404, the purpose of which is to bias the gate terminal G1 of the first N-MOSFET 201 and/or of the second N-MOSFET 202 so as to determine, upon the receipt of a predetermined control signal, the opening or the closing of the channel of the second N-MOSFET 202 so as to determine the simulation of an ideal open or closed switch, and so as to determine, upon receipt of the aforesaid predetermined control signal, the opening or the closing of the channel of the first N-MOSFET 201 so as to determine the behaviour thereof as an ideal diode.

In detail in figure 31 a second embodiment is illustrated in which a first N-MOSFET and a second N-MOSFET are connected to each other in the following manner.

Proceeding from the battery to the at least one power user 101, 102, there is a first N-MOSFET 201 whose drain terminal D1 is directly connected to the battery. The first N-MOSFET 201 has a source terminal S1 which is connected to a source terminal S2 of a second N-MOSFET 202 placed in series with the previous one.

Between the source terminal and the drain terminal of the first N-MOSFET 201 there is a first diode 301 whose anode is connected to the source terminal S1 of the first N-MOSFET 201 and whose cathode is connected to the drain terminal D1 of the first N-MOSFET 201. Due to the direct connection between the source terminal S1 of the first N-MOSFET 201 and the source terminal S2 of the second N-MOSFET 202, the anode is also connected to the source terminal S2 of the second N-MOSFET 202.

The second N-MOSFET 202 comprises a source terminal S2, and between the drain terminal D2 and the source terminal S2 of the second N-MOSFET 202 there is a second diode 302, the anode of which is connected to the source terminal S2 and the cathode of which is connected to the drain terminal D2 of the second N-MOSFET 202.

The assembly formed by the first diode 301 in parallel to the source and drain terminals S1, D1 of the first N-MOSFET makes the ideal diode. The assembly formed by the second diode 302 in parallel to the source and drain terminals S2, D2 of the second N-MOSFET makes the controlled switch.

The gate terminal G1 of the first N-MOSFET 201 and the gate terminal G2 of the second N-MOSFET 202 are directly connected to a respective terminal of a gate piloting circuit 404, the purpose of which is to bias the gate terminal G1 of the first N-MOSFET 201 and/or of the second N-MOSFET 202 so as to determine, upon the receipt of a predetermined control signal, the opening or the closing of the channel of the second N-MOSFET 202 so as to determine the simulation of an ideal open or closed switch, and so as to determine, upon receipt of the aforesaid predetermined control signal, the opening or the closing of the channel of the first N-MOSFET 201 so as to determine the behaviour thereof as an ideal diode.

In principle, the first N-MOSFET 201 and the second N-MOSFET 202 could be exchanged with each other, so that the second N-MOSFET 202 has the source terminal S2 directly connected to the battery, and so that the first N-MOSFET 201 is placed downstream (in the direction of the electrical power transmitted to the at least one power user 101, 102 and/or a service power user 510) with respect to the second N-MOSFET 202. However, the configuration illustrated in figures 30 and 31, in which the first N-MOSFET 201 is placed upstream of the second N-MOSFET 202 is the one which ensures greater operating efficiency.

It is also clear that although two embodiments in which a first N-MOSFET 201 and a second N-MOSFET 202 are present have been described in the present detailed description, in principle such N-MOSFETs can be replaced by any type of JFET, coupled with diodes, capable of obtaining the same technical functionality.

In a preferred, but non-limiting embodiment, the first N-MOSFET 201 and the second N-MOSFET 202, and the first and the second diode 301, 302, are integrated together in a single device or electronic board.

Figures 30 and 31 respectively illustrate a first and a second non-limiting embodiment in which the supply switch circuit 20s' is positioned upstream with respect to the control unit 10, resulting in particular interposed between the cells 43 of the battery and the control unit 10. In an alternative embodiment, such a supply switch circuit 20s' is positioned downstream with respect to the control unit 10.

It is noted that although in the appended figures the first and the second diode 301, 302 and the MOSFETs are depicted as separate components, in reality they are integrated in a single chip.

The advantages of using the supply switch circuit 20s' in the form disclosed herein are evident in the light of the foregoing description. It prevents the recirculation of current from a more charged battery to a less charged battery. The use of the second N-MOSFET 201 advantageously allows to disconnect the discharge of the single battery, allowing an extreme flexibility in the implementation of diagnostic logics and use of the batteries for the power supply of the at least one power user 101, 102 and/or for the power supply of at least one service power user 510. Furthermore, the supply switch circuit 20s' improves the energy efficiency with respect to the use of a traditional diode in series with a switch. Better energy efficiency means lower losses due to the Joule effect, therefore less heating of the electronics, and less voltage drop. Given a predefined capacity of one or more cells 43, and more generally of one or more batteries, the increase in energy efficiency given by the supply switch circuit 20s' advantageously allows a greater amount of electrical energy to be made available to the at least one power user 101, 102 and/or of the at least one service power user 510. Moreover, at the same power absorbed by the at least one power user 101, 102, and/or the service power user 510, the average autonomy time made possible by the power supplied by the plurality of batteries B1-B4 is increased.

The control unit 10 is also responsible for controlling the gate piloting circuit 404, and is therefore operatively connected with the latter.

In light of the above description, therefore, it is clear that all the functions previously described, and in particular and without limitation at least one of the functions of selecting the battery to be charged, to then power the at least one power user 101, 102 and/or at least on service power user 510 by means of a plurality of batteries, the function of limiting the power delivered, the function of managing the charging by means of an algorithm which prioritises the priority power user 102 with respect to the secondary power user 201, and the function which allows what is known as the "hot swap" of the batteries can be implemented in association with the presence of said supply switch circuit 20s'.

### Housing of the electronic control board of the batteries.

The devices composing the control unit 10 are at least partly interconnected to each other by means of a PCB serving as a support for such devices. The devices and the PCB form an electronic control board for the batteries of the power supply device 500.

The electronic board is housed inside a casing which is fixed inside the special compartment V3 of the power supply device 500 and which has at least one passage opening for the wiring which allows such an electronic board to be powered and electrically connected to the batteries.

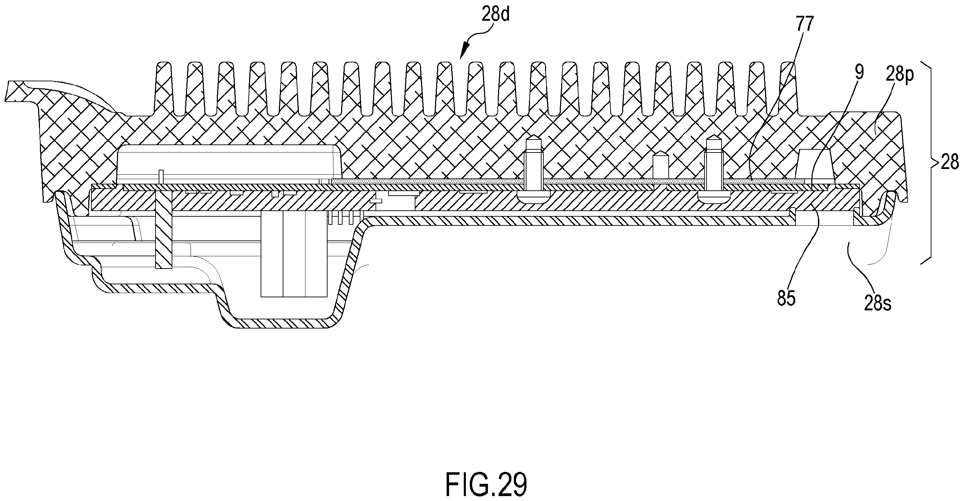

The housing of the electronic board according to the present invention (as depicted in the section of figure 29) allows an optimal dissipation of the heat generated by the devices of the control unit 10 (for example, and not limitedly, by the MOSFETs or by the diodes), thus preventing overheating phenomena of the electronic board.

The casing of the electronic board is at least partially made of electrically conductive material. In the example referred to in figure 29, the casing 28 housing the electronic board 9 comprises a first half-shell 28P in thermally conductive material (preferably in aluminium) and a second half-shell 28S in thermally insulating material (preferably in moulded plastic), the first half-shell 28P and the second half-shell 28S being connected to each other by means of screws which ensure the separability between the half-shells, in particular so as to perform technical assistance operations.

In an embodiment, a finned thermal heatsink 28D is integrated (or more in general operatively coupled) to the first half-shell 28P. The finned thermal heatsink 28D illustrated in figure 29 is integral with the first half-shell 28P, but could alternatively be screwed onto the first half-shell. The first half-shell 28P, and in particular the finned thermal heatsink 28D, is configured and specifically intended to disperse the heat developed by the electronic board 9.

Advantageously, the heat generated by the electronic board 9 is transferred by conduction to the first half-shell 28P. To this end, the electronic board 9 is screwed directly to the first half-shell 28P, so as to minimise the distance between the electronic board 9 and the first half-shell 28P. Furthermore, in the gap which in any case exists between the electronic board 9 and the first half-shell 28P (also for electrical safety reasons) a layer 77 in conductive material is arranged. For example, such a layer 77 can be obtained by a thermally conductive silicone sheet (having a conductivity greater than 2 W/mK). Alternatively to the sheet material, it can be envisaged that the thermally conductive material is affixed to the electronic board 9 in the form of film, paint, glue or foam.

The heat is thus dissipated by the first half-shell 28P by convection. To this end, the first half-shell 28P has a geometry aimed at increasing the surface extension thereof. In the example of figure 29, a plurality of cooling fins 8 protrude from the outer surface of the first half-shell 28P, the fins 8 being advantageously obtained in a single piece with the first half-shell 28P.

Preferably, but not limitedly, in the gap between the electronic board 9 and the second half-shell 28S, a material is housed which is intended to isolate the electronic board 9 from moisture or sprays of water. In an embodiment, said material comprises a silicone layer 85. The presence of a layer intended to isolate from moisture or sprays is particularly advantageous in view of the particular environment, also external, in which the power supply device 500 can be found to operate.

In the light of the above, it can be seen that the heat generated by the devices forming the control unit 10 is efficiently dissipated, through a path which conducts such heat by transmission from the electronic board 8, through the layer 77 in conductive material, to the outer surface of the first half-shell 28P, in particular to the fins 8, where it is finally removed by convection.

It should be noted that the configuration of the casing 28 described herein has in itself inventive contents, independent (albeit synergistic) with respect to the inventive contents related to the configuration of the control unit 10.

### identification of the batteries

In an embodiment, the control unit 10 is configured to identify the batteries B1-B4 when installed on-board the power supply device 500. In particular, the control unit 10 is configured to uniquely identify each of the batteries B1-B4, so that it is electronically possible to distinguish the batteries from each other.

If the control unit 10 electronically identifies that one or more of the batteries of the plurality of batteries B1-B4 installed on board the power supply device 500 is discharged or malfunctioning, for example because it does not hold the supplied charge or has an abnormal overheating, the control unit 10 is configured to specifically store which battery among the plurality of said batteries B1-B4 is the one which is discharged or malfunctioning. By virtue of this technical feature, it is possible to electronically identify which battery needs to be removed or replaced or charged, and therefore which are the remaining batteries which can effectively contribute to supplying the power to the at least one power user 101, 102 or to the electric machine of the auxiliary power user 510.

In a preferred, but not limiting, embodiment, in particular when the power supply device is provided with a wireless communication interface, the control unit can be configured to transmit, as a control datum of the operation of the power supply device 500 and to the remote electronic device, a data identifier which, among the batteries installed on board the power supply device 500, is the one actually discharged and/or malfunctioning. A non-limiting example of such a datum can be: "battery B1 discharged". It should be noted that such an identification datum can in particular comprise not only the identification of the battery but also an associated residual charge value, for example qualitative (e.g., on a multi-notch graphic scale) or quantitative (e.g., 34%, or 1500 mAh) and/or a residual voltage value (e.g., 5V). The transmission can occur upon the request of the remote electronic device or automatically based on one or more pre-set parameters on the control unit 10, in particular according to previously described threshold voltage values.

### Brief summary of the advantages.

The advantages of the power supply device 500 of the method and of the control unit disclosed above are clear; they allow to obtain a charge and a discharge of batteries for powering users in a particularly efficient manner, and in a safe manner. They allow a separate charging of a plurality of batteries and a substantially common discharging thereof without the need for circuit reconfigurations by an operator. The batteries which fail during the operating life are automatically excluded from the circuit, and this optimises the safety of operation of the power supply device 500 on which the batteries are installed.

The method and the control unit 10 described herein allow to efficiently and safely manage the use of batteries of different type, and contribute to reducing the risk of power overload if batteries of different type and/or with different electrical power delivery capacities are used.

A power supply device 500 controlled by the method or control unit 10 advantageously described herein has greater safety of use in the event that the residual charge and/or the electrical power deliverable by the batteries is limited.

In the latter case, a particular embodiment of the method and of the control unit 10 allow a rapid and immediate restoration or lifting of the residual charge and/or of the electrical power available to the at least one power user 101, 102, by virtue of the presence of the technical "hot swap" feature.

The power supply device 500 also allows to extend the useful life of the batteries, as well as to increase the thermal efficiency thereof.

The power supply device 500 has modular features, and is silent and does not emit harmful gases in use.

The power supply device 500 can be used in humid environments.

Furthermore, the power supply device 500 disclosed herein can be a flexible tool for powering one or more accessories 512, 513, 514 in a safe, efficient, and sufficiently powerful manner. Advantageously, such accessories do not require electrical power. Such accessories can be stored in different locations with respect to the power supply device 500. Such accessories can be purchased at different times with respect to when a user purchases the power supply device 500. The accessories 512, 513, 514, as they are substantially free of electrical parts, can be easily washed.

The invention is not limited to the embodiments depicted in the appended drawings; for this reason, when present, reference numerals or signs indicated in the claims are intended to be provided for the sole purpose of increasing the intelligibility thereof; such reference numerals or signs are not to be understood in a limiting manner.

It is finally evident that additions, modifications or variations can be applied to that which forms the object of the present invention, which are obvious to a person skilled in the art, without departing from the scope of protection provided by the appended claims.

## Claims

1. Device (500) for powering and/or storing energy, said device (500) being configured to be transportable and to electrically power at least one power user (101, 102), said device (500) comprising:
- a casing (501) configured to contain a plurality of batteries (B1 - B4) in at least one predefined position,
- a charging arrangement intended to allow a charging of said plurality of batteries (B1 - B4), said charging arrangement comprising in particular at least one charging socket (502) configured to be connected to a power supply mains or comprising in particular at least one energy generator,
- a control unit (10) configured to control the charging of said plurality of batteries (B1 - B4) and specifically to control the power supply of electrical energy to said at least one power user (101, 102).

2. Device (500) according to claim 1, further comprising a plurality of batteries (B1 - B4), said batteries (B1 - B4) being installed in a modular manner in said device (500) or being arranged to be installed in a modular manner in said device (500), said batteries (B1 - B4) being configured to be extracted from said device (500) and being further configured to be connected to said at least one power user (101, 102), so as to electrically power said at least one power user (101, 102).

3. Device (500) according to claim 1 or claim 2, wherein the control unit (10) comprises a charging operating configuration and/or a power supply operating configuration,
wherein, in said charging operating configuration, said control unit (10):
- selects a first part (B1) of said plurality of batteries (B1-B4),
- causes a selective charging, by a power supply (30) of said first part (B1) of said plurality of batteries (B1-B4),
- selects a further part (B2, B3, B4) of said plurality of batteries (B1-B4) and
- causes a selective charging, by a power supply (30), of said further part (B2, B3, B4) of said plurality of batteries (B1-B4), the charging of said further part (B2, B3, B4) of said plurality of batteries (B1-B4) being in particular only enabled to complete the charging of said first part (B1) of said plurality of batteries (B1-B4)
in particular wherein, in said power supply operating configuration, the control unit (10) causes a power supply of the at least one power user (101, 102), determining, in use, a transfer of electrical energy to said at least one power user (101, 102) simultaneously occurring from said first part (B1) of said plurality of batteries (B1-B4) and from said further part (B2, B3, B4) of said plurality of batteries (B1-B4),
optionally wherein the control unit (10) causes a power supply of the at least one power user (101, 102), determining, in use, a transfer of electrical energy to said at least one power user (101, 102) simultaneously occurring from each battery of said plurality of batteries (B1-B4).

4. Device (500) according to one or more of the preceding claims, comprising at least one power output (503), operatively connected, in use, to the plurality of batteries (B1-B4) through said control unit (10), wherein the control unit (10) is configured to control the supply of electrical energy to said at least one power user (101, 102) through said power output (503).

5. Device (500) according to one or more of the preceding claims, comprising at least one service power user (510), substantially housed in said casing (501) or integrated or connected to said casing (501), wherein the control unit (10) is configured to control the supply of electrical energy to said at least one service power user (510).

6. Device (500) according to one or more of the preceding claims, comprising an inverter, operatively connected to said plurality of batteries (B1 - B4), optionally by means of said control unit (10), and connected to said at least one power output (503), said inverter being configured to generate, in use, on said at least one power output (503) an alternating electrical voltage starting from the direct electrical voltage generated by the plurality of batteries (B1-B4).

7. Device (500) according to one or more of the preceding claims, wherein the control unit (10) is configured and specifically intended to cause a selection and/or a limitation, in particular an electronic selection and/or limitation, of a maximum electrical power deliverable by each battery of the plurality of batteries (B1-B4).

8. Device (500) according to one or more of the preceding claims, wherein the plurality of batteries (B1 - B4) is removable and/or insertable from said casing (501), optionally the plurality of batteries (B1-B4) being configured to be extracted and/or inserted "hot", and/or wherein the control unit (10) is configured and specifically intended to allow the extraction and/or insertion of at least one battery of said plurality of batteries (B1-B4) "hot" and/or during at least the power supply and/or a charging, without causing a power interruption of said at least one power user (101, 102) and/or without causing an interruption of a charging of the remaining batteries of the plurality of batteries (B1-B4).

9. Device (500) according to one or more of the preceding claims, wherein the at least one power user (101, 102) comprises a primary power user (101) and a secondary power user (102) and/or wherein the service power user (510) identifies a primary power user and a secondary power user and wherein the control unit (10) is configured for:
- executing an electronic control of at least one value among an electrical power, charge, voltage or current, made available by at least one battery of said plurality of batteries (B1 - B4) and/or an electronic control of a number n of batteries (B1 - B4) installed on said device (500),
- electronically enabling, and optionally automatically, in accordance with said at least one value among an electrical power, charge, voltage or current and/or in accordance with said number n of batteries (B1 - B4):
- the electrical power supply of only the primary power user (102); or
- the electrical power supply of the primary power user (102) and the secondary power user (101).

10. Device (500) according to one or more of the preceding claims, comprising a wireless interface module (521), preferably a radio module, configured to operatively interface with a remote electronic device and to receive and/or transmit, respectively from and/or to said remote electronic device, diagnostic and/or statistical and/or usage and/or control and/or alarm data associated with the operation of the device (500), in particular of the control unit (10), and/or of one or more of the batteries of the plurality of batteries (B1 - B4),
said wireless interface module (521) being optionally configured to receive and/or transmit said data in selective mode, respectively to and from a selected number of remote electronic devices and/or to one or more predefined remote electronic devices.

11. Device (500) according to one or more of the preceding claims, comprising at least one environmental sensor among a temperature sensor, a humidity sensor, a solar light or radiation sensor, a barometric pressure sensor, a rain sensor, said at least one environmental sensor being configured and specifically intended to allow one or more environmental parameters to be detected near said device (500),
optionally wherein said at least one environmental sensor is operatively connected with the wireless interface module (521), the use and/or control and/or alarm data comprising:
- temperature and/or humidity and/or brightness and/or barometric pressure data obtained from said at least one environmental sensor and/or
- at least one datum of power, energy, residual charge, voltage, current absorbed by one or more of the batteries of the plurality of batteries (B1 - B4) in said charging operating configuration or in said power supply operating configuration of said device (500) and/or
- at least one datum of power, energy, residual charge, voltage, current absorbed by one or more of the power users (101, 102) in said charging operating configuration or in said power supply operating configuration of said device (500) and/or
- at least one temperature datum of one or more of the batteries of the plurality of batteries (B1 - B4) and/or
- at least one exclusion datum and/or datum related to the lack of one or more of the batteries of the plurality of batteries (B1 - B4).

12. Device (500) according to one or more of the preceding claims, wherein at least one battery of said plurality of batteries (B1 - B4) comprises at least one supply switch (44), preferably of solid-state type, optionally wherein each battery of the plurality of batteries (B1 - B4) comprises a respective supply switch (44), preferably of solid-state type, and a control input (15) operatively connected to said supply switch (44) and externally connected to a control line (14) of the control unit (10), said supply switch (44) comprising an open configuration wherein it prevents the charging of one or more cells (43) of the respective battery and a closed configuration wherein it enables the charging of one or more cells (43) of the respective battery,
in particular wherein each battery of said plurality of batteries (B1-B4) comprises a containment casing adapted to be transported and/or stored and/or handled by a user, at least one cell (43) positioned within said containment casing, the supply switch (44) being positioned within said containment casing, wherein each battery of said plurality of batteries (B1-B4) comprises a connector, accessible at an exposed portion of said containment casing and configured to be removably connected with a counter-connector arranged within the casing (501) of the device (500).

13. Device (500) according to one or more of the preceding claims, the device (500) being configured to, simultaneously, charge a first battery (B1) or a first group of said plurality of batteries (B1 - B4) and power said at least one power user (101, 102) by means of a second battery (B2) or by means of a second group of said plurality of batteries (B1 - B4), said first battery (B1) being in particular distinct from said second battery, said first group of said plurality of batteries (B1 - B4) being distinct from said second group of said plurality of batteries (B1 - B4), wherein the charging of said first battery (B1) or said first group of said plurality of batteries (B1 - B4) is actuated by means of a power supply (30) installed within said casing (501),
optionally wherein said power supply (30) is configured to receive, in use, electrical power supply from an electrical energy distribution grid and/or
optionally wherein said device (500) further comprises at least one energy generator, said energy generator comprising in particular at least one photovoltaic cell panel (520), and wherein said power supply (30) is configured to receive in use electrical power from said energy generator, in particular from said photovoltaic cell panel (520).

14. Control method of the power supply of at least one power user, the method comprising:
- a step of supplying at least one power user (101, 102) with a device (500) for supplying and/or storing energy, preferably a device (500) according to one or more of the preceding claims, provided with a plurality of batteries (B1 - B4) modularly installed in said device and configured to be operatively transported,
- a step of controlling the supply of electrical energy from said device (500), in particular from said plurality of batteries (B1 - B4), to said at least one power user (101, 102) and
- a control step of the charging of the plurality of batteries (B1 - B4),
optionally wherein said device (500) comprises a control unit (10) and wherein said control step of the delivery of electrical energy and said control step of the charging of the plurality of batteries (B1 - B4) both occur by means of said control unit (10).

15. Method according to claim 14, wherein said second method comprises:
- a selection step, a first part (B1) of said plurality of batteries (B1-B4) being selected in said selection step;
- a charging step, said first part (B1) of said plurality of batteries (B1-B4) being selectively charged in said charging step;
- at least one further selection step, a further part (B2, B3, B4) of said plurality of batteries (B1-B4) being selected in said further selection step;
- at least one further charging step, said further part (B2, B3, B4) of said plurality of batteries (B1-B4) being selectively charged in said further charging step, said further charging step being in particular executed only upon the completion of said charging step;
wherein in the power supply step, said at least one power user (101, 102) is powered by a transfer of electrical energy to said at least one power user (101, 102) simultaneously occurring from said first part (B1) of said plurality of batteries (B1-B4) and from said further part (B2, B3, B4) of said plurality of batteries (B1-B4) and/or
wherein the step of controlling the electrical energy supplied to said at least one power user (101, 102) by means of the control unit (10) of said device (500) occurs by controlling the electrical energy supply delivered by said device (500) on at least one of its power outputs (503), and/or
wherein said method comprises a step of controlling the electrical energy supplied to at least one service power user (510) of said device (500) by means of the control unit (10) and/or
wherein said method comprises activating an inverter of said device (500) and operatively connected to said plurality of batteries (B1 - B4), optionally by means of said control unit (10) and connected to said at least one power output (503); activating said inverter determining, in use, a generation of an alternating electric voltage starting from the direct electric voltage generated by the plurality of batteries (B1 - B4) and/or
wherein said method comprises a step of selecting and/or limiting a maximum electrical power deliverable by each battery of the plurality of batteries (B1-B4), said selecting and/or limiting being an electronic selection and/or limitation, and/or
wherein the plurality of batteries (B1-B4) is configured to be removed or inserted "hot" and/or
wherein the method comprises enabling a removal or insertion of at least one battery of said plurality of batteries (B1-B4) "hot" and/or during at least the supply and/or charging, without causing a power supply interruption of said at least one power user (101, 102) and/or without causing a charging interruption of the remaining batteries of the plurality of batteries (B1-B4), and/or
wherein the at least one power user (101, 102) comprises a primary power user (101) and a secondary power user (102), and/or wherein the service power user (510) identifies a primary power user or a secondary power user, and wherein the method comprises a step of enabling a power supply of the at least one primary power user (102), or an actuation of the primary power user (102) and the secondary power user (101), wherein:
- in the enabling step, an electronic control of at least one value among an electrical power, charge, voltage or current made available by the at least one battery connected to said power supply circuit is executed and/or an electronic control of a number n of batteries (B1-B4) installed on board said device (500) is executed and,
- in accordance with said at least one value among an electrical power, charge, voltage or current and/or in accordance with said number n of batteries (B1-B4), is electronically enabled, and optionally automatically:
- the electrical power supply, by means of said power supply circuit, of only the primary power user (102) or
- the electrical power supply, by means of said power supply circuit, of the primary power user (102) and the secondary power user (101).
